(19) Europäisches Patentamt / European Patent Office / Office européen des brevets

(11) **EP 4 668 618 A1**

(12) **EUROPEAN PATENT APPLICATION**
published in accordance with Art. 153(4) EPC

(43) Date of publication:
**24.12.2025 Bulletin 2025/52**

(21) Application number: **24769734.5**

(22) Date of filing: **23.02.2024**

(51) International Patent Classification (IPC):
*H04B 10/516* (2013.01)     *H04B 10/60* (2013.01)

(52) Cooperative Patent Classification (CPC):
**H04B 10/25; H04B 10/516; H04B 10/60**

(86) International application number:
**PCT/CN2024/078431**

(87) International publication number:
**WO 2024/188039 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.03.2023  CN 202310281335**
**29.01.2024  CN 202410126510**

(71) Applicant: **Huawei Technologies Co., Ltd.**
**Shenzhen, Guangdong 518129 (CN)**

(72) Inventors:
• **HUANG, Kechao**
  **Shenzhen, Guangdong 518129 (CN)**
• **LUO, Ji**
  **Shenzhen, Guangdong 518129 (CN)**
• **YANG, Xiaoling**
  **Shenzhen, Guangdong 518129 (CN)**
• **MA, Huixiao**
  **Shenzhen, Guangdong 518129 (CN)**

(74) Representative: **Huawei European IPR**
**Huawei Technologies Duesseldorf GmbH**
**Riesstraße 25**
**80992 München (DE)**

(54) **DATA PROCESSING METHOD AND APPARATUS FOR OPTICAL COMMUNICATION**

(57)     This application relates to the field of optical communication technologies, and discloses a data processing method and apparatus in optical communication, to provide a data processing solution applicable to scenarios in which a transmission rate is higher than 800 Gbps. In embodiments of this application, data streams are distributed, so that bits obtained through FEC encoding processing are relatively evenly distributed in different data streams, for example, on optical signals with different wavelengths and in different polarization directions, or on different optical fibers and in different polarization directions. The way of distribution makes parallel transmission of data streams possible, thereby improving a transmission rate. Additionally, this application does not require devices with a higher baud rate, and is applicable to metro telecommunication transmission and data center transmission scenarios that require low power consumption. Additionally, because the bits obtained through FEC encoding processing are relatively evenly distributed in the different data streams, decoding errors of a receiver are relatively evenly distributed on a plurality of paths of FEC decoding processing, so that codec performance can be improved.

[FIG. 2]

**Description**

CROSS-REFERENCE TO RELATED APPLICATIONS

This application claims priorities to Chinese Patent Application No. 202310281335.4, filed with the China National Intellectual Property Administration on March 16, 2023 and entitled "DATA PROCESSING METHOD AND APPARATUS IN OPTICAL COMMUNICATION", and to Chinese Patent Application No. 202410126510.7, filed with the China National Intellectual Property Administration on January 29, 2024 and entitled "DATA PROCESSING METHOD AND APPARATUS IN OPTICAL COMMUNICATION", both of which are incorporated herein by reference in their entireties.

TECHNICAL FIELD

Embodiments of this application relate to the field of optical communication technologies, and in particular, to a data processing method and apparatus in optical communication.

BACKGROUND

Continuously driven by advancement of 5G, cloud computing, big data, artificial intelligence, and the like, highspeed optical transport networks are developing toward a larger capacity, packet-based, and intelligent trend. Coherent optical communication systems use amplitudes, phases, polarization, and frequencies of optical waves to carry information. To combat optical signal distortion caused by dispersion, polarization-dependent impairment, noise, non-linear effects, and other factors during transmission and maintain long-distance transmission, the coherent optical communication system typically use efficient forward error correction (forward error correction, FEC) codes to combat optical impairment during optical transmission, to ensure a sufficiently low bit error rate of the coherent optical communication systems over long distances.

Currently, communication architectures of some optical transport networks support transmission rates of 400 Gbps and 800 Gbps. At the transmission rate of 400 Gbps with the use of dual-polarization 16QAM (dual-polarization 16 quadrature amplitude modulation, DP-16QAM) modulation, a required baud rate is usually approximately 60 Gbaud (baud). At the transmission rate of 800 Gbps with the use of DP-16QAM modulation, a required baud rate rises to about 120 Gbaud (baud). With the growth of services, metro telecommunication transmission and data center transmission scenarios have increasingly high requirements on transmission rates. For example, at transmission rates such as 1.2 Tbps and 1.6 Tbps, corresponding baud rates are approximately 180 Gbaud and 240 Gbaud with the use of DP-16QAM modulation and single-wavelength transmission. Under the same transmission rates, a higher baud rate is required with the use of lower-order modulation like DP-quadrature phase shift keying (Quadrature Phase Shift Keying, QPSK). However, although a lower baud rate is required with the use of higher-order modulation like DP-32QAM or DP-64QAM, a transmission distance is limited. A higher transmission rate required in the optical transport networks typically corresponds to a higher baud rate, which in return leads to higher device power consumption. Currently, there are no low-power-consumption devices available that support a high baud rate exceeding 140 Gbaud. For the metro telecommunication transmission and data center transmission scenarios, low power consumption is generally required for implementation. As a result, current solutions cannot be applicable to the metro telecommunication transmission and data center transmission scenarios in which the transmission rates exceed 800 Gbps (for example, 1.2 Tbps and 1.6 Tbps).

SUMMARY

Embodiments of this application provide a data processing method and apparatus in optical communication, to provide a data processing solution applicable to a scenario in which a transmission rate is higher than 800 Gbps.

According to a first aspect, an embodiment of this application provides a data processing method in optical communication. The method includes: performing forward error correction FEC encoding processing on at least one to-be-sent bit data stream, to obtain M first encoded data streams, where M is an integer greater than 1; and performing first data processing on the M first encoded data streams, to obtain W first dual-polarization symbol data streams, where W is an integer greater than 1; each of the W first dual-polarization symbol data streams is located in two orthogonal polarization directions; the first data processing includes symbol mapping processing; in one polarization direction (specifically, either of the two polarization directions), P consecutive symbols in the first dual-polarization symbol data stream are obtained by performing symbol mapping processing on $q \times P$ bits, and the $q \times P$ bits are from at least two of the M first encoded data streams, where P is an integer greater than 1, and q is a positive integer; and in the polarization direction (specifically, either of polarization direction of the two polarization directions), each symbol is obtained by performing symbol mapping processing on q bits.

For example, M bit data streams may be obtained, and then FEC encoding processing is performed on each of the M bit data streams, to obtain the M first encoded data streams.

For another example, one bit data stream may be obtained, and then FEC encoding processing is performed on the bit data stream, to obtain the M first encoded data streams.

In this embodiment of this application, a data stream is distributed, so that bits obtained through the FEC encoding processing are relatively evenly distributed in different data streams, for example, on optical signals with different wavelengths and in different polarization directions, or on different optical fibers and in different polarization directions. In a distribution manner, parallel transmission of the data streams is performed, and a transmission rate can be improved. In addition, this application does not need a device with a higher baud rate, and is applicable to a metro telecommunication transmission scenario and a data center transmission scenario that require low power consumption. In addition, because the bits obtained through the FEC encoding processing are relatively evenly distributed in the different data streams, decoding errors of a receiver are relatively evenly distributed on a plurality of paths of FEC decoding processing, so that codec performance can be improved.

In a possible implementation, the method further includes: performing digital signal processing DSP framing on each of the W first dual-polarization symbol data streams, to obtain W second dual-polarization symbol data streams; and carrying the W second dual-polarization symbol data streams on W paths of optical signals respectively, and sending the W second dual-polarization symbol data streams, where wavelengths of the W paths of optical signals are all different; or sending the W second dual-polarization symbol data streams through W optical fibers respectively.

In the foregoing solution, in the distribution manner, the bits are evenly distributed on optical signals with different wavelengths and in different polarization directions, or on different optical fibers and in different polarization directions, so that parallel transmission of the data streams is performed, and the transmission rate can be improved. In addition, this application does not need the device with the higher baud rate, and is applicable to the metro telecommunication transmission scenario and the data center transmission scenario that require the low power consumption.

In a possible implementation, the method further includes: performing digital signal processing DSP framing on each of the W first dual-polarization symbol data streams, to obtain W second dual-polarization symbol data streams; and carrying the W second dual-polarization symbol data streams on W subcarriers respectively, performing digital subcarrier multiplexing to obtain one signal stream, and sending the signal stream.

In the foregoing solution, a baud rate corresponding to each subcarrier is 1/W of a baud rate of sent signals. It should be noted that, compared with the foregoing manner in which the W paths of optical signals or the W optical fibers are used, the digital subcarrier implementation needs the device with the higher baud rate, and power consumption of the device may be higher. However, the digital subcarrier implementation can reduce complexity of dispersion compensation, and reduce an equalization enhanced phase noise (Equalization Enhanced Phase Noise, EEPN) penalty. That is, DSP power consumption thereof may be lower.

It should be noted that, in the foregoing manners of this application, regardless of whether a baud rate is reduced or the complexity of the dispersion compensation is reduced and the EEPN penalty is reduced, a data transmission rate can be improved, and long-distance data transmission can be adapted to.

In a possible implementation, P=M, the $q \times P$ bits are from the M first encoded data streams, and every q bits in the $q \times P$ bits are from one of the M first encoded data streams.

In the foregoing manner, the bits obtained through the FEC encoding processing are more evenly distributed in the W first dual-polarization symbol data streams.

In a possible implementation, P=M; and in either polarization direction, q bits that are mapped to one symbol through the symbol mapping processing are from a same first encoded data stream.

In a possible implementation, P=M/2, the $q \times P$ bits are from the M first encoded data streams, and every q/2 bits in the $q \times P$ bits are from one of the M first encoded data streams.

In a possible implementation, P=M/2; and in either polarization direction, q bits that are mapped to one symbol through the symbol mapping processing are from two first encoded data streams.

In a possible implementation, M consecutive dual-polarization symbols in the first dual-polarization symbol data stream totally include $2 \times M$ symbols in the two polarization directions, the $2 \times M$ symbols are obtained by performing symbol mapping on $2 \times q \times M$ bits, and the $2 \times q \times M$ bits are from the M first encoded data streams; and two symbols totally included in each dual-polarization symbol in the two polarization directions are obtained by performing symbol mapping on $2 \times q$ bits that belong to a same first encoded data stream.

In a possible implementation, performing first data processing on the M first encoded data streams, to obtain the W first dual-polarization symbol data streams includes: merging the M first encoded data streams into a second encoded data stream; performing distribution processing on the second encoded data stream, to obtain W third encoded data streams; performing symbol mapping processing on each of the W third encoded data streams, to obtain W first symbol data streams; and performing polarization distribution (polarization distribution) on each of the W first symbol data streams, to obtain the W first dual-polarization symbol data streams.

The foregoing solution provides a distribution solution. Distribution is performed before the symbol mapping. A processing rate can be improved by performing symbol mapping and polarization distribution in parallel.

In a possible implementation, every M consecutive bit sets in the second encoded data stream are from the M first encoded data streams, and each of the M bit sets includes $S_0$ consecutive bits from a same first encoded data stream, where $S_0$ is a positive integer; and every $L_1$ consecutive bits in the second encoded data stream are distributed into one third encoded data stream, where $L_1$ is a positive integer, and $L_1$ is an integer multiple of $S_0 \times M/W$.

In a possible implementation, $L_1 = S_0 \times M$, and every $L_1$ consecutive bits in the third encoded data stream include the M bit sets from the M first encoded data streams.

In a possible implementation, $S_0$ may be an integer multiple of q. For example, $S_0 = 2 \times q$.

In a possible implementation, performing first data processing on the M first encoded data streams, to obtain the W first dual-polarization symbol data streams includes: merging the M first encoded data streams into a second encoded data stream; performing symbol mapping processing on the second encoded data stream, to obtain a second symbol data stream; distributing the second symbol data stream, to obtain W third symbol data streams; and performing polarization distribution on each of the W third symbol data streams, to obtain the W first dual-polarization symbol data streams.

The foregoing solution provides a distribution solution. Distribution is performed after the symbol mapping.

In a possible implementation, every M consecutive bit sets in the second encoded data stream are from the M first encoded data streams, and each of the M bit sets includes $S_0$ consecutive bits from a same first encoded data stream, where $S_0$ is a positive integer; and every $2 \times L_2$ consecutive symbols in the third symbol data stream are obtained by performing symbol mapping processing on $L_2 \times 2 \times q$ bits, and the $L_2 \times 2 \times q$ bits are from the M first encoded data streams, where $L_2$ is a positive integer, and $L_2$ is an integer multiple of $S_0 \times M/(W \times q)$.

In a possible implementation, $L_2 = S_0 \times M/q$, and the $L_2 \times 2 \times q$ bits include the M bit sets from the M first encoded data streams.

In a possible implementation, $S_0$ may be an integer multiple of q. For example, $S_0 = 2 \times q$.

In a possible implementation, performing first data processing on the M first encoded data streams, to obtain the W first dual-polarization symbol data streams includes: merging the M first encoded data streams into a second encoded data stream; performing symbol mapping processing on the second encoded data stream, to obtain a second symbol data stream; performing polarization distribution on the second symbol data stream separately, to obtain a third dual-polarization symbol data stream; and performing distribution processing on the third dual-polarization symbol data stream, to obtain the W first dual-polarization symbol data streams.

The foregoing solution provides a distribution solution. Distribution processing is performed after polarization processing.

In a possible implementation, every M consecutive bit sets in the second encoded data stream are from the M first encoded data streams, and each of the M bit sets includes $S_0$ consecutive bits from a same first encoded data stream, where $S_0$ is a positive integer, and P is an integer multiple of $S_0 \times M/(W \times 2 \times q)$.

In a possible implementation, $S_0$ may be an integer multiple of q. For example, $S_0 = 2 \times q$.

In a possible implementation, performing first data processing on the M first encoded data streams, to obtain the W first dual-polarization symbol data streams includes: distributing the M first encoded data streams into W fourth encoded data streams; performing symbol mapping processing on each of the W fourth encoded data streams, to obtain W fourth symbol data streams; and performing polarization distribution on each of the W fourth symbol data streams, to obtain the W first dual-polarization symbol data streams.

The foregoing solution provides a distribution solution. After the encoding, the M first encoded data streams are directly distributed, so that an operation step can be reduced, and processing efficiency can be improved.

In a possible implementation, every $S_1 \times M/W$ consecutive bits in the fourth encoded data stream are from the M first encoded data streams, and a quantity of bits that belong to each of the M first encoded data streams in every $S_1 \times M/W$ consecutive bits in the fourth encoded data stream is the same, where $S_1$ is a positive integer, and $S_1 \times M$ is an integer multiple of W.

In a possible implementation, $S_1 = 2 \times q \times W$, every $2 \times q \times M$ consecutive bits in the fourth encoded data stream include M bit sets, the M bit sets are from different first encoded data streams, and each of the M bit sets includes $2 \times q$ consecutive bits that belong to a same first encoded data stream.

In a possible implementation, performing first data processing on the M first encoded data streams, to obtain the W first dual-polarization symbol data streams includes: performing symbol mapping processing on the M first encoded data streams, to obtain a fifth symbol data stream; performing distribution processing on the fifth symbol data stream, to obtain W sixth symbol data streams; and performing polarization distribution on the W sixth symbol data streams, to obtain the W first dual-polarization symbol data streams.

In the foregoing solution, functions of the symbol mapping and merging are merged, so that an operation step can be reduced, and processing efficiency can be improved.

In a possible implementation, every $2 \times P$ consecutive symbols in the fifth symbol data stream are obtained by performing symbol mapping processing on $2 \times P \times q$ bits, and the $2 \times P \times q$ bits are from at least two of the M first encoded data streams; and every $2 \times P \times Z/W$ consecutive symbols in the $2 \times P \times Z$ consecutive symbols in the fifth symbol data stream are distributed into one sixth symbol data stream, where $2 \times P \times Z$ is an integer multiple of W, and Z is a positive integer.

In a possible implementation, performing first data processing on the M first encoded data streams, to obtain the W first dual-polarization symbol data streams includes: performing symbol mapping processing on the M first encoded data streams, to obtain a fifth symbol data stream; performing polarization distribution on the fifth symbol data stream, to obtain a fourth dual-polarization symbol data stream; and performing distribution processing on the fourth dual-polarization symbol data stream, to obtain the W first dual-polarization symbol data streams.

In the foregoing solution, functions of the symbol mapping and merging are merged, so that an operation step can be reduced, and processing efficiency can be improved.

In a possible implementation, every P consecutive dual-polarization symbols in the fourth dual-polarization symbol data stream are obtained by performing symbol mapping processing on $2 \times P \times q$ bits, and the $2 \times P \times q$ bits are from at least two of the M first encoded data streams; and every $P \times Z/W$ consecutive symbols in the $P \times Z$ consecutive dual-polarization symbols in the fourth dual-polarization symbol data stream are distributed into one first dual-polarization symbol data stream, where $2 \times P \times Z$ is an integer multiple of W, and Z is a positive integer.

In a possible implementation, $M=b \times W$, and performing first data processing on the M first encoded data streams, to obtain the W first dual-polarization symbol data streams includes:
performing "bit group merging" (merging processing) on every b first encoded data streams in the $b \times W$ first encoded data streams, to obtain W sixth encoded data streams; then performing exchange processing on the W sixth encoded data streams, to obtain W seventh encoded data streams; further, performing symbol mapping processing on each of the W seventh encoded data streams, to obtain W sixth symbol data streams; and performing polarization distribution on each of the W sixth symbol data streams, to obtain the W first dual-polarization symbol data streams.

Each of the W sixth encoded data streams includes only bits of the b first encoded data streams. Then, exchange processing is performed on the W sixth encoded data streams, to obtain the W seventh encoded data streams. Through the exchange processing, each of the W sixth encoded data streams may include bits of the $b \times W$ first encoded data streams. It may be understood as that, through the exchange, the bits of the $b \times W$ first encoded data streams are evenly allocated to the W seventh encoded data streams.

In a possible implementation, $M=b \times W$, and performing first data processing on the M first encoded data streams, to obtain the W first dual-polarization symbol data streams includes:
performing "bit group merging" on every b first encoded data streams in the $b \times W$ first encoded data streams, to obtain W sixth encoded data streams; then performing symbol mapping processing on each of the W sixth encoded data streams, to obtain W seventh symbol data streams; then performing exchange processing on the W eighth symbol data streams, to obtain W eighth symbol data streams; and further, performing polarization distribution on each of the W eighth symbol data streams, to obtain the W first dual-polarization symbol data streams.

Each of the W seventh symbol data streams includes only bits of the b first encoded data streams. Then, exchange processing is performed on the W seventh symbol data streams, to obtain the W eighth symbol data streams. Through the exchange processing, each of the W eighth symbol data streams may include bits of the $b \times W$ first encoded data streams. It may be understood as that, through the exchange, the bits of the $b \times W$ first encoded data streams are evenly allocated to the W eighth symbol data streams.

In a possible implementation, $M=b \times W$, and performing first data processing on the M first encoded data streams, to obtain the W first dual-polarization symbol data streams includes:
performing "bit group merging" on every b first encoded data streams in the $b \times W$ first encoded data streams, to obtain one sixth encoded data stream, thereby obtaining W sixth encoded data streams; then performing symbol mapping processing on each of the W sixth encoded data streams, to obtain W seventh symbol data streams; further, performing polarization distribution on each of the W seventh symbol data streams, to obtain W fifth dual-polarization symbol data streams; and then performing exchange processing on the W fifth dual-polarization symbol data streams, to obtain the W first dual-polarization symbol data streams.

In a possible implementation, $M=b \times W$, and performing first data processing on the M first encoded data streams, to obtain the W first dual-polarization symbol data streams includes:
performing symbol mapping processing on every b first encoded data streams in the $b \times W$ first encoded data streams, to obtain W ninth symbol data streams, where it may be understood that the $b \times W$ first encoded data streams are distributed into W groups, and each group has the b first encoded data streams; then performing exchange processing on the W ninth symbol data streams, to obtain W tenth symbol data streams; and further, performing polarization distribution on the W tenth symbol data streams, to obtain the W first dual-polarization symbol data streams.

There are W units for performing symbol mapping processing. That is, it may be understood that W symbol mapping units are included. Each symbol mapping unit performs symbol mapping processing on one group of first encoded data streams. Each of the W ninth symbol data streams includes only bits of the b first encoded data streams. Through the exchange processing, each of the W tenth symbol data streams may include bits of the $b \times W$ first encoded data streams. It may be understood as that, through the exchange, the bits of the $b \times W$ first encoded data streams are evenly allocated to the W tenth symbol data streams.

In a possible implementation, M=b×W, and performing first data processing on the M first encoded data streams, to obtain the W first dual-polarization symbol data streams includes:
performing symbol mapping processing on every b first encoded data streams in the b×W first encoded data streams, to obtain W ninth symbol data streams, where it may be understood that the b×W first encoded data streams are distributed into W groups, and each group has the b first encoded data streams; there are W units for performing symbol mapping processing, that is, it may be understood that W symbol mapping units are included, and each symbol mapping unit performs symbol mapping processing on one group of first encoded data streams; then performing polarization distribution on each of the W ninth symbol data streams, to obtain W sixth dual-polarization symbol data streams; and performing exchange processing on the W sixth dual-polarization symbol data streams, to obtain the W first dual-polarization symbol data streams.

In a possible implementation, performing first data processing on the M first encoded data streams, to obtain the W first dual-polarization symbol data streams includes:

performing symbol mapping processing on each of the M first encoded data streams, to obtain M eleventh symbol data streams;
performing distribution processing on the M eleventh symbol data streams, to obtain W sixth symbol data streams; and performing polarization distribution on the W sixth symbol data streams, to obtain the W first dual-polarization symbol data streams.

In a possible implementation, every $S_1 \times$ M/W consecutive symbols in the sixth symbol data stream are from the M eleventh symbol data streams, and a quantity of symbols that belong to each of the M eleventh symbol data streams in every $S_1 \times$ M/W consecutive symbols in the sixth symbol data stream is the same, where $S_1$ is a positive integer, and $S_1 \times$ M is an integer multiple of W.

In a possible implementation, performing first data processing on the M first encoded data streams, to obtain the W first dual-polarization symbol data streams includes:

performing symbol mapping processing on each of the M first encoded data streams, to obtain M eleventh symbol data streams;
performing polarization distribution on each of the eleventh symbol data streams, to obtain M seventh dual-polarization symbol data streams; and
performing distribution processing on the M seventh dual-polarization symbol data streams, to obtain the W first dual-polarization symbol data streams.

In a possible implementation, every $S_1 \times$ M/W consecutive symbols in the first dual-polarization symbol data stream are from the M seventh dual-polarization symbol data streams, and a quantity of symbols that belong to each of the M seventh dual-polarization symbol data streams in every $S_1 \times$ M/W consecutive symbols in the first dual-polarization symbol data stream is the same, where $S_1$ is a positive integer, and $S_1 \times$ M is an integer multiple of W.

In a possible implementation, M=4, and W=2; M=2, and W=2; or M=4, and W=4.

In a possible implementation, performing FEC encoding processing on the to-be-sent bit data stream, to obtain the M first encoded data streams includes: performing FEC encoding on every 2×M bit sequences in the to-be-sent bit data stream in parallel, to obtain 2×M fifth encoded data streams, where each of the 2×M bit sequences includes a plurality of bits; and performing interleaving processing on every two fifth encoded data streams in the 2×M fifth encoded data streams, to obtain the M first encoded data streams.

According to a second aspect, an embodiment of this application provides a data processing method in optical communication. The method includes: obtaining W first dual-polarization symbol data streams, where W is an integer greater than 1, each of the W first dual-polarization symbol data streams is located in two orthogonal polarization directions; and performing second data processing on the W first dual-polarization symbol data streams, to obtain M first encoded data streams; and performing FEC decoding processing on the M first encoded data streams, to obtain a to-be-received bit data stream, where M is an integer greater than 1, the second data processing includes symbol demapping processing, and q × P bits obtained by performing symbol demapping processing on P consecutive symbols in the first dual-polarization symbol data stream are distributed into at least two of the M first encoded data streams in either polarization direction, where P is an integer greater than 1, and q is a positive integer; and in either polarization direction, q bits are obtained by performing symbol mapping processing on each symbol.

In a possible implementation, obtaining the W first dual-polarization symbol data streams includes:

receiving W second dual-polarization symbol data streams from a transmitter device via W optical signals with different wavelengths or through W optical fibers; or demultiplexing one path of received signals to obtain W subcarriers, to obtain W second dual-polarization symbol data streams from a transmitter device; and

performing receiver data signal processing DSP on each of the W second dual-polarization symbol data streams, to obtain the W first dual-polarization symbol data streams.

In a possible implementation, P=M, the $q \times P$ bits are distributed into the M first encoded data streams, and every q bits in the $q \times P$ bits are distributed into one of the M first encoded data streams.

In a possible implementation, in either polarization direction, the q bits obtained by performing symbol demapping processing on each symbol are distributed into a same first encoded data stream.

In a possible implementation, M consecutive dual-polarization symbols in the first dual-polarization symbol data stream totally include $2 \times M$ symbols in the two polarization directions, $2 \times q \times M$ bits are obtained by performing symbol demapping on the $2 \times M$ symbols, and the $2 \times q \times M$ bits are distributed into the M first encoded data streams; and $2 \times q$ bits obtained by performing symbol demapping on two symbols totally included in each dual-polarization symbol in the two polarization directions are distributed into a same first encoded data stream.

In a possible implementation, performing second data processing on the W first dual-polarization symbol data streams, to obtain the M first encoded data streams includes: performing polarization combining on each of the W first dual-polarization symbol data streams, to obtain W first symbol data streams; performing symbol demapping on each of the W first symbol data streams, to obtain W third encoded data streams; performing merging processing on the W third encoded data streams, to obtain a second encoded data stream; and distributing the second encoded data stream into the M first encoded data streams.

In a possible implementation, every M consecutive bit sets in the second encoded data stream are distributed into the M first encoded data streams, and each of the M bit sets includes $S_0$ consecutive bits that belong to a same first encoded data stream, where $S_0$ is a positive integer; and every $L_1$ consecutive bits in the second encoded data stream are from a same third encoded data stream, where $L_1$ is a positive integer, and $L_1$ is an integer multiple of $S_0 \times M/W$.

In a possible implementation, $L_1 = S_0 \times M$, every $L_1$ consecutive bits in the third encoded data stream include the M bit sets, and the M bit sets are distributed into the M first encoded data streams.

In a possible implementation, performing second data processing on the W first dual-polarization symbol data streams, to obtain the M first encoded data streams includes: performing polarization combining on the W first dual-polarization symbol data streams, to obtain W third symbol data streams; merging the W third symbol data streams, to obtain a second symbol data stream; performing symbol demapping processing on the second symbol data stream, to obtain a second encoded data stream; and distributing the second encoded data stream into the M first encoded data streams.

In a possible implementation, every M consecutive bit sets in the second encoded data stream are distributed into the M first encoded data streams, and $S_0$ consecutive bits included in each of the M bit sets are distributed into a same first encoded data stream, where $S_0$ is a positive integer; and $L_2 \times 2 \times q$ bits are obtained by performing symbol demapping processing on every $2 \times L_2$ consecutive symbols in the third symbol data stream, and the $L_2 \times 2 \times q$ bits are distributed into the M first encoded data streams, where $L_2$ is a positive integer, and $L_2$ is an integer multiple of $S_0 \times M/(W \times q)$.

In a possible implementation, $L_2 = S_0 \times M/q$, and the $L_2 \times 2 \times q$ bits include the M bit sets that enter the M first encoded data streams.

In a possible implementation, performing second data processing on the W first dual-polarization symbol data streams, to obtain the M first encoded data streams includes: performing merging processing on the W first dual-polarization symbol data streams, to obtain a third dual-polarization symbol data stream; performing polarization combining on the third dual-polarization symbol data stream, to obtain a second symbol data stream; performing symbol demapping processing on the second symbol data stream, to obtain a second encoded data stream; and distributing the second encoded data stream into the M first encoded data streams.

In a possible implementation, every M consecutive bit sets in the second encoded data stream are distributed into the M first encoded data streams, and each of the M bit sets includes $S_0$ consecutive bits that enter a same first encoded data stream, where $S_0$ is a positive integer, and P is an integer multiple of $S_0 \times M/(W \times 2 \times q)$.

In a possible implementation, $S_0 = 2 \times q$.

In a possible implementation, performing second data processing on the W first dual-polarization symbol data streams, to obtain the M first encoded data streams includes: performing polarization combining on the W first dual-polarization symbol data streams, to obtain W fourth symbol data streams; performing symbol demapping processing on the W fourth symbol data streams, to obtain W fourth encoded data streams; and distributing the W fourth encoded data streams into the M first encoded data streams.

In a possible implementation, every $S_1 \times M/W$ consecutive bits in the fourth encoded data stream are distributed into the M first encoded data streams, and a quantity of bits that enter each of the M first encoded data streams in every $S_1 \times M/W$ consecutive bits in the third encoded data stream is the same, where $S_1$ is a positive integer, and $S_1 \times M$ is an integer multiple of W.

In a possible implementation, $S_1 = 2 \times q \times W$, every $2 \times q \times M$ consecutive bits in the third encoded data stream include M bit sets, the M bit sets are distributed into different first encoded data streams, and each of the M bit sets includes $2 \times q$ consecutive bits that are distributed into a same first encoded data stream.

In a possible implementation, performing second data processing on the W first dual-polarization symbol data streams, to obtain the M first encoded data streams includes: performing polarization combining on the W first dual-polarization symbol data streams, to obtain W sixth symbol data streams; merging the W sixth symbol data streams, to obtain a fifth symbol data stream; and performing symbol demapping processing on the fifth symbol data stream, to obtain the M first encoded data streams.

In a possible implementation, $2 \times P \times q$ bits are obtained by performing symbol demapping processing on every $2 \times P$ consecutive symbols in the fifth symbol data stream, and the $2 \times P \times q$ bits are distributed into at least two of the M first encoded data streams; and every $2 \times P \times Z/W$ consecutive symbols in the $2 \times P \times Z$ consecutive symbols in the fifth symbol data stream are from a same sixth symbol data stream, where $2 \times P \times Z$ is an integer multiple of W, and Z is a positive integer.

In a possible implementation, performing second data processing on the W first dual-polarization symbol data streams, to obtain the M first encoded data streams includes: performing merging processing on the W first dual-polarization symbol data streams, to obtain a fourth dual-polarization symbol data stream; performing polarization combining on the fourth dual-polarization symbol data stream, to obtain a fifth symbol data stream; and performing symbol demapping processing on the fifth symbol data stream, to obtain the M first encoded data streams.

In a possible implementation, $2 \times P \times q$ bits are obtained by performing symbol demapping processing on every P consecutive dual-polarization symbols in the fourth dual-polarization symbol data stream, and the $2 \times P \times q$ bits are distributed into at least two of the M first encoded data streams; and every $P \times Z/W$ consecutive symbols in the $P \times Z$ consecutive dual-polarization symbols in the fourth dual-polarization symbol data stream are from a same first dual-polarization symbol data stream, where $2 \times P \times Z$ is an integer multiple of W, and Z is a positive integer.

In a possible implementation, $M = b \times W$, and performing second data processing on the W first dual-polarization symbol data streams, to obtain the M first encoded data streams includes:

performing polarization distribution on the W first dual-polarization symbol data streams, to obtain W sixth symbol data streams; then performing symbol demapping processing on the W sixth symbol data streams, to obtain W seventh encoded data streams; further, performing inverse exchange processing on the W seventh encoded data streams, to obtain W sixth encoded data streams; and then performing bit distribution on the W sixth encoded data streams, to obtain the $b \times W$ first encoded data streams, where each sixth encoded data stream is distributed into b first encoded data streams.

In a possible implementation, $M = b \times W$, and performing second data processing on the W first dual-polarization symbol data streams, to obtain the M first encoded data streams includes:

performing polarization combining on the W first dual-polarization symbol data streams, to obtain W eighth symbol data streams; performing inverse exchange processing on the W eighth symbol data streams, to obtain W seventh symbol data streams; then performing symbol demapping processing on each of the W seventh symbol data streams, to obtain W sixth encoded data streams; and further, performing bit distribution on the W sixth encoded data streams, to obtain the $b \times W$ first encoded data streams.

In a possible implementation, $M = b \times W$, and performing second data processing on the W first dual-polarization symbol data streams, to obtain the M first encoded data streams includes:

performing inverse exchange processing on the W first dual-polarization symbol data streams, to obtain W fifth dual-polarization symbol data streams; then performing polarization combining on the W fifth dual-polarization symbol data streams, to obtain W seventh symbol data streams; further, performing symbol demapping processing on the W seventh symbol data streams, to obtain W sixth encoded data streams; and then performing bit distribution on the W sixth encoded data streams, to obtain the $b \times W$ first encoded data streams.

In a possible implementation, $M = b \times W$, and performing second data processing on the W first dual-polarization symbol data streams, to obtain the M first encoded data streams includes:

performing polarization combining on the W first dual-polarization symbol data streams, to obtain W tenth symbol data streams; then performing inverse exchange processing on the W tenth symbol data streams, to obtain W ninth symbol data streams; and performing symbol demapping processing on the W ninth symbol data streams, to obtain the $b \times W$ first encoded data streams.

In a possible implementation, $M = b \times W$, and performing second data processing on the W first dual-polarization symbol data streams, to obtain the M first encoded data streams includes:

performing inverse exchange processing on the W first dual-polarization symbol data streams, to obtain W sixth dual-polarization symbol data streams; then performing polarization combining on each of the W sixth dual-polarization symbol data streams, to obtain W ninth symbol data streams; and then performing symbol demapping processing on the W ninth symbol data streams, to obtain the $b \times W$ first encoded data streams.

In a possible implementation, performing second data processing on the W first dual-polarization symbol data streams, to obtain the M first encoded data streams includes:

> performing polarization combining on the W first dual-polarization symbol data streams, to obtain W sixth symbol data streams;
> distributing the W sixth symbol data streams, to obtain M first symbol data streams; and
> performing symbol demapping processing on each of the M first symbol data streams, to obtain the M first encoded data streams.

In a possible implementation, every $S_1 \times$ M/W consecutive symbols in the sixth symbol data stream are distributed into M eleventh symbol data streams, and a quantity of symbols that enter each of the M eleventh symbol data streams in every $S_1 \times$ M/W consecutive symbols in the sixth symbol data stream is the same, where $S_1$ is a positive integer, and $S_1 \times$ M is an integer multiple of W.

In a possible implementation, performing second data processing on the W first dual-polarization symbol data streams, to obtain the M first encoded data streams includes:

> performing polarization combining on the W first dual-polarization symbol data streams, to obtain W sixth symbol data streams;
> distributing the W sixth symbol data streams, to obtain M eleventh symbol data streams; and
> performing symbol demapping processing on each of the M eleventh symbol data streams, to obtain the M first encoded data streams.

In a possible implementation, every $S_1 \times$ M/W consecutive symbols in the sixth symbol data stream are distributed into the M eleventh symbol data streams, and a quantity of symbols that enter each of the M eleventh symbol data streams in every $S_1 \times$ M/W consecutive symbols in the sixth symbol data stream is the same, where $S_1$ is a positive integer, and $S_1 \times$ M is an integer multiple of W.

In a possible implementation, M=4, and W=2; M=2, and W=2; or M=4, and W=4.

In a possible implementation, performing FEC decoding processing on the M first encoded data streams, to obtain the to-be-received bit data stream includes: performing de-interleaving processing on the M first encoded data streams, to obtain 2×M fifth encoded data streams; and performing FEC decoding processing on the 2×M fifth encoded data streams in parallel, to obtain the to-be-sent bit data stream, where every 2×M consecutive bit sequences in the bit data stream are from the 2×M fifth encoded data streams, and a plurality of bits included in each of the 2×M bit sequences are from a same fifth encoded data stream.

According to a third aspect, an embodiment of this application provides a data processing apparatus in optical communication. The apparatus may be used in a transmitter device, for example, may be the transmitter device, or may be a module of the transmitter device, for example, a chip or a chip system.

An FEC encoding processing unit is configured to obtain a to-be-sent bit data stream; and perform forward error correction FEC encoding processing on the to-be-sent bit data stream, to obtain M first encoded data streams, where M is an integer greater than 1; and

> a first data processing unit is configured to perform first data processing on the M first encoded data streams, to obtain W first dual-polarization symbol data streams, where
> W is an integer greater than 1; each of the W first dual-polarization symbol data streams is located in two orthogonal polarization directions; the first data processing includes symbol mapping processing; in either polarization direction, P consecutive symbols in the first dual-polarization symbol data stream are obtained by performing symbol mapping processing on q × P bits, and the q × P bits are from at least two of the M first encoded data streams, where P is an integer greater than 1, and q is a positive integer; and in either polarization direction, each symbol is obtained by performing symbol mapping processing on q bits.

In a possible implementation, the apparatus further includes: a DSP framing processing unit (which is also referred to as a DSP framing unit), configured to perform digital signal processing DSP framing on each of the W first dual-polarization symbol data streams, to obtain W second dual-polarization symbol data streams; and a sending unit, configured to carry the W second dual-polarization symbol data streams on W paths of optical signals respectively, and send the W second dual-polarization symbol data streams, where wavelengths of the W paths of optical signals are all different; or send the W second dual-polarization symbol data streams through W optical fibers respectively.

In a possible implementation, P=M, the q × P bits are from the M first encoded data streams, and every q bits in the q × P bits are from one of the M first encoded data streams.

In a possible implementation, in either polarization direction, q bits that are mapped to one symbol through the symbol mapping processing are from a same first encoded data stream.

In a possible implementation, M consecutive dual-polarization symbols in the first dual-polarization symbol data stream totally include $2 \times M$ symbols in the two polarization directions, the $2 \times M$ symbols are obtained by performing symbol mapping on $2 \times q \times M$ bits, and the $2 \times q \times M$ bits are from the M first encoded data streams; and two symbols totally included in each dual-polarization symbol in the two polarization directions are obtained by performing symbol mapping on $2 \times q$ bits that belong to a same first encoded data stream.

In a possible implementation, the first data processing unit includes:

a merging unit (which is also referred to as a bit group merging unit, a bit merging unit, or the like), configured to merge the M first encoded data streams into a second encoded data stream;

a distribution processing unit (which is also referred to as a wavelength distribution unit), configured to perform distribution processing on the second encoded data stream, to obtain W third encoded data streams;

a symbol mapping processing unit (or a symbol mapping unit), configured to perform symbol mapping processing on each of the W third encoded data streams, to obtain W first symbol data streams; and

a polarization distribution unit, configured to perform polarization distribution on each of the W first symbol data streams, to obtain the W first dual-polarization symbol data streams.

In a possible implementation, every M consecutive bit sets in the second encoded data stream are from the M first encoded data streams, and each of the M bit sets includes $S_0$ consecutive bits from a same first encoded data stream, where $S_0$ is a positive integer; and every $L_1$ consecutive bits in the second encoded data stream are distributed into one third encoded data stream, where $L_1$ is a positive integer, and $L_1$ is an integer multiple of $S_0 \times M/W$.

In a possible implementation, $L_1 = S_0 \times M$, and every $L_1$ consecutive bits in the third encoded data stream include the M bit sets from the M first encoded data streams.

In a possible implementation, the first data processing unit includes:

a merging unit, configured to merge the M first encoded data streams into a second encoded data stream;

a symbol mapping unit, configured to perform symbol mapping processing on the second encoded data stream, to obtain a second symbol data stream;

a distribution processing unit, configured to distribute the second symbol data stream, to obtain W third symbol data streams; and

a polarization distribution unit, configured to perform polarization distribution on each of the W third symbol data streams, to obtain the W first dual-polarization symbol data streams.

In a possible implementation, every M consecutive bit sets in the second encoded data stream are from the M first encoded data streams, and each of the M bit sets includes $S_0$ consecutive bits from a same first encoded data stream, where $S_0$ is a positive integer; and every $2 \times L_2$ consecutive symbols in the third symbol data stream are obtained by performing symbol mapping processing on $L_2 \times 2 \times q$ bits, and the $L_2 \times 2 \times q$ bits are from the M first encoded data streams, where $L_2$ is a positive integer, and $L_2$ is an integer multiple of $S_0 \times M/(W \times q)$.

In a possible implementation, $L_2 = S_0 \times M/q$, and the $L_2 \times 2 \times q$ bits include the M bit sets from the M first encoded data streams.

In a possible implementation, the first data processing unit includes:

a merging unit, configured to merge the M first encoded data streams into a second encoded data stream;

a symbol mapping unit, configured to perform symbol mapping processing on the second encoded data stream, to obtain a second symbol data stream;

a polarization distribution unit, configured to perform polarization distribution on the second symbol data stream separately, to obtain a third dual-polarization symbol data stream; and

a distribution processing unit, configured to perform distribution processing on the third dual-polarization symbol data stream, to obtain the W first dual-polarization symbol data streams.

In a possible implementation, every M consecutive bit sets in the second encoded data stream are from the M first encoded data streams, and each of the M bit sets includes $S_0$ consecutive bits from a same first encoded data stream, where $S_0$ is a positive integer, and P is an integer multiple of $S_0 \times M/(W \times 2 \times q)$.

In a possible implementation, $S_0 = 2 \times q$.

In a possible implementation, the first data processing unit includes:

a distribution processing unit, configured to distribute the M first encoded data streams into W fourth encoded data streams;

a symbol mapping unit, configured to perform symbol mapping processing on each of the W fourth encoded data streams, to obtain W fourth symbol data streams; and
a polarization distribution unit, configured to perform polarization distribution on each of the W fourth symbol data streams, to obtain the W first dual-polarization symbol data streams.

In a possible implementation, every $S_1 \times$ M/W consecutive bits in the fourth encoded data stream are from the M first encoded data streams, and a quantity of bits that belong to each of the M first encoded data streams in every $S_1 \times$ M/W consecutive bits in the fourth encoded data stream is the same, where $S_1$ is a positive integer, and $S_1 \times$ M is an integer multiple of W.

In a possible implementation, $S_1 = 2 \times q \times W$, every $2 \times q \times M$ consecutive bits in the fourth encoded data stream include M bit sets, the M bit sets are from different first encoded data streams, and each of the M bit sets includes $2 \times q$ consecutive bits that belong to a same first encoded data stream.

In a possible implementation, the first data processing unit includes:

a symbol mapping unit, configured to perform symbol mapping processing on the M first encoded data streams, to obtain a fifth symbol data stream;
a distribution processing unit, configured to perform distribution processing on the fifth symbol data stream, to obtain W sixth symbol data streams; and
a polarization distribution unit, configured to perform polarization distribution on the W sixth symbol data streams, to obtain the W first dual-polarization symbol data streams.

In a possible implementation, every $2 \times P$ consecutive symbols in the fifth symbol data stream are obtained by performing symbol mapping processing on $2 \times P \times q$ bits, and the $2 \times P \times q$ bits are from at least two of the M first encoded data streams; and every $2 \times P \times$ Z/W consecutive symbols in the $2 \times P \times Z$ consecutive symbols in the fifth symbol data stream are distributed into one sixth symbol data stream, where $2 \times P \times Z$ is an integer multiple of W, and Z is a positive integer.

In a possible implementation, the first data processing unit includes:

a symbol mapping unit, configured to perform symbol mapping processing on the M first encoded data streams, to obtain a fifth symbol data stream;
a polarization distribution unit, configured to perform polarization distribution on the fifth symbol data stream separately, to obtain a fourth dual-polarization symbol data stream; and
a distribution processing unit, configured to perform distribution processing on the fourth dual-polarization symbol data stream, to obtain the W first dual-polarization symbol data streams.

In a possible implementation, every P consecutive dual-polarization symbols in the fourth dual-polarization symbol data stream are obtained by performing symbol mapping processing on $2 \times P \times q$ bits, and the $2 \times P \times q$ bits are from at least two of the M first encoded data streams; and every $P \times$ Z/W consecutive symbols in the $P \times Z$ consecutive dual-polarization symbols in the fourth dual-polarization symbol data stream are distributed into one first dual-polarization symbol data stream, where $2 \times P \times Z$ is an integer multiple of W, and Z is a positive integer.

In a possible implementation, the first data processing unit includes:

a symbol mapping unit, configured to perform symbol mapping processing on each of the M first encoded data streams, to obtain M eleventh symbol data streams;
a distribution processing unit, configured to perform distribution processing on the M eleventh symbol data streams, to obtain W sixth symbol data streams; and
a polarization distribution unit, configured to perform polarization distribution on the W sixth symbol data streams, to obtain the W first dual-polarization symbol data streams.

In a possible implementation, every $S_1 \times$ M/W consecutive symbols in the sixth symbol data stream are from the M eleventh symbol data streams, and a quantity of symbols that belong to each of the M eleventh symbol data streams in every $S_1 \times$ M/W consecutive symbols in the sixth symbol data stream is the same, where $S_1$ is a positive integer, and $S_1 \times$ M is an integer multiple of W.

In a possible implementation, the first data processing unit includes:

a symbol mapping unit, configured to perform symbol mapping processing on each of the M first encoded data streams, to obtain M eleventh symbol data streams;
a polarization distribution unit, configured to perform polarization distribution on each of the eleventh symbol data streams, to obtain M seventh dual-polarization symbol data streams; and

a distribution processing unit, configured to perform distribution processing on the M seventh dual-polarization symbol data streams, to obtain the W first dual-polarization symbol data streams.

In a possible implementation, M=4, and W=2; M=2, and W=2; or M=4, and W=4.

In a possible implementation, the FEC encoding processing unit includes 2M (namely, $2 \times M$) FEC encoding units (which are also referred to as FEC encoders) and M interleaving units (which are also referred to as interleavers).

The 2M FEC encoding units perform FEC encoding on the to-be-sent bit data stream in parallel, to obtain 2M fifth encoded data streams, where bit sequences in the to-be-sent bit data stream enter the 2M FEC encoding units in a round-robin fashion, each FEC encoding unit is configured to perform FEC encoding on each bit sequence in the to-be-sent bit data stream, and each bit sequence includes a plurality of bits.

Each of the M interleaving units is configured to perform interleaving processing on two fifth encoded data streams, to obtain the M first encoded data streams.

According to a fourth aspect, an embodiment of this application provides a data processing method in optical communication. The method includes:

a second data processing unit, configured to: obtain W first dual-polarization symbol data streams, where W is an integer greater than 1, each of the W first dual-polarization symbol data streams is located in two orthogonal polarization directions; and perform second data processing on the W first dual-polarization symbol data streams, to obtain M first encoded data streams, where

M is an integer greater than 1, the second data processing includes symbol demapping processing, and $q \times P$ bits obtained by performing symbol demapping processing on P consecutive symbols in the first dual-polarization symbol data stream are distributed into at least two of the M first encoded data streams in either polarization direction, where P is an integer greater than 1, and q is a positive integer; and in either polarization direction, q bits are obtained by performing symbol mapping processing on each symbol; and

an FEC decoding processing unit, configured to perform FEC decoding processing on the M first encoded data streams, to obtain a to-be-received bit data stream.

In a possible implementation, the apparatus further includes: a receiving unit, configured to receive W second dual-polarization symbol data streams from a transmitter device via W optical signals with different wavelengths or through W optical fibers; and

a receiver DSP deframing unit, configured to perform receiver data signal processing DSP on each of the W second dual-polarization symbol data streams, to obtain the W first dual-polarization symbol data streams.

In a possible implementation, P=M, the $q \times P$ bits are distributed into the M first encoded data streams, and every q bits in the $q \times P$ bits are distributed into one of the M first encoded data streams.

In a possible implementation, in either polarization direction, the q bits obtained by performing symbol demapping processing on each symbol are distributed into a same first encoded data stream.

In a possible implementation, M consecutive dual-polarization symbols in the first dual-polarization symbol data stream totally include $2 \times M$ symbols in the two polarization directions, $2 \times q \times M$ bits are obtained by performing symbol demapping on the $2 \times M$ symbols, and the $2 \times q \times M$ bits are distributed into the M first encoded data streams; and $2 \times q$ bits obtained by performing symbol demapping on two symbols totally included in each dual-polarization symbol in the two polarization directions are distributed into a same first encoded data stream.

In a possible implementation, the second data processing unit includes:

a polarization combining unit, configured to perform polarization combining on each of the W first dual-polarization symbol data streams, to obtain W first symbol data streams;

a symbol demapping unit, configured to perform symbol demapping on each of the W first symbol data streams, to obtain W third encoded data streams;

a merging processing unit, configured to perform merging processing on the W third encoded data streams, to obtain a second encoded data stream; and

a bit distribution unit, configured to distribute the second encoded data stream into the M first encoded data streams.

In a possible implementation, every M consecutive bit sets in the second encoded data stream are distributed into the M first encoded data streams, and each of the M bit sets includes $S_0$ consecutive bits that belong to a same first encoded data stream, where $S_0$ is a positive integer; and every $L_1$ consecutive bits in the second encoded data stream are from a same third encoded data stream, where $L_1$ is a positive integer, and $L_1$ is an integer multiple of $S_0 \times M/W$.

In a possible implementation, $L_1 = S_0 \times M$, every $L_1$ consecutive bits in the third encoded data stream include the M bit sets, and the M bit sets are distributed into the M first encoded data streams.

In a possible implementation, the second data processing unit includes:

**EP 4 668 618 A1**

a polarization combining unit, configured to perform polarization combining on the W first dual-polarization symbol data streams, to obtain W third symbol data streams;

a merging processing unit, configured to merge the W third symbol data streams, to obtain a second symbol data stream;

a symbol demapping unit, configured to perform symbol demapping processing on the second symbol data stream, to obtain a second encoded data stream; and

a bit distribution unit, configured to distribute the second encoded data stream into the M first encoded data streams.

In a possible implementation, every M consecutive bit sets in the second encoded data stream are distributed into the M first encoded data streams, and $S_0$ consecutive bits included in each of the M bit sets are distributed into a same first encoded data stream, where $S_0$ is a positive integer; and $L_2 \times 2 \times q$ bits are obtained by performing symbol demapping processing on every $2 \times L_2$ consecutive symbols in the third symbol data stream, and the $L_2 \times 2 \times q$ bits are distributed into the M first encoded data streams, where $L_2$ is a positive integer, and $L_2$ is an integer multiple of $S_0 \times M/(W \times q)$.

In a possible implementation, $L_2 = S_0 \times M/q$, and the $L_2 \times 2 \times q$ bits include the M bit sets that enter the M first encoded data streams.

In a possible implementation, the second data processing unit includes:

a merging processing unit, configured to perform merging processing on the W first dual-polarization symbol data streams, to obtain a third dual-polarization symbol data stream;

a polarization combining unit, configured to perform polarization combining on the third dual-polarization symbol data stream, to obtain a second symbol data stream;

a symbol demapping unit, configured to perform symbol demapping processing on the second symbol data stream, to obtain a second encoded data stream; and

a bit distribution unit, configured to distribute the second encoded data stream into the M first encoded data streams.

In a possible implementation, every M consecutive bit sets in the second encoded data stream are distributed into the M first encoded data streams, and each of the M bit sets includes $S_0$ consecutive bits that enter a same first encoded data stream, where $S_0$ is a positive integer, and P is an integer multiple of $S_0 \times M/(W \times 2 \times q)$.

In a possible implementation, $S_0 = 2 \times q$.

In a possible implementation, the second data processing unit includes:

a polarization combining unit, configured to perform polarization combining on the W first dual-polarization symbol data streams, to obtain W fourth symbol data streams;

a symbol demapping unit, configured to perform symbol demapping processing on the W fourth symbol data streams, to obtain W fourth encoded data streams; and

a bit distribution unit, configured to distribute the W fourth encoded data streams into the M first encoded data streams.

In a possible implementation, every $S_1 \times M/W$ consecutive bits in the fourth encoded data stream are distributed into the M first encoded data streams, and a quantity of bits that enter each of the M first encoded data streams in every $S_1 \times M/W$ consecutive bits in the third encoded data stream is the same, where $S_1$ is a positive integer, and $S_1 \times M$ is an integer multiple of W.

In a possible implementation, $S_1 = 2 \times q \times W$, every $2 \times q \times M$ consecutive bits in the third encoded data stream include M bit sets, the M bit sets are distributed into different first encoded data streams, and each of the M bit sets includes $2 \times q$ consecutive bits that are distributed into a same first encoded data stream.

In a possible implementation, the second data processing unit includes:

a polarization combining unit, configured to perform polarization combining on the W first dual-polarization symbol data streams, to obtain W sixth symbol data streams;

a merging processing unit, configured to merge the W sixth symbol data streams, to obtain a fifth symbol data stream; and

a symbol demapping unit, configured to perform symbol demapping processing on the fifth symbol data stream, to obtain the M first encoded data streams.

In a possible implementation, $2 \times P \times q$ bits are obtained by performing symbol demapping processing on every $2 \times P$ consecutive symbols in the fifth symbol data stream, and the $2 \times P \times q$ bits are distributed into at least two of the M first encoded data streams; and every $2 \times P \times Z/W$ consecutive symbols in the $2 \times P \times Z$ consecutive symbols in the fifth

13

symbol data stream are from a same sixth symbol data stream, where $2 \times P \times Z$ is an integer multiple of W, and Z is a positive integer.

In a possible implementation, the second data processing unit includes:

a merging processing unit, configured to perform merging processing on the W first dual-polarization symbol data streams, to obtain a fourth dual-polarization symbol data stream;

a polarization combining unit, configured to perform polarization combining on the fourth dual-polarization symbol data stream, to obtain a fifth symbol data stream; and

a symbol demapping unit, configured to perform symbol demapping processing on the fifth symbol data stream, to obtain the M first encoded data streams.

In a possible implementation, $2 \times P \times q$ bits are obtained by performing symbol demapping processing on every P consecutive dual-polarization symbols in the fourth dual-polarization symbol data stream, and the $2 \times P \times q$ bits are distributed into at least two of the M first encoded data streams; and every $P \times Z/W$ consecutive symbols in the $P \times Z$ consecutive dual-polarization symbols in the fourth dual-polarization symbol data stream are from a same first dual-polarization symbol data stream, where $2 \times P \times Z$ is an integer multiple of W, and Z is a positive integer.

In a possible implementation, the second data processing unit includes:

a polarization combining unit, configured to perform polarization combining on the W first dual-polarization symbol data streams, to obtain W sixth symbol data streams;

a merging processing unit, configured to distribute the W sixth symbol data streams, to obtain M first symbol data streams; and

a symbol demapping unit, configured to perform symbol demapping processing on each of the M first symbol data streams, to obtain the M first encoded data streams.

In a possible implementation, every $S_1 \times M/W$ consecutive symbols in the sixth symbol data stream are distributed into M eleventh symbol data streams, and a quantity of symbols that enter each of the M eleventh symbol data streams in every $S_1 \times M/W$ consecutive symbols in the sixth symbol data stream is the same, where $S_1$ is a positive integer, and $S_1 \times M$ is an integer multiple of W.

In a possible implementation, the second data processing unit includes:

a merging processing unit, configured to perform merging processing on the W first dual-polarization symbol data streams, to obtain M seventh dual-polarization symbol data streams;

a polarization combining unit, configured to perform polarization combining on each of the M seventh dual-polarization symbol data streams, to obtain M eleventh symbol data streams; and

a symbol demapping unit, configured to perform symbol demapping processing on each of the M eleventh symbol data streams, to obtain the M first encoded data streams.

In a possible implementation, M=4, and W=2; M=2, and W=2; or M=4, and W=4.

In a possible implementation, the FEC decoding processing unit includes:

M de-interleaving units, configured to perform de-interleaving processing on the M first encoded data streams, to obtain $2 \times M$ fifth encoded data streams; and

2M FEC decoding units, configured to perform FEC decoding on the $2 \times M$ fifth encoded data streams in parallel, to obtain the to-be-sent bit data stream, where

every $2 \times M$ consecutive bit sequences in the bit data stream are from the $2 \times M$ fifth encoded data streams, and a plurality of bits included in each of the $2 \times M$ bit sequences are from a same fifth encoded data stream.

According to a fifth aspect, an embodiment of this application provides a data processing method in optical communication. The method includes: obtaining a to-be-sent bit data stream; performing forward error correction FEC encoding processing on the to-be-sent bit data stream, to obtain M first encoded data streams, where M is an integer greater than 1; and performing third data processing on the M first encoded data streams, to obtain W second dual-polarization symbol data streams, where W is an integer greater than 1; each of the W second dual-polarization symbol data streams is located in two orthogonal polarization directions; the third data processing includes digital signal processing DSP framing processing and symbol mapping processing; in either of the two polarization directions, P consecutive symbols other than a first symbol sequence in the second dual-polarization symbol data stream are obtained by performing symbol mapping processing on q × P bits, the first symbol sequence includes one or more of a pilot symbol, a frame alignment word, a training symbol, or a reserved symbol, and the q × P bits are from at least two of the M first encoded data streams, where P is an integer greater than 1, and q is a positive integer; and in either polarization direction, each symbol is obtained by performing symbol mapping processing on q bits.

In this embodiment of this application, a data stream is distributed, so that bits obtained through the FEC encoding processing are relatively evenly distributed in different data streams, for example, on optical signals with different wavelengths and in different polarization directions, or on different optical fibers and in different polarization directions. In a distribution manner, parallel transmission of the data streams is performed, and a transmission rate can be improved. In addition, because the bits obtained through the FEC encoding processing are relatively evenly distributed in the different data streams, decoding errors of a receiver are relatively evenly distributed on a plurality of paths of FEC decoding processing, so that codec performance can be improved.

the first symbol sequence is obtained by performing symbol mapping processing on a fixed bit sequence added in the DSP framing processing.

In a possible implementation, the method further includes:

carrying the W second dual-polarization symbol data streams on W paths of optical signals respectively, and sending the W second dual-polarization symbol data streams, where wavelengths of the W paths of optical signals are all different; sending the W second dual-polarization symbol data streams through W optical fibers respectively; or carrying the W second dual-polarization symbol data streams on W subcarriers respectively, performing digital subcarrier multiplexing to obtain one signal stream, and sending the signal stream.

In a possible implementation, P=M, the q × P bits are from the M first encoded data streams, and every q bits in the q × P bits are from one of the M first encoded data streams.

In a possible implementation, in either polarization direction, q bits that are mapped to one symbol through the symbol mapping processing are from a same first encoded data stream.

In a possible implementation, M consecutive dual-polarization symbols other than the first symbol sequence in the second dual-polarization symbol data stream totally include 2 × M symbols in the two polarization directions, the 2 × M symbols are obtained by performing symbol mapping on 2 × q × M bits, and the 2 × q × M bits are from the M first encoded data streams; and two symbols totally included in each dual-polarization symbol in the two polarization directions are obtained by performing symbol mapping on 2 × q bits that belong to a same first encoded data stream.

In a possible implementation, performing third data processing on the M first encoded data streams, to obtain the W second dual-polarization symbol data streams includes:

merging the M first encoded data streams into a second encoded data stream;
performing distribution processing on the second encoded data stream, to obtain W third encoded data streams;
performing DSP framing processing on each of the W third encoded data streams, to obtain W eighth encoded data streams; and
performing polarization distribution and symbol mapping on each of the W eighth encoded data streams, to obtain the W second dual-polarization symbol data streams.

In a possible implementation, every M consecutive bit sets in the second encoded data stream are from the M first encoded data streams, and each of the M bit sets includes $S_0$ consecutive bits from a same first encoded data stream, where $S_0$ is a positive integer; and every $L_1$ consecutive bits in the second encoded data stream are distributed into one third encoded data stream, where $L_1$ is a positive integer, and $L_1$ is an integer multiple of $S_0 \times M/W$.

In a possible implementation, $L_1 = S_0 \times M$, and every $L_1$ consecutive bits in the third encoded data stream include the M bit sets from the M first encoded data streams.

In a possible implementation, performing third data processing on the M first encoded data streams, to obtain the W second dual-polarization symbol data streams includes:

distributing the M first encoded data streams into W fourth encoded data streams;
performing DSP framing processing on each of the W fourth encoded data streams, to obtain W ninth encoded data streams; and
performing polarization distribution and symbol mapping on each of the W ninth encoded data streams, to obtain the W second dual-polarization symbol data streams.

In a possible implementation, every $S_1 \times M/W$ consecutive bits in the fourth encoded data stream are from the M first encoded data streams, and a quantity of bits that belong to each of the M first encoded data streams in every $S_1 \times M/W$ consecutive bits in the fourth encoded data stream is the same, where $S_1$ is a positive integer, and $S_1 \times M$ is an integer multiple of W.

In a possible implementation, $S_1 = 2 \times q \times W$, every $2 \times q \times M$ consecutive bits in the fourth encoded data stream include M bit sets, the M bit sets are from different first encoded data streams, and each of the M bit sets includes $2 \times q$ consecutive bits that belong to a same first encoded data stream.

In a possible implementation, M=4, and W=2; M=2, and W=2; or M=4, and W=4.

In a possible implementation, performing FEC encoding processing on the to-be-sent bit data stream, to obtain the M first encoded data streams includes:

performing FEC encoding on every $2 \times M$ bit sequences in the to-be-sent bit data stream in parallel, to obtain $2 \times M$ fifth encoded data streams, where each of the $2 \times M$ bit sequences includes a plurality of bits; and

performing interleaving processing on every two fifth encoded data streams in the $2 \times M$ fifth encoded data streams, to obtain the M first encoded data streams.

According to a sixth aspect, an embodiment of this application provides a data processing method in optical communication. The method includes:

obtaining W second dual-polarization symbol data streams, where W is an integer greater than 1, each of the W second dual-polarization symbol data streams is located in two orthogonal polarization directions;

performing fourth data processing on the W second dual-polarization symbol data streams, to obtain M first encoded data streams, where

M is an integer greater than 1; the fourth data processing includes receiver DSP processing and symbol demapping processing, and $q \times P$ bits obtained by performing symbol demapping processing on P consecutive symbols other than a first symbol sequence in the second dual-polarization symbol data stream are distributed into at least two of the M first encoded data streams in either polarization direction; the first symbol sequence includes one or more of a pilot symbol, a frame alignment word, a training symbol, or a reserved symbol, P is an integer greater than 1, and q is a positive integer; and in either polarization direction, q bits are obtained by performing symbol mapping processing on each symbol; and

performing FEC decoding processing on the M first encoded data streams, to obtain a to-be-received bit data stream.

In a possible implementation, obtaining the W second dual-polarization symbol data streams includes: receiving the W second dual-polarization symbol data streams from a transmitter device via W optical signals with different wavelengths or through W optical fibers; or demultiplexing one path of received signals to obtain W subcarriers, to obtain the W second dual-polarization symbol data streams from a transmitter device.

In a possible implementation, P=M, the $q \times P$ bits are distributed into the M first encoded data streams, and every q bits in the $q \times P$ bits are distributed into one of the M first encoded data streams.

In a possible implementation, in either polarization direction, the q bits obtained by performing symbol demapping processing on each symbol are distributed into a same first encoded data stream.

In a possible implementation, M consecutive dual-polarization symbols other than the first symbol sequence in the second dual-polarization symbol data stream totally include $2 \times M$ symbols in the two polarization directions, $2 \times M$ bits are obtained by performing symbol demapping on the $2 \times q \times M$ symbols, and the $2 \times q \times M$ bits are distributed into the M first encoded data streams; and $2 \times q$ bits obtained by performing symbol demapping on two symbols totally included in each dual-polarization symbol in the two polarization directions are distributed into a same first encoded data stream.

In a possible implementation, performing fourth data processing on the W second dual-polarization symbol data streams, to obtain the M first encoded data streams includes:

performing polarization combining and symbol demapping on the W second dual-polarization symbol data streams, to obtain W eighth encoded data streams;

performing receiver DSP processing on each of the W eighth encoded data streams, to obtain W third encoded data streams;

merging the W third encoded data streams, to obtain a second encoded data stream; and

distributing the second encoded data stream into the M first encoded data streams.

In a possible implementation, every M consecutive bit sets in the second encoded data stream are distributed into the M first encoded data streams, and each of the M bit sets includes $S_0$ consecutive bits that belong to a same first encoded data stream, where $S_0$ is a positive integer; and every $L_1$ consecutive bits in the second encoded data stream are from a same third encoded data stream, where $L_1$ is a positive integer, and $L_1$ is an integer multiple of $S_0 \times M/W$.

In a possible implementation, $L_1 = S_0 \times M$, every $L_1$ consecutive bits in the third encoded data stream include the M bit sets, and the M bit sets are distributed into the M first encoded data streams.

In a possible implementation, performing fourth data processing on the W second dual-polarization symbol data streams, to obtain the M first encoded data streams includes:

performing polarization combining and symbol demapping on the W second dual-polarization symbol data streams, to obtain W ninth encoded data streams;
performing receiver DSP processing on each of the W ninth encoded data streams, to obtain W fourth encoded data streams; and
distributing the W fourth encoded data streams into the M first encoded data streams.

In a possible implementation, every $S_1 \times$ M/W consecutive bits in the fourth encoded data stream are distributed into the M first encoded data streams, and a quantity of bits that enter each of the M first encoded data streams in every $S_1 \times$ M/W consecutive bits in the third encoded data stream is the same, where $S_1$ is a positive integer, and $S_1 \times$ M is an integer multiple of W.

In a possible implementation, $S_1 = 2 \times q \times W$, every $2 \times q \times M$ consecutive bits in the third encoded data stream include M bit sets, the M bit sets are distributed into different first encoded data streams, and each of the M bit sets includes $2 \times q$ consecutive bits that are distributed into a same first encoded data stream.

In a possible implementation, M=4, and W=2; M=2, and W=2; or M=4, and W=4.

In a possible implementation, performing FEC decoding processing on the M first encoded data streams, to obtain the to-be-received bit data stream includes:

performing de-interleaving processing on the M first encoded data streams, to obtain 2×M fifth encoded data streams; and

performing FEC decoding processing on the 2×M fifth encoded data streams in parallel, to obtain the to-be-sent bit data stream, where

every 2×M consecutive bit sequences in the bit data stream are from the 2×M fifth encoded data streams, and a plurality of bits included in each of the 2×M bit sequences are from a same fifth encoded data stream.

According to a seventh aspect, an embodiment of this application provides a data processing apparatus in optical communication. The apparatus includes:

an FEC encoding processing unit, configured to obtain a to-be-sent bit data stream; and perform forward error correction FEC encoding processing on the to-be-sent bit data stream, to obtain M first encoded data streams, where M is an integer greater than 1; and

a third data processing unit, configured to perform third data processing on the M first encoded data streams, to obtain W second dual-polarization symbol data streams, where W is an integer greater than 1; each of the W second dual-polarization symbol data streams is located in two orthogonal polarization directions; the third data processing includes digital signal processing DSP framing processing and symbol mapping processing; in either of the two polarization directions, P consecutive symbols other than a first symbol sequence in the second dual-polarization symbol data stream are obtained by performing symbol mapping processing on q × P bits, the first symbol sequence includes one or more of a pilot symbol, a frame alignment word, a training symbol, or a reserved symbol, and the q × P bits are from at least two of the M first encoded data streams, where P is an integer greater than 1, and q is a positive integer; and in either polarization direction, each symbol is obtained by performing symbol mapping processing on q bits.

In a possible implementation, the apparatus further includes:
a sending unit, configured to: carry the W second dual-polarization symbol data streams on W paths of optical signals respectively, and send the W second dual-polarization symbol data streams, where wavelengths of the W paths of optical signals are all different; send the W second dual-polarization symbol data streams through W optical fibers respectively; or carry the W second dual-polarization symbol data streams on W subcarriers respectively, perform digital subcarrier multiplexing to obtain one signal stream, and send the signal stream.

In a possible implementation, P=M, the q × P bits are from the M first encoded data streams, and every q bits in the q × P bits are from one of the M first encoded data streams.

In a possible implementation, in either polarization direction, q bits that are mapped to one symbol through the symbol mapping processing are from a same first encoded data stream.

In a possible implementation, M consecutive dual-polarization symbols other than the first symbol sequence in the second dual-polarization symbol data stream totally include $2 \times M$ symbols in the two polarization directions, the $2 \times M$ symbols are obtained by performing symbol mapping on $2 \times q \times M$ bits, and the $2 \times q \times M$ bits are from the M first encoded data streams; and two symbols totally included in each dual-polarization symbol in the two polarization directions are obtained by performing symbol mapping on $2 \times q$ bits that belong to a same first encoded data stream.

In a possible implementation, the third data processing unit includes:

a merging unit (which is also referred to as a bit group merging unit, a bit merging unit, or the like), configured to merge the M first encoded data streams into a second encoded data stream;

a distribution processing unit (which is also referred to as a wavelength distribution unit), configured to perform distribution processing on the second encoded data stream, to obtain W third encoded data streams;

a DSP framing processing unit (which is also referred to as a DSP framing unit), configured to perform DSP framing processing on each of the W third encoded data streams, to obtain W eighth encoded data streams; and

a distribution and mapping unit, configured to perform polarization distribution and symbol mapping on each of the W eighth encoded data streams, to obtain the W second dual-polarization symbol data streams.

The distribution and mapping unit may include a polarization distribution unit and a symbol mapping unit. Polarization distribution may be performed before the symbol mapping, or symbol mapping may be performed before the polarization distribution.

In a possible implementation, every M consecutive bit sets in the second encoded data stream are from the M first encoded data streams, and each of the M bit sets includes $S_0$ consecutive bits from a same first encoded data stream, where $S_0$ is a positive integer; and every $L_1$ consecutive bits in the second encoded data stream are distributed into one third encoded data stream, where $L_1$ is a positive integer, and $L_1$ is an integer multiple of $S_0 \times M/W$.

In a possible implementation, $L_1 = S_0 \times M$, and every $L_1$ consecutive bits in the third encoded data stream include the M bit sets from the M first encoded data streams.

In a possible implementation, the third data processing unit includes:

a distribution processing unit, configured to distribute the M first encoded data streams into W fourth encoded data streams;
a DSP framing unit, configured to perform DSP framing processing on each of the W fourth encoded data streams, to obtain W ninth encoded data streams; and
a distribution and mapping unit, configured to perform polarization distribution and symbol mapping on each of the W ninth encoded data streams, to obtain the W second dual-polarization symbol data streams.

In a possible implementation, every $S_1 \times M/W$ consecutive bits in the fourth encoded data stream are from the M first encoded data streams, and a quantity of bits that belong to each of the M first encoded data streams in every $S_1 \times M/W$ consecutive bits in the fourth encoded data stream is the same, where $S_1$ is a positive integer, and $S_1 \times M$ is an integer multiple of W.

In a possible implementation, $S_1 = 2 \times q \times W$, every $2 \times q \times M$ consecutive bits in the fourth encoded data stream include M bit sets, the M bit sets are from different first encoded data streams, and each of the M bit sets includes $2 \times q$ consecutive bits that belong to a same first encoded data stream.

In a possible implementation, M=4, and W=2; M=2, and W=2; or M=4, and W=4.

In a possible implementation, the FEC encoding processing unit includes 2M FEC encoding units (which are also referred to as FEC encoders) and M interleaving units (which are also referred to as interleavers).

The 2M FEC encoding units perform FEC encoding on every $2 \times M$ bit sequences in the to-be-sent bit data stream in parallel, to obtain $2 \times M$ fifth encoded data streams, where each of the $2 \times M$ bit sequences includes a plurality of bits.

The M interleaving units perform interleaving processing on every two fifth encoded data streams in the $2 \times M$ fifth encoded data streams, to obtain the M first encoded data streams.

According to an eighth aspect, an embodiment of this application provides a data processing apparatus in optical communication. The apparatus includes:

a fourth data processing unit, configured to: obtain W second dual-polarization symbol data streams, where W is an integer greater than 1, each of the W second dual-polarization symbol data streams is located in two orthogonal polarization directions; and perform fourth data processing on the W second dual-polarization symbol data streams, to obtain M first encoded data streams, where

M is an integer greater than 1; the fourth data processing includes receiver DSP processing and symbol demapping processing, and $q \times P$ bits obtained by performing symbol demapping processing on P consecutive symbols other than a first symbol sequence in the second dual-polarization symbol data stream are distributed into at least two of the M first encoded data streams in either polarization direction; the first symbol sequence includes one or more of a pilot symbol, a frame alignment word, a training symbol, or a reserved symbol, P is an integer greater than 1, and q is a positive integer; and in either polarization direction, q bits are obtained by performing symbol mapping processing on each symbol; and

an FEC decoding processing unit, configured to perform FEC decoding processing on the M first encoded data streams, to obtain a to-be-received bit data stream.

In a possible implementation, a receiving unit is configured to receive the W second dual-polarization symbol data streams from a transmitter device via W optical signals with different wavelengths or through W optical fibers; or demultiplex one path of received signals to obtain W subcarriers, to obtain the W second dual-polarization symbol data streams from a transmitter device.

In a possible implementation, P=M, the $q \times P$ bits are distributed into the M first encoded data streams, and every q bits in the $q \times P$ bits are distributed into one of the M first encoded data streams.

In a possible implementation, in either polarization direction, the q bits obtained by performing symbol demapping processing on each symbol are distributed into a same first encoded data stream.

In a possible implementation, M consecutive dual-polarization symbols other than the first symbol sequence in the second dual-polarization symbol data stream totally include $2 \times M$ symbols in the two polarization directions, $2 \times M$ bits are obtained by performing symbol demapping on the $2 \times q \times M$ symbols, and the $2 \times q \times M$ bits are distributed into the M first encoded data streams; and $2 \times q$ bits obtained by performing symbol demapping on two symbols totally included in each dual-polarization symbol in the two polarization directions are distributed into a same first encoded data stream.

In a possible implementation, the fourth data processing unit includes:

a merging and demapping unit, configured to perform polarization combining and symbol demapping on the W second dual-polarization symbol data streams, to obtain W eighth encoded data streams; and
a receiver DSP deframing unit, configured to: perform receiver DSP processing on each of the W eighth encoded data streams, to obtain W third encoded data streams, where
the W third encoded data streams are merged, to obtain a second encoded data stream; and
the second encoded data stream is distributed into the M first encoded data streams.

In a possible implementation, every M consecutive bit sets in the second encoded data stream are distributed into the M first encoded data streams, and each of the M bit sets includes $S_0$ consecutive bits that belong to a same first encoded data stream, where $S_0$ is a positive integer; and every $L_1$ consecutive bits in the second encoded data stream are from a same third encoded data stream, where $L_1$ is a positive integer, and $L_1$ is an integer multiple of $S_0 \times M/W$.

In a possible implementation, $L_1 = S_0 \times M$, every $L_1$ consecutive bits in the third encoded data stream include the M bit sets, and the M bit sets are distributed into the M first encoded data streams.

In a possible implementation, the fourth data processing unit includes:

a merging and demapping unit, configured to perform polarization combining and symbol demapping on the W second dual-polarization symbol data streams, to obtain W ninth encoded data streams;
a receiver DSP deframing unit, configured to perform receiver DSP processing on each of the W ninth encoded data streams, to obtain W fourth encoded data streams; and
a merging processing unit, configured to distribute the W fourth encoded data streams into the M first encoded data streams.

In a possible implementation, every $S_1 \times M/W$ consecutive bits in the fourth encoded data stream are distributed into the M first encoded data streams, and a quantity of bits that enter each of the M first encoded data streams in every $S_1 \times M/W$ consecutive bits in the third encoded data stream is the same, where $S_1$ is a positive integer, and $S_1 \times M$ is an integer multiple of W.

In a possible implementation, $S_1 = 2 \times q \times W$, every $2 \times q \times M$ consecutive bits in the third encoded data stream include M bit sets, the M bit sets are distributed into different first encoded data streams, and each of the M bit sets includes $2 \times q$ consecutive bits that are distributed into a same first encoded data stream.

In a possible implementation, M=4, and W=2; M=2, and W=2; or M=4, and W=4.

In a possible implementation, the FEC decoding processing unit includes:

M de-interleaving units, configured to perform de-interleaving processing on the M first encoded data streams, to obtain 2×M fifth encoded data streams; and

2M FEC decoding units, configured to perform FEC decoding processing on the 2×M fifth encoded data streams in parallel, to obtain the to-be-sent bit data stream, where every 2×M consecutive bit sequences in the bit data stream are from the 2×M fifth encoded data streams, and a plurality of bits included in each of the 2×M bit sequences are from a same fifth encoded data stream.

According to a ninth aspect, a data processing apparatus is provided. The data processing apparatus may be a transmitter device or a receiver device in an optical communication network, or may be a part of the transmitter device or a part of the receiver device (for example, a circuit or a chip), and includes a processor, a memory, and a communication interface. The processor, the memory, and the communication interface are connected to each other. The communication interface is configured to receive and send data, the memory is configured to store a program, and the processor is configured to invoke the program stored in the memory. When the program is executed by a computer, the computer is enabled to perform the data processing method according to any one the first aspect or the possible implementations of the first aspect, the data processing method according to any one the second aspect or the possible implementations of the second aspect, the data processing method according to any one the fifth aspect or the possible implementations of the fifth aspect, or the data processing method according to any one the sixth aspect or the possible implementations of the sixth aspect. The processor and the memory may be physically independent units, or the memory may be integrated with the processor.

According to a tenth aspect, a computer-readable medium is provided. The computer-readable medium stores instructions. When the instructions are run on a computer, the computer is enabled to perform the data processing method according to any one the first aspect or the possible implementations of the first aspect, the data processing method according to any one the second aspect or the possible implementations of the second aspect, the data processing method according to any one the fifth aspect or the possible implementations of the fifth aspect, or the data processing method according to any one the sixth aspect or the possible implementations of the sixth aspect.

According to an eleventh aspect, a computer program product is provided. The computer program product includes computer program code. When the computer program code is run on a computer, the computer is enabled to perform the data processing method according to any one the first aspect or the possible implementations of the first aspect, the data processing method according to any one the second aspect or the possible implementations of the second aspect, the data processing method according to any one the fifth aspect or the possible implementations of the fifth aspect, or the data processing method according to any one the sixth aspect or the possible implementations of the sixth aspect.

According to a twelfth aspect, a chip is provided. The chip includes a processor and a communication interface. The processor is coupled to the communication interface, and is configured to implement the data processing method according to any one of the first aspect or the optional implementations of the first aspect, the data processing method according to any one the second aspect or the possible implementations of the second aspect, the data processing method according to any one the fifth aspect or the possible implementations of the fifth aspect, or the data processing method according to any one the sixth aspect or the possible implementations of the sixth aspect.

BRIEF DESCRIPTION OF DRAWINGS

FIG. 1 is a diagram of an architecture of an optical communication system to which this application is applicable;

FIG. 2 is a schematic flowchart of a data processing method on a transmitter side according to an embodiment of this application;

FIG. 3 is a schematic flowchart of another data processing method on a transmitter side according to an embodiment of this application;

FIG. 4 is a schematic flowchart of another data processing method on a receiver side according to an embodiment of this application;

FIG. 5A is a schematic flowchart of a data sending method in a first implementation according to an embodiment of this application;

FIG. 5B is a schematic flowchart of a data receiving method in a first implementation according to an embodiment of this application;

FIG. 6A is a schematic flowchart of a data sending method in a second implementation according to an embodiment of this application;

FIG. 6B is a schematic flowchart of a data receiving method in a second implementation according to an embodiment of this application;

FIG. 7A is a schematic flowchart of a data sending method in a third implementation according to an embodiment of this application;

FIG. 7B is a schematic flowchart of a data receiving method in a third implementation according to an embodiment of this application;

FIG. 8A is a schematic flowchart of a data sending method in a fourth implementation according to an embodiment of this application;

FIG. 8B is a schematic flowchart of a data receiving method in a fourth implementation according to an embodiment of this application;

FIG. 9A is a schematic flowchart of a data sending method in a fifth implementation according to an embodiment of this application;

FIG. 9B is a schematic flowchart of a data receiving method in a fifth implementation according to an embodiment of this application;

FIG. 9C is a schematic flowchart of a data sending method in a fifth implementation according to an embodiment of this application;

FIG. 9D is a schematic flowchart of a data receiving method in a fifth implementation according to an embodiment of this application;

FIG. 10A is a schematic flowchart of a data sending method in a sixth implementation according to an embodiment of this application;

FIG. 10B is a schematic flowchart of a data receiving method in a sixth implementation according to an embodiment of this application;

FIG. 10C is a schematic flowchart of a data sending method in a sixth implementation according to an embodiment of this application;

FIG. 10D is a schematic flowchart of a data receiving method in a sixth implementation according to an embodiment of this application;

FIG. 11A is a schematic flowchart of a data sending method in a seventh implementation according to an embodiment of this application;

FIG. 11B is a schematic flowchart of a data receiving method in a seventh implementation according to an embodiment of this application;

FIG. 12A is a schematic flowchart of a data sending method in an eighth implementation according to an embodiment of this application;

FIG. 12B is a schematic flowchart of a data receiving method in an eighth implementation according to an embodiment of this application;

FIG. 13A is a schematic flowchart of a data sending method in a ninth implementation according to an embodiment of this application;

FIG. 13B is a schematic flowchart of a data receiving method in a ninth implementation according to an embodiment of this application;

FIG. 14A is a schematic flowchart of a data sending method in a tenth implementation according to an embodiment of this application;

FIG. 14B is a schematic flowchart of a data receiving method in a tenth implementation according to an embodiment of this application;

FIG. 15A is a schematic flowchart of a data sending method in an eleventh implementation according to an embodiment of this application;

FIG. 15B is a schematic flowchart of a data receiving method in an eleventh implementation according to an embodiment of this application;

FIG. 16 is a diagram of an FEC encoding processing manner according to an embodiment of this application;

FIG. 17 is a schematic flowchart of a data sending method in a scenario 1 according to an embodiment of this application;

FIG. 18 is a diagram of an FEC encoding processing manner in a scenario 1 according to an embodiment of this application;

FIG. 19 is a diagram of a 1.6T data processing procedure in a scenario 1 according to an embodiment of this application;

FIG. 20 is a schematic flowchart of a data sending method in a scenario 2 according to an embodiment of this application;

FIG. 21 is a schematic flowchart of a data sending method in a scenario 3 according to an embodiment of this application;

FIG. 22 is a schematic flowchart of a data sending method in a scenario 4 according to an embodiment of this application;

FIG. 23 is a schematic flowchart of another data processing method on a transmitter side according to an embodiment of this application;

EP 4 668 618 A1

FIG. 24 is a schematic flowchart of another data processing method on a receiver side according to an embodiment of this application;
FIG. 25A is a schematic flowchart of a data sending method in a twelfth implementation according to an embodiment of this application;
FIG. 25B is a schematic flowchart of a data receiving method in a twelfth implementation according to an embodiment of this application;
FIG. 26A is a schematic flowchart of a data sending method in a thirteenth implementation according to an embodiment of this application;
FIG. 26B is a schematic flowchart of a data receiving method in a thirteenth implementation according to an embodiment of this application;
FIG. 27 is a schematic flowchart of a data sending method in a scenario 5 according to an embodiment of this application;
FIG. 28 is a diagram of a structure of a data processing apparatus according to an embodiment of this application; and
FIG. 29 is a diagram of a structure of a chip according to an embodiment of this application.

DESCRIPTION OF EMBODIMENTS

In the descriptions of this application, "a plurality of" means two or more than two unless otherwise specified. In addition, "/" represents an "or" relationship between associated objects. For example, A/B may represent A or B. "And/or" in this application describes merely an association relationship between associated objects, and represents that three relationships may exist. For example, A and/or B may represent the following three cases: Only A exists, both A and B exist, and only B exists, where A and B each may be singular or plural. In addition, in embodiments of this application, terms such as "first" and "second" are used to distinguish between same objects or similar objects whose functions and purposes are basically the same, to clearly describe the technical solutions in embodiments of this application. A person skilled in the art may understand that the terms such as "first" and "second" do not limit a quantity or an execution order, and the terms such as "first" and "second" do not indicate a definite difference. It should be further noted that, unless otherwise specified, specific descriptions of some technical features in one embodiment may also be applied to explanation of corresponding technical features mentioned in another embodiment.

Before embodiments of this application are described in detail, application scenarios of embodiments of this application are first described. This application may be applied to a data center transmission scenario, for example, a data communication network (Data Communication Network, DCN) scenario or a data center interconnect (Data Center Interconnect, DCI) scenario. This application may alternatively be applied to a metro telecommunication transmission scenario.

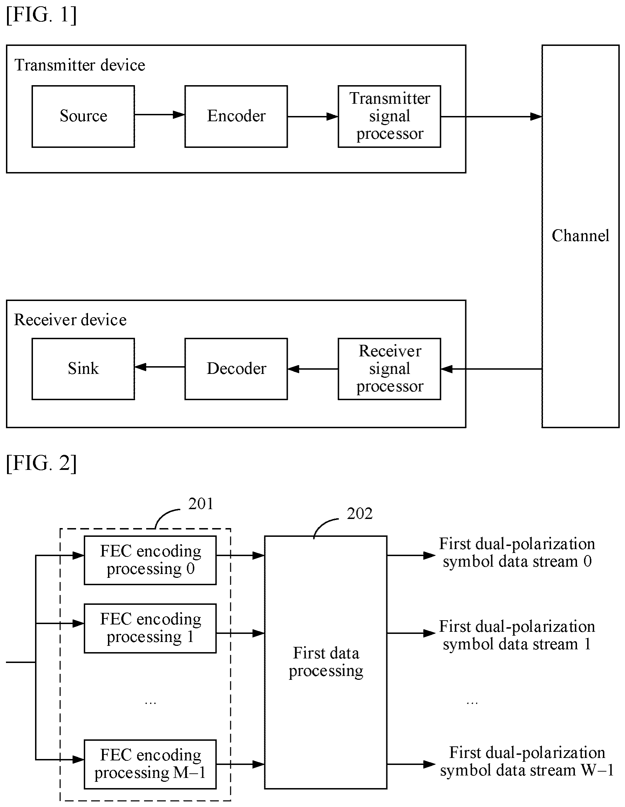

FIG. 1 is a diagram of a structure of a communication system to which an embodiment of this application is applicable. The communication system includes a transmitter device and a receiver device. For example, the transmitter device may include a source, an encoder, and a transmitter signal processor. The receiver device may include a receiver signal processor, a decoder, and a sink.

The transmitter device and the receiver device each may be a device like a switch or a router. The transmitter device is also referred to as a host chip (host chip) on a transmitter. The receiver device is also referred to as a host chip on a receiver.

On the transmitter device, the source provides a to-be-sent bit data stream. The encoder receives the bit data stream, and encodes the bit data stream. The encoder inputs, into the transmitter signal processor for framing, codeword information obtained by merging a parity bit and an information bit. The codeword information is transmitted to the receiver device through a channel. After receiving a distorted signal generated due to noise or another impairment on the channel, the receiver device sends the signal to the receiver signal processor for dispersion compensation, synchronization, phase recovery, and other operations. Then, the decoder performs decoding to recover original data, and sends the data to the sink.

The sink is also referred to as the host chip on the receiver. The channel may also be referred to as a channel transmission medium. For example, the channel may be an optical fiber. The encoder and the transmitter signal processor are deployed in one module (in other words, chip or chip system). The module may be an optical module, an electrical module, or another module that processes data in a data sending process. For example, the optical module may be a coherent optical module. The decoder and the receiver signal processor may also be deployed in one module. The module may be an optical module, an electrical module, or another module that processes data in the data sending process. Alternatively, the source, the encoder, and the transmitter signal processor may be deployed in one module. No specific constraint is imposed in this application.

With service growth, the metro telecommunication transmission scenario, the DCN scenario, and the DCI scenario have increasingly high requirements on transmission rates. For example, at transmission rates such as 1.2 Tbps and 1.6 Tbps, corresponding baud rates are approximately 180 Gbaud and 240 Gbaud when DP-16QAM modulation and a single-wavelength transmission manner are used. At a same transmission rate, a higher baud rate is needed when lower-order modulation like DP-QPSK is used; or a lower baud rate is needed when higher-order modulation like DP-32QAM or DP-64QAM is used, but a transmission distance is limited. A higher transmission rate needed in an optical transport network usually correspondingly needs a higher baud rate, and corresponds to higher power consumption of a device. Currently, there is no low-power-consumption device with a high baud rate higher than 140 Gbaud. In the metro telecommunication transmission scenario and the data center transmission scenario, low power consumption is usually required for implementation. Therefore, a current data processing solution cannot be applicable to the metro telecommunication transmission scenario, the DCN scenario, and the DCI scenario in which the transmission rates exceed 800 Gbps (including 1.2 Tbps, 1.6 Tbps, and the like).

Baud (Baud), also known as a modulation rate, refers to a rate of modulating a carrier by using an effective data signal, namely, the number of carrier modulation state changes per unit time. A baud rate indicates a quantity of symbols transported per unit time. It is a measurement of a symbol transmission rate, and is expressed by using the number of carrier modulation state changes per unit time. The baud rate refers to a quantity of symbols transmitted per unit time.

Based on this, embodiments of this application provide a data processing method and apparatus in optical communication, to provide a solution applicable to a scenario in which a transmission rate is at least 800 Gbps.

The following describes in detail the solution provided in embodiments of this application. The solution provided in embodiments of this application is first described from a perspective of a transmitter device.

FIG. 2 is a schematic flowchart of a data processing method in optical communication according to an embodiment of this application. The method may be applied to a transmitter device, for example, performed by the transmitter device or a module in the transmitter device. The module in the transmitter device may be a chip or a chip system.

201: Perform FEC encoding processing on one or more bit data streams, to obtain M first encoded data streams, where M is an integer greater than 1.

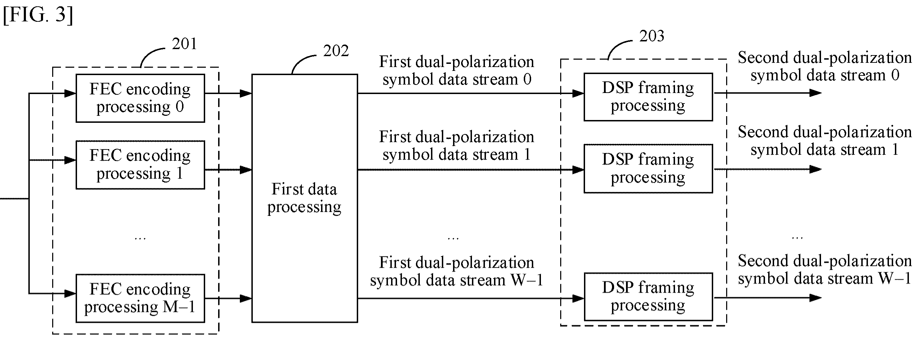

For example, a host device in the transmitter device generates a to-be-sent bit data stream. FEC encoding processing may be performed on the to-be-sent bit data stream in a round-robin and parallel manner. For example, an M-path parallel manner may be used for performing FEC encoding processing. FEC encoding processing (which may also be referred to as FEC processing for short) is performed on each path. Refer to FIG. 3. The FEC encoding processing is referred to as FEC encoding processing (which may also be referred to as FEC processing for short) 0, FEC encoding processing 1, ..., and FEC encoding processing M-1.

In some possible scenarios, after the host device generates the to-be-sent bit data stream, the to-be-sent bit data stream may be distributed into M bit data streams before the FEC encoding processing. Then, FEC encoding processing is performed on each of the M bit data streams.

In some other possible scenarios, after the host device generates the to-be-sent bit data stream, the to-be-sent bit data stream is directly input, in a round-robin fashion, into M FEC encoding processing units for FEC encoding processing.

In still some other possible scenarios, after the host device generates or obtains M to-be-sent bit data streams, FEC encoding processing is performed on each of the M bit data streams.

For example, a concatenated FEC (Concatenated FEC, CFEC) code, an open FEC (open FEC, OFEC) code, a Bose-Chaudhuri-Hocquenghem (Bose-Chaudhuri-Hocquenghem, BCH) code, or a Hamming (Hamming) code may be used for FEC encoding. CFEC encoding may be an encoding manner in which a staircase (staircase) code and the Hamming code are concatenated. Another FEC encoding manner may be alternatively used for the FEC encoding. This is not specifically limited in embodiments of this application.

In some possible implementations, each of the M paths of FEC encoding processing (0, 1, ..., or M-1) may include the FEC encoding and interleaving. Specifically, after FEC encoding is performed, an encoded data stream is further input into an interleaver for interleaving processing, to scramble a data order, thereby improving a burst resistance capability. In some possible implementations, each of the M paths of FEC encoding processing (0, 1, ..., or M-1) may include a plurality of paths of FEC encoding, and a plurality of encoded data streams obtained through the plurality of paths of FEC encoding are input into an interleaver for interleaving processing, to obtain one first encoded data stream.

In some other possible implementations, the M to-be-sent bit data streams obtained by the host device are data streams obtained through encoding by using a KP4 RS (544,514) code. In this case, a short linear block code, for example, the Hamming code or the BCH code, may usually be used for the FEC encoding. The KP4 RS (544,514) code is referred to as an outer code, the FEC encoding is referred to as an inner code, and a combination of the KP4 RS (544,514) code and the FEC encoding is referred to as a concatenated code.

202: Perform first data processing on the M first encoded data streams, to obtain W first dual-polarization symbol data streams, where W is an integer greater than 1, and the W first dual-polarization symbol data streams are first dual-polarization symbol data streams 0 to W-1.

It should be noted that the dual-polarization (dual-polarization, DP) symbol data stream includes a dual-polarization symbol, and one dual-polarization symbol totally includes two symbols in two polarization directions. The symbol herein is a symbol obtained through symbol mapping processing, and may also be referred to as a modulation symbol. This is not specifically limited in embodiments of this application. The two polarization directions in embodiments of this application are orthogonal. The two polarization directions may be represented as X-polarization and Y-polarization. The dual-polarization symbol includes one symbol in the X-polarization direction and one symbol in the Y-polarization direction. In some descriptions, the X polarization may alternatively be represented by using H polarization, and the Y polarization may be represented by using V polarization. In subsequent descriptions of this application, an example in which the two polarization directions are X polarization and Y polarization is used.

In embodiments of this application, a dual-polarization symbol data stream may also be referred to as a symbol data stream, a dual-polarization symbol stream, or a dual-polarization stream. Certainly, another name may alternatively be used. This is not specifically limited in embodiments of this application.

Each of the W first dual-polarization symbol data streams is located in the two orthogonal polarization directions; the first data processing includes at least the symbol mapping processing; in one polarization direction, P consecutive symbols in the first dual-polarization symbol data stream are obtained by performing symbol mapping processing on $q \times P$ bits, and the $q \times P$ bits are from at least two of the M first encoded data streams, where P is an integer greater than 1, and q is a positive integer; and in the polarization direction, each symbol is obtained by performing symbol mapping processing on q bits.

It should be noted that the polarization direction in this embodiment of this application is either of the two polarization directions.

In some possible implementations, P may satisfy P=M. In the polarization direction, the P consecutive symbols in the first dual-polarization symbol data stream are obtained by performing symbol mapping processing on the $q \times P$ bits. Further, the $q \times P$ bits are from the M first encoded data streams, and every q bits in the $q \times P$ bits are from one of the M first encoded data streams.

In some other possible implementations, P may satisfy P=M. Further, the $q \times P$ bits are from the M first encoded data streams, and every $2 \times q$ bits in the $q \times P$ bits are from one of the M first encoded data streams.

In still another possible implementation, P may satisfy P=M. The $q \times P$ bits are from the M first encoded data streams, and every q bits in the $q \times P$ bits are from one of the M first encoded data streams. In addition, in the polarization direction, q bits that are mapped to one symbol through the symbol mapping processing are from a same first encoded data stream.

In still another possible implementation, M consecutive dual-polarization symbols in the first dual-polarization symbol data stream totally include $2 \times M$ symbols in the two polarization directions, the $2 \times M$ symbols are obtained by performing symbol mapping on $2 \times q \times M$ bits, and the $2 \times q \times M$ bits are from the M first encoded data streams; and two symbols totally included in each dual-polarization symbol in the two polarization directions are obtained by performing symbol mapping on $2 \times q$ bits that belong to a same first encoded data stream.

In still another possible implementation, P=M/2. In the polarization direction, the P consecutive symbols in the first dual-polarization symbol data stream are obtained by performing symbol mapping processing on the $q \times P$ bits. The $q \times P$ bits are from the M first encoded data streams, and every q/2 bits in the $q \times P$ bits are from one of the M first encoded data streams.

In still another possible implementation, $P=a \times M$. In the polarization direction, the P consecutive symbols in the first dual-polarization symbol data stream are obtained by performing symbol mapping processing on the $q \times P$ bits. The $q \times P$ bits are from the M first encoded data streams, and every $a \times q$ bits in the $q \times P$ bits are from one of the M first encoded data streams, where a is a positive integer.

It should be noted that, in the polarization direction, the symbol mapping includes but is not limited to quadrature phase shift keying (quadrature Phase Shift Keying, QPSK) or quadrature amplitude modulation (Quadrature Amplitude Modulation, QAM). For QPSK modulation, every two bits are mapped to one modulation symbol. For 8QAM modulation, every three bits are mapped to one modulation symbol. For 16QAM modulation, every four bits are mapped to one modulation symbol. For 32QAM modulation, every five bits are mapped to one modulation symbol. For 64QAM modulation, every six bits are mapped to one modulation symbol.

It should be noted that dual-polarization (Dual-polarization, DP) optical transmission is used in this embodiment of this application. In this embodiment of this application, the first data processing may further include polarization distribution (polarization distribution). In a process of the first data processing, after symbol mapping is performed on a bit sequence, polarization symbol distribution into the X-polarization direction and the Y-polarization direction is performed, to obtain the dual-polarization symbol. It may be understood that, one dual-polarization symbol data stream may be obtained by performing polarization distribution on one symbol data stream, and includes one symbol data stream in the X-polarization direction and one symbol data stream in the Y-polarization direction. For example, for t symbols in a symbol data stream obtained through the symbol mapping processing, through the polarization distribution, t/2 symbols are distributed in a symbol data stream in the X-polarization direction, and t/2 symbols are distributed in a symbol data stream in the Y-polarization direction.

It should be noted that, in one polarization direction, the q bits mapped to one symbol may be consecutive or nonconsecutive in the bit sequence on which symbol mapping has not been performed. No specific constraint is imposed herein.

In some descriptions, the symbol mapping and the polarization distribution are also jointly referred to as dual-polarization symbol mapping such as DP-QPSK, DP-8QAM, DP-16QAM, DP-32QAM, and DP-64QAM mapping.

For DP-QPSK modulation, every four bits are mapped to one dual-polarization modulation symbol. For DP-8QAM modulation, every six bits are mapped to one dual-polarization modulation symbol. For DP-16QAM modulation, every eight bits are mapped to one dual-polarization modulation symbol. For DP-32QAM modulation, every 10 bits are mapped to one dual-polarization modulation symbol. For DP-64QAM modulation, every 12 bits are mapped to one dual-polarization modulation symbol. One dual-polarization modulation symbol includes one modulation symbol in the X-polarization direction and one modulation symbol in the Y-polarization direction. In some descriptions, a modulation symbol may be referred to as a symbol for short, and a dual-polarization modulation symbol may be referred to as a dual-polarization symbol for short.

In some specific application, the dual-polarization 16QAM (DP-16QAM) modulation is used for the "symbol mapping", and an $i^{th}$ received group of eight bits ($c_{8i}$, $c_{8i+1}$, $c_{8i+2}$, $c_{8i+3}$, $c_{8i+4}$, $c_{8i+5}$, $c_{8i+6}$, $c_{8i+7}$) are mapped to one DP-16QAM symbol. It should be noted that, in one polarization direction, four bits mapped to one 16QAM symbol may be four consecutive bits. For example, ($c_{8i}$, $c_{8i+1}$) is mapped to an I-phase component (in-phase component) of the DP-16QAM symbol in the X polarization, ($c_{8i+2}$, $c_{8i+3}$) is mapped to a Q-phase component (quadrature-phase component) of the DP-16QAM symbol in the X polarization, ($c_{8i+4}$, $c_{8i+5}$) is mapped to an I-phase component (in-phase component) of the DP-16QAM symbol in the Y polarization, and ($c_{8i+6}$, $c_{8i+7}$) is mapped to a Q-phase component (quadrature-phase component) of the DP-16QAM symbol in the Y polarization. It should be further noted that, in one polarization direction, four bits mapped to one 16QAM symbol may be four nonconsecutive bits. For example, ($c_{8i}$, $c_{8i+2}$) is mapped to an I-phase component (in-phase component) of the DP-16QAM symbol in the X polarization, ($c_{8i+4}$, $c_{8i+6}$) is mapped to a Q-phase component (quadrature-phase component) of the DP-16QAM symbol in the X polarization, ($c_{8i+1}$, $c_{8i+3}$) is mapped to an I-phase component (in-phase component) of the DP-16QAM symbol in the Y polarization, and ($c_{8i+5}$, $c_{8i+7}$) is mapped to a Q-phase component (quadrature-phase component) of the DP-16QAM symbol in the Y polarization.

In some possible implementations, the FEC encoding processing (0, 1, ..., or M-1) may further include probabilistic constellation shaping (probabilistic constellation shaping, PCS) processing. In a probabilistic constellation shaping (Probabilistic Constellation Shaping, PCS) technology, a probability of constellation point occurrence is changed while a constellation point location is kept unchanged, so that constellation points are not evenly distributed, thereby improving system transmission performance. In this case, QAM modulation may also be referred to as PCS-QAM modulation. For example, 16QAM is also referred to as PCS-16QAM.

In a possible implementation, the first data processing further includes data distribution or data splitting. An objective of the data distribution or the data splitting is to distribute an input data stream into W data streams. It should be noted that, in some descriptions, the data distribution or the data splitting may also be referred to as another name, for example, data stream distribution, wavelength distribution (wavelength distribution), diversion processing, demultiplexing (De-MUx), distribution (distribution) processing, interleaving (interleaving) processing, or interleaving distribution processing. This is not specifically limited herein. In subsequent descriptions of this application, the wavelength distribution is used as an example for description.

For example, K × W consecutive pieces of data in the input data stream are distributed into the W data streams, and every K pieces of data are distributed into one data stream. In this embodiment of this application, data distribution is performed in a plurality of implementations, and different implementations are for different objects. For example, data distribution may be performed before the symbol mapping processing, and data distribution may be performed on an encoded data stream. In this case, the K × W pieces of data may be understood as K × W pieces of bit data. Alternatively, data distribution may be performed after the symbol mapping and before the polarization distribution, and data distribution may be performed for a symbol data stream. In this case, the K × W pieces of data may be understood as K × W symbols. Alternatively, data distribution may be performed after the polarization distribution, and data distribution may be performed for a symbol data stream. In this case, the K × W pieces of data may be understood as K × W dual-polarization symbols. K is a positive integer. It should be understood that K herein is merely an example, and does not specifically limit a specific granularity of the data distribution. For example, it may be understood that a bit granularity used for performing data distribution before the symbol mapping is different from a symbol granularity used for performing data distribution after the symbol mapping.

In some possible embodiments, the first data processing may further include "bit merging" processing. Bit merging (merging) may also be referred to as bit group merging, bit merging and grouping, merging processing for short, or the like. The bit merging may also have another name. This is not specifically limited in embodiments of this application. Through the bit merging and grouping, $S_0$ bits may be obtained from each of M first encoded bit streams that are output through the M paths of FEC encoding processing, and $S_0 \times M$ bits are obtained in total. That is, in a data stream obtained through the bit group merging, the $S_0 \times M$ consecutive bits are from the M first encoded bit streams. For example, $S_0$ is an integer multiple of q. In an example, $S_0 = 2 \times q$.

In an example, when "bit group merging" processing is performed, the M first encoded bit streams obtained through the M paths of FEC encoding processing are input into a "next processing module" in the round-robin fashion at a granularity of S bits, to obtain $S \times W$ bits from each first encoded bit stream. The $S \times W$ bits may be obtained through W times of round-robin operations, or may be obtained through one time of operation. For example, when the $S \times W$ bits are obtained through the W times of round-robin operations, the next processing module receives, at a moment, S bits output through the FEC encoding processing 0, receives, at a next moment, S bits output through the FEC encoding processing 1, then receives, at a still next moment, S bits from the FEC encoding processing 2, and so on, until receiving S bits from the FEC encoding processing M-1; and then receives the S bits from the FEC encoding processing 0, and so on. For example, S may be an integer multiple of q. For example, $S = 2 \times q$. In the polarization direction, the q bits are mapped to one symbol through the symbol mapping. The next processing module may perform wavelength distribution, or may perform symbol mapping.

In some possible implementation scenarios, the "bit group merging" may be combined with the next processing module for joint implementation. For example, a function of the "bit group merging" is merged into the "wavelength distribution" for joint implementation, or it may be understood that the function of the bit group merging is no longer separately performed. For another example, a function of the "bit group merging" is merged into the "symbol mapping" for joint implementation, or it may be understood that bit group merging is no longer separately performed.

In this embodiment of this application, after first data processing is performed, DSP framing (framing) processing may be further performed. FIG. 3 is a diagram of another data processing procedure in optical communication according to an embodiment of this application.

After step 202 is performed, step 203 is performed. To be specific, DSP framing processing is performed on each of the W first dual-polarization symbol data streams, to obtain W second dual-polarization symbol data streams, and the W second dual-polarization symbol data streams are sent.

When the W second dual-polarization symbol data streams are sent, in a possible implementation, the W second dual-polarization symbol data streams may be carried on W paths of optical signals respectively, and the W second dual-polarization symbol data streams are sent, where wavelengths of the W paths of optical signals are different. When this implementation is used, the data distribution may be referred to as the wavelength distribution. In another possible implementation, the W dual-polarization symbol data streams may be sent through W optical fibers.

Sending is performed through optical signals with different wavelengths or through different optical fibers, so that no device with a higher baud rate is needed, and power consumption of a device is low.

It should be noted that still another implementation of sending the W second dual-polarization symbol data streams may be: carrying the W second dual-polarization symbol data streams on W subcarriers (Subcarriers) respectively, performing digital subcarrier multiplexing (Digital Subcarrier Multiplexing) to obtain one path of signals, and sending the path of signals. In this case, a baud rate corresponding to each subcarrier is 1/W of a baud rate of the sent signals. It should be noted that, compared with the foregoing manner in which the W paths of optical signals or the W optical fibers are used, the digital subcarrier implementation needs the device with the higher baud rate, and power consumption of the device may be higher. However, the digital subcarrier implementation can reduce complexity of dispersion compensation, and reduce an equalization enhanced phase noise (Equalization Enhanced Phase Noise, EEPN) penalty. That is, DSP power consumption thereof may be lower.

According to the solution provided in this embodiment of this application, regardless of whether a baud rate is reduced or the complexity of the dispersion compensation is reduced and the EEPN penalty is reduced, a data transmission rate can be improved, and long-distance data transmission can be adapted to.

It should be noted that, in a DSP framing processing process, the transmitter device may periodically insert a fixed symbol sequence into each of the W first dual-polarization symbol data streams. For example, for every $N_{CW}$ dual-polarization symbols, a fixed symbol sequence is inserted in each of the X-polarization direction and the Y-polarization direction, to obtain a dual-polarization symbol sequence (for example, which may also be referred to as a DP-QAM symbol sequence) of a length that is $N_F$. For example, the dual-polarization symbol sequence may be a DP-QPSK symbol sequence, a DP-8QAM symbol sequence, a DP-16QAM symbol sequence, a DP-32QAM symbol sequence, or a DP-64QAM symbol sequence. The dual-polarization symbol sequence may also be referred to as a super-frame (super-frame). In an example, $N_{CW} = 172032$, and $N_F = 175104$. It should be noted that the dual-polarization symbol sequence of the length that is $N_F$ includes $N_F$ symbols in each polarization direction. The fixed symbol sequence may include one or more of a pilot symbol/pilot sequence (pilot sequence, PS), a frame alignment word (frame alignment word, FAW), a training symbol/training sequence (training sequence, TS), or a reserved symbol (reserved symbol, RES). The FAW is for frame alignment, the TS is for link training, and the PS is for carrier phase recovery. In addition, the DSP frame further includes some RES reserved symbols for future use and innovation. Values (which are also referred to as patterns) of the RES reserved symbols may be known and unchanged, or may be randomized (randomized). In some embodiments, a symbol at a fixed location in every $N_G$ symbols in the dual-polarization symbol sequence with the length that is $N_F$ is the pilot symbol. In an example, a 1st symbol in every $N_G$ symbols is the pilot symbol. For example, $N_G = 32$ or 64. It should be noted that, in some specific embodiments, the super-frame (super-frame) is also referred to as a multi-frame (multi-frame), the reserved symbol is also referred to as fixed stuff (fixed stuff, FS), and the frame alignment word is also referred to as a multi-frame alignment signal (multi-frame alignment signal, MFAS).

The following describes, from a perspective of a receiver device, the solution provided in embodiments of this application. An execution process of the receiver device may be understood as an inverse process of the execution process of the transmitter device.

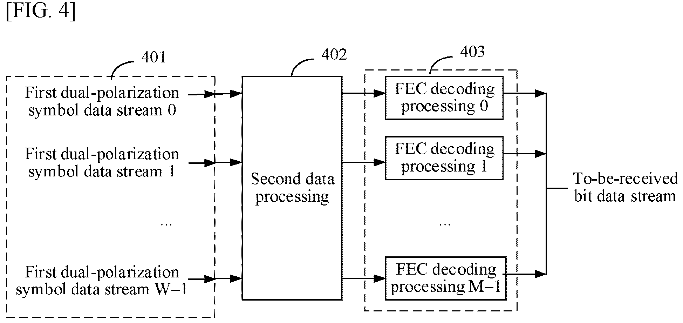

FIG. 4 is a schematic flowchart of a data processing method in optical communication according to an embodiment of this application. The method may be applied to a receiver device, for example, performed by the receiver device or a module in the receiver device. The module in the receiver device may be a chip or a chip system.

401: Obtain W first dual-polarization symbol data streams, where W is an integer greater than 1, each of the W first dual-polarization symbol data streams is located in two orthogonal polarization directions.

402: Perform second data processing on the W first dual-polarization symbol data streams, to obtain M first encoded data streams.

M is an integer greater than 1, the second data processing includes symbol demapping processing, q × P bits are obtained by performing symbol demapping processing on P consecutive symbols in the first dual-polarization symbol data stream in one polarization direction, and the q × P bits enter (in other words, are distributed into) at least two of the M first encoded data streams, where P is an integer greater than 1, and q is a positive integer; and in the polarization direction, q bits are obtained by performing symbol demapping processing on each symbol.

403: Perform FEC decoding processing on the M first encoded data streams, to obtain a to-be-received bit data stream.

In some embodiments, obtaining the W first dual-polarization symbol data streams may be implemented in the following manner: receiving W second dual-polarization symbol data streams from a transmitter device, and performing receiver DSP processing (which may also be referred to as DSP deframing processing) on each of the W second dual-polarization symbol data streams, to obtain the W first dual-polarization data streams. When performing DSP deframing processing, the receiver device may identify a fixed symbol sequence from a fixed location in the second dual-polarization symbol data stream, perform subsequent data recovery based on the identified symbol sequence, and so on. For example, the receiver device may receive the W second dual-polarization symbol data streams from the transmitter device via W paths of optical signals with different wavelengths, or receive the W second dual-polarization symbol data streams from the transmitter device through W optical fibers.

In some possible implementations, when P satisfies P=M, in the polarization direction, the q × P bits obtained by performing symbol demapping processing on the P symbols in the first dual-polarization symbol data stream enter the M first encoded data streams. Every q bits enter a same first encoded data stream in the M first encoded data streams.

In some other possible implementations, P may satisfy P=M. Further, the q × P bits enter the M first encoded data streams, and every 2×q bits in the q × P bits enter a same first encoded data stream in the M first encoded data streams.

In still some other possible implementations, when P satisfies P=M, in the polarization direction, the q bits obtained by performing symbol demapping on each symbol enter a same first encoded data stream.

In still some other possible implementations, M consecutive dual-polarization symbols in the first dual-polarization symbol data stream totally include 2 × M symbols in the two polarization directions, 2 × q × M bits are obtained by performing symbol demapping on the 2 × M symbols, and the 2 × q × M bits enter the M first encoded data streams. 2 × q bits obtained by performing symbol demapping on two symbols totally included in each dual-polarization symbol in the two polarization directions enter a same first encoded data stream.

It should be noted that, in one polarization direction, the symbol demapping includes but is not limited to QPSK or quadrature amplitude modulation QAM.

Correspondingly, the second data processing may further include polarization combining, data merging, and the like. The polarization combining is an inverse process of polarization distribution. It may be understood as that the polarization combining is combining a dual-polarization symbol data stream into one symbol data stream. The data merging is an inverse process of data distribution. It may be understood as that the data merging is merging W data streams into one data stream.

With reference to the accompanying drawings and a plurality of implementations of data distribution (data merging), the following describes a plurality of manners provided in embodiments of this application. In subsequent descriptions, an example in which the data distribution is referred to as wavelength distribution and the data merging is referred to as wavelength merging is used for description.

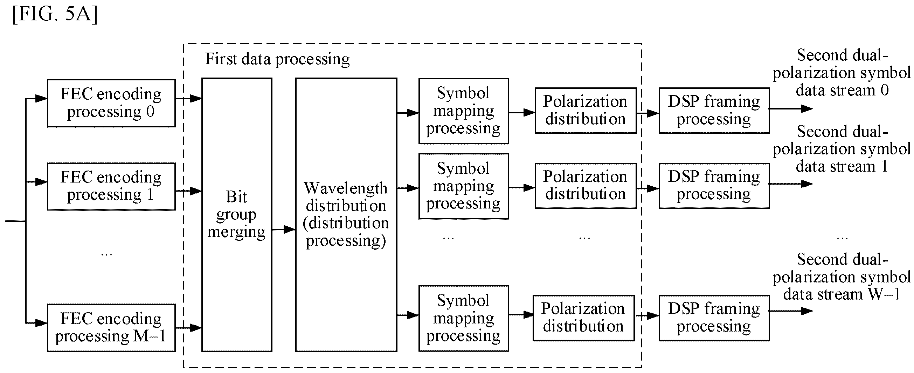

In a first implementation, wavelength distribution is performed before symbol mapping. The wavelength distribution and "bit group merging" are processed separately. FIG. 5A is a schematic flowchart of a data sending method in optical communication according to an embodiment of this application.

A transmitter device performs M paths of parallel FEC encoding processing on a to-be-sent bit data stream, to obtain M first encoded data streams. Then, "bit group merging" is performed on the M first encoded data streams. That is, the M first encoded data streams are merged into a second encoded data stream. Then, distribution processing is performed on the second encoded data stream (in FIG. 5A, wavelength distribution is used as an example), to obtain W third encoded data streams. Every $L_1$ consecutive bits in the second encoded data stream are distributed into one third encoded data stream, where $L_1$ is a positive integer. Symbol mapping processing is performed on each of the W third encoded data streams, to obtain W first symbol data streams; and polarization distribution is performed on each of the W first symbol data streams, to obtain W first dual-polarization symbol data streams. Then, DSP framing processing is performed on each of the W first dual-polarization symbol data streams, to obtain W second dual-polarization symbol data streams, which are a second dual-polarization symbol data stream 0 to a second dual-polarization symbol data stream W-1. Further, the W second dual-polarization symbol data streams may be carried on W paths of optical signals with different wavelengths, and be sent. Alternatively, the W second dual-polarization symbol data streams are sent through W optical fibers respectively. Alternatively, the W second dual-polarization symbol data streams are respectively carried on W subcarriers, digital subcarrier multiplexing is performed to obtain one path of signals, and the path of signals are sent.

In some embodiments, when the M first encoded data streams are merged into the second encoded data stream, $S_0$ consecutive bits may be obtained from each of the M first encoded data streams in a round-robin fashion, and $S_0 \times M$ bits are obtained in total. The $S_0$ bits may alternatively be understood as a bit set. That is, every M consecutive bit sets in the second encoded data stream are from the M first encoded data streams, and each of the M bit sets includes $S_0$ consecutive bits from a same first encoded data stream, where $S_0$ is a positive integer.

Further, when wavelength distribution is performed on the second encoded data stream, every $L_1 = U \times S_0 \times \frac{M}{W}$ bits may be distributed into one third encoded data stream, where U is a positive integer. In other words, $L_1$ is an integer multiple of $S_0 \times \frac{M}{W}$. In an example, $L_1$ is W/2 times of $S_0 \times \frac{M}{W}$. In another example, $L_1$ is W times of $S_0 \times \frac{M}{W}$. That is, $L_1 = S_0 \times M$. For example, $S_0$ may be a multiple of q. For example, $S_0 = q$. For another example, $S_0 = 2 \times q$.

$L_1 = S_0 \times M$ and $S_0 = 2 \times q$ are used as an example to describe a data processing procedure in optical communication.

The to-be-sent bit data stream is input into M FEC encoding processing units, namely, FEC encoding processing 0, FEC encoding processing 1, ..., and FEC encoding processing M-1, in the round-robin (round-robin) fashion.

$W \times (q \times 2)$ bits are obtained from each of the M first encoded data streams output by the M FEC encoding processing units, $W \times (q \times 2) \times M$ bits are obtained in total, and "bit group merging" in FIG. 5A is performed to output one second encoded data stream. Then, "wavelength distribution" processing in FIG. 5A is performed on the second encoded data stream, so that the $W \times (q \times 2) \times M$ bits are distributed in the W third encoded data streams output through the "wavelength distribution", where each output third encoded data stream includes $(q \times 2) \times M$ of the $W \times (q \times 2) \times M$ bits.

For the $(q \times 2) \times M$ bits in each output third encoded data stream, symbol mapping and polarization distribution are performed to obtain M dual-polarization symbols, where $q \times 2$ bits are mapped to one dual-polarization symbol. That is, in one polarization direction, q bits are mapped to one symbol. One to-be-sent second dual-polarization symbol data stream is obtained by performing DSP framing processing on one first dual-polarization symbol data stream output through the polarization distribution.

In an example, specific operations of the "bit group merging" and "wavelength distribution" processing in FIG. 5A are as follows:

The "bit group merging" is obtaining, in the round-robin fashion from the first encoded data streams output by the M FEC encoding processing units, a bit set $v_i^j$ including $q \times 2$ bits, where $0 \le i < M$, and $0 \le j < W$. The bit set $v_i^j$ including the $q \times 2$ bits is a $j^{th}$ group of $q \times 2$ bits obtained from a first encoded data stream output by an $i^{th}$ FEC encoding processing unit. The $W \times (q \times 2) \times M$ bits are obtained in total, namely, $v_0^0, v_1^0, ..., v_{M-1}^0, v_0^1, v_1^1, ..., v_{M-1}^1, v_0^2, v_1^2, ..., v_{M-1}^2, ..., v_0^{W-1}, v_1^{W-1}, ...$, and $v_{M-1}^{W-1}$, and are inut into a "wavelength distribution" unit.

The "wavelength distribution" is outputting the $W \times (q \times 2) \times M$ bits in total, namely, $v_0^0, v_1^0, ..., v_{M-1}^0, v_0^1, v_1^1, ..., v_{M-1}^1, v_0^2, v_1^2, ..., v_{M-1}^2, ..., v_0^{W-1}, v_1^{W-1}, ...$, and $v_{M-1}^{W-1}$, to W output data streams in the round-robin fashion at a granularity of $M \times (q \times 2)$ bits. That is, the $(q \times 2) \times M$ bits $v_0^j, v_1^j, ...$, and $v_{M-1}^j$ are output to a $j^{th}$ ($0 \le j < W$) third encoded data stream.

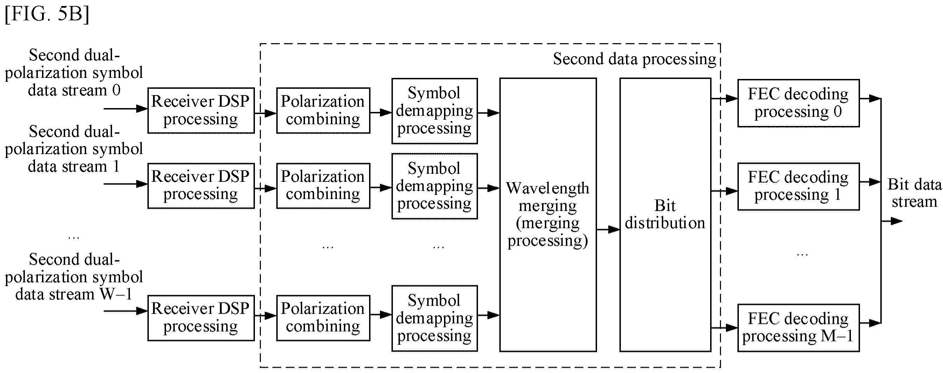

FIG. 5B is a schematic flowchart of a data receiving method in optical communication according to an embodiment of this application. FIG. 5B is an inverse process of the procedure described in FIG. 5A. For corresponding descriptions, refer to the related descriptions in FIG. 5A.

A receiver device receives W second dual-polarization symbol data streams, and performs receiver DSP processing on each of the W second dual-polarization symbol data streams, to obtain W first dual-polarization symbol data streams. Further, polarization combining is performed on each of the W first dual-polarization symbol data streams, to obtain W first symbol data streams. Symbol demapping processing is performed on each of the W first symbol data streams, to obtain W third encoded data streams. q bits are obtained by performing symbol demapping on each symbol in each first symbol data stream. Then, merging processing is performed on the W third encoded data streams, to obtain one second encoded data stream. $L_1$ bits are obtained from each of the W third encoded data streams, to be merged into the second encoded data stream. That is, every $W \times L_1$ bits in the second encoded data stream are from the W third encoded data streams, and every $L_1$ consecutive bits in the $W \times L_1$ bits are from a different third encoded data stream. Further, bit distribution processing is performed on the second encoded data stream, to obtain M first encoded data streams. Then, FEC decoding processing is performed on the M first encoded data streams, to obtain a bit data stream.

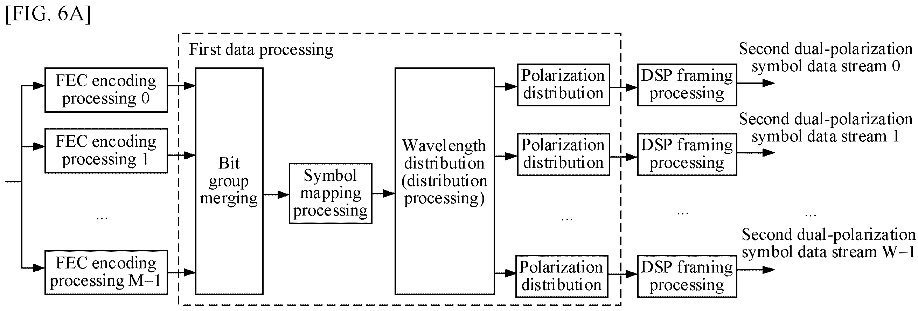

In a second implementation, wavelength distribution is performed after symbol mapping and before polarization distribution. The wavelength distribution and "bit group merging" are processed separately. FIG. 6A is a schematic flowchart of a data sending method in optical communication according to an embodiment of this application.

A transmitter device performs M paths of parallel FEC encoding processing on a to-be-sent bit data stream, to obtain M first encoded data streams. Then, "bit group merging" is performed on the M first encoded data streams. That is, the M first encoded data streams are merged into a second encoded data stream. Then, symbol mapping processing is performed on the second encoded data stream, to obtain a second symbol data stream. Further, the second symbol data stream is distributed, to obtain W third symbol data streams.

Polarization distribution is performed on each of the W third symbol data streams, to obtain W first dual-polarization symbol data streams. Then, DSP framing processing is performed on each of the W first dual-polarization symbol data streams, to obtain W second dual-polarization symbol data streams, which are a second dual-polarization symbol data stream 0 to a second dual-polarization symbol data stream W-1. Further, the W second dual-polarization symbol data streams may be carried on W paths of optical signals with different wavelengths, and be sent. Alternatively, the W second dual-polarization symbol data streams are sent through W optical fibers respectively. Alternatively, the W second dual-polarization symbol data streams are respectively carried on W subcarriers, digital subcarrier multiplexing is performed to obtain one path of signals, and the path of signals are sent.

In some embodiments, every D1 consecutive symbols in the third symbol data stream are obtained by performing symbol mapping processing on $D1 \times q$ bits, where D1 is a positive even number. For example, D1 may alternatively be represented as $2 \times L_2$, where $L_2$ is a positive integer. The $L_2 \times 2 \times q$ bits are from the M first encoded data streams. For example, a quantity of bits that are from each of the M first encoded data streams and that are in the $L_2 \times 2 \times q$ bits is the same. Every $L_2 \times 2 \times q/M$ consecutive bits in the $L_2 \times 2 \times q$ bits are from a same first encoded data stream.

For example, when the M first encoded data streams are merged into the second encoded data stream, $S_0$ consecutive bits may be obtained from each of the M first encoded data streams in a round-robin fashion, and $S_0 \times M$ bits are obtained in total. The $S_0$ bits may alternatively be understood as a bit set. That is, every M consecutive bit sets in the second encoded data stream are from the M first encoded data streams, and each of the M bit sets includes $S_0$ consecutive bits from a same first encoded data stream, where $S_0$ is a positive integer. Further, symbol mapping is performed on every q bits in $S_0 \times M$ consecutive bits in the second encoded data stream, to obtain one symbol. In this case, every $S_0 \times M$ consecutive bits in the second encoded data stream are mapped to $S_0 \times M/q$ symbols in the second symbol data stream. When the second symbol data stream is distributed, every $U \times S_0 \times M/(W \times q)$ consecutive symbols may be distributed into one third symbol data stream. $L_2$ may be an integer multiple of $S_0 \times M/(W \times q)$. In an example, $L_2 = S_0 \times M/q$. The $L_2 \times 2 \times q$ bits include the M bit sets from the M first encoded data streams. For example, $S_0$ may be a multiple of q. For example, $S_0 = q$. For another example, $S_0 = 2 \times q$.

$L_2 = S_0 \times M/q$ and $S_0 = 2 \times q$ are used as an example below to describe a data processing procedure in optical communication.

The to-be-sent bit data stream is input into M FEC encoding processing units, namely, FEC encoding processing 0, FEC encoding processing 1, ..., and FEC encoding processing M-1, in the round-robin (round-robin) fashion.

$W \times (q \times 2)$ bits are obtained from each of the M first encoded data streams output by the M FEC encoding processing units, $W \times (q \times 2) \times M$ bits are obtained in total, and "bit group merging" in FIG. 6A is performed to output one second encoded data stream. Then, symbol mapping processing in FIG. 6A is performed on the second encoded data stream, to map every $q \times 2$ bits in every $W \times (q \times 2) \times M$ bits to two symbols, thereby obtaining $W \times 2 \times M$ symbols. Further, wavelength distribution processing is distributing the $W \times 2 \times M$ symbols into the W third symbol data streams, where $2 \times M$ of the $W \times 2 \times M$ symbols are input into one third symbol data stream.

M dual-polarization symbols are obtained by performing polarization distribution on $2 \times M$ symbols in each third symbol data stream. One to-be-sent dual-polarization symbol data stream is obtained by performing DSP framing processing on one dual-polarization symbol data stream output through the polarization distribution.

In an example, specific operations of the "bit group merging", "symbol mapping", and "wavelength distribution" processing in FIG. 6A are as follows:

The "bit group merging" is obtaining, in the round-robin fashion from the first encoded data streams output by the M FEC encoding processing units, a bit set $v_i^j$ including $q \times 2$ bits, where $0 \leq i < M$, and $0 \leq j < W$. The bit set $v_i^j$ including the $q \times 2$ bits is a $j^{th}$ group of $q \times 2$ bits obtained from a first encoded data stream output by an $i^{th}$ FEC encoding processing unit. The $W \times (q \times 2) \times M$ bits are obtained in total, namely, $v_0^0, v_1^0, ..., v_{M-1}^0, v_0^1, v_1^1, ..., v_{M-1}^1, v_0^2, v_1^2, ..., v_{M-1}^2, ..., v_0^{W-1}, v_1^{W-1}, ..., v_{M-1}^{W-1}$, and are input into a "symbol mapping" unit.

The "symbol mapping" is mapping the $W \times (q \times 2) \times M$ bits in total, namely,

$v_0^0, v_1^0, ..., v_{M-1}^0, v_0^1, v_1^1, ..., v_{M-1}^1, v_0^2, v_1^2, ..., v_{M-1}^2, ..., v_0^{W-1}, v_1^{W-1}, ...$, and $v_{M-1}^{W-1}$ at a granularity of every $q \times 2$ bits $v_i^j$ mapped to a symbol set $g_i^j$ including two symbols, to obtain $W \times M$ symbol sets (including $W \times 2 \times M$ symbols) in total, namely,

$g_0^0, g_1^0, ..., g_{M-1}^0, g_0^1, g_1^1, ..., g_{M-1}^1, g_0^2, g_1^2, ..., g_{M-1}^2, ..., g_0^{W-1}, g_1^{W-1}, ...$, and $g_{M-1}^{W-1}$.

The "wavelength distribution" is inputting the $W \times M$ symbol sets (including the $W \times 2 \times M$ symbols)

$g_0^0, g_1^0, ..., g_{M-1}^0, g_0^1, g_1^1, ..., g_{M-1}^1, g_0^2, g_1^2, ..., g_{M-1}^2, ..., g_0^{W-1}, g_1^{W-1}, ...$, and $g_{M-1}^{W-1}$ into $W$ output symbol data streams in the round-robin fashion at a granularity of $2 \times M$ symbols, where $2 \times M$ symbols $g_0^j, g_1^j, ...$, and $g_{M-1}^j$ are input into a $j^{th}$ third symbol data stream.

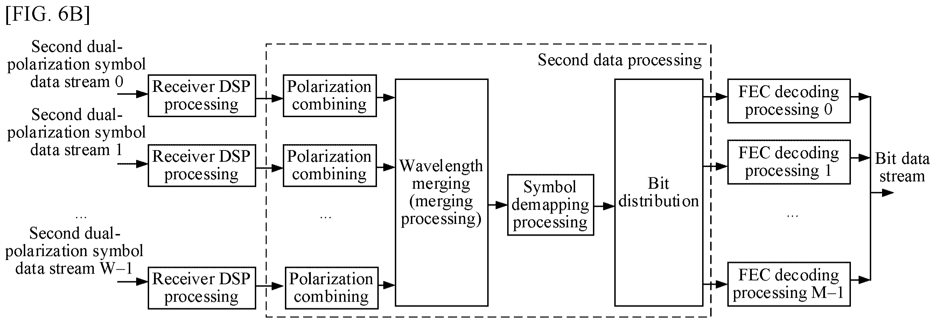

FIG. 6B is a schematic flowchart of a data receiving method in optical communication according to an embodiment of this application. FIG. 6B is an inverse process of the procedure described in FIG. 6A. For corresponding descriptions, refer to the related descriptions in FIG. 6A.

A receiver device receives $W$ second dual-polarization symbol data streams, and performs receiver DSP processing on each of the $W$ second dual-polarization symbol data streams, to obtain $W$ first dual-polarization symbol data streams. Further, polarization combining is performed on each of the $W$ first dual-polarization symbol data streams, to obtain $W$ third symbol data streams. Then, wavelength merging processing is performed on the $W$ third symbol data streams, to obtain one second symbol data stream. Then, symbol demapping processing is performed on the second symbol data stream, to obtain a second encoded data stream. Further, bit distribution processing is performed on the second encoded data stream, to obtain $M$ first encoded data streams. Then, FEC decoding processing is performed on the $M$ first encoded data streams, to obtain a bit data stream.

$D1 \times q$ bits are obtained by performing symbol demapping on every $D1$ consecutive symbols in the third symbol data stream, where $D1$ is a positive even number. $L_2 \times 2 \times q$ bits enter the $M$ first encoded data streams after the bit distribution. For example, a quantity of bits that are input into each of the $M$ first encoded data streams and that are in the $L_2 \times 2 \times q$ bits is the same. Every $L_2 \times 2 \times q/M$ consecutive bits in the $L_2 \times 2 \times q$ bits enter a same first encoded data stream.

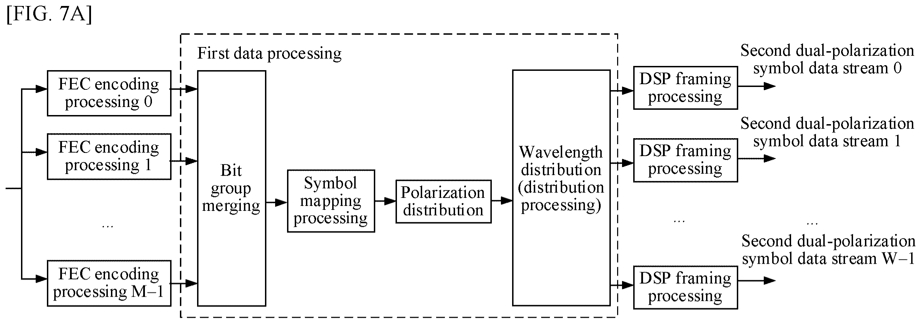

In a third implementation, wavelength distribution is performed after polarization distribution. The wavelength distribution and "bit group merging" are processed separately. FIG. 7A is a schematic flowchart of a data sending method in optical communication according to an embodiment of this application.

A transmitter device performs $M$ paths of parallel FEC encoding processing on a to-be-sent bit data stream, to obtain $M$ first encoded data streams. Then, "bit group merging" is performed on the $M$ first encoded data streams. That is, the $M$ first encoded data streams are merged into a second encoded data stream. Then, symbol mapping processing is performed on the second encoded data stream, to obtain a second symbol data stream. Further, polarization distribution is performed on the second symbol data stream, to obtain a third dual-polarization symbol data stream. Then, distribution processing (the wavelength distribution is used as an example) is performed on the third dual-polarization symbol data stream, to obtain $W$ first dual-polarization symbol data streams.

For example, when the $M$ first encoded data streams are merged into a second encoded data stream, $S_0$ consecutive bits may be obtained from each of the $M$ first encoded data streams in a round-robin fashion, and $S_0 \times M$ bits are obtained in total. The $S_0$ bits may alternatively be understood as a bit set. That is, every $M$ consecutive bit sets in the second encoded data stream are from the $M$ first encoded data streams, and each of the $M$ bit sets includes $S_0$ consecutive bits from a same first encoded data stream, where $S_0$ is a positive integer. Further, symbol mapping is performed on every $q$ bits in $S_0 \times M$ consecutive bits in the second encoded data stream, to obtain one symbol. In this case, every $S_0 \times M$ consecutive bits in the second encoded data stream are mapped to $S_0 \times \frac{M}{q}$ symbols in the second symbol data stream.

When polarization distribution is performed, every two symbols in $S_0 \times M/q$ symbols are distributed as one dual-polarization symbol. That is, each dual-polarization symbol in the third dual-polarization symbol data stream includes two symbols, and the two symbols are distributed into different polarization directions. When wavelength distribution is further performed, every $S_0 \times M/(2 \times q)$ dual-polarization symbols in the third dual-polarization symbol data stream are distributed into one first dual-polarization symbol data stream. For example, in one polarization direction, $P$ consecutive symbols in the first dual-polarization symbol data stream are obtained by performing symbol mapping processing on $q \times P$ bits, and the $q \times P$ bits are from at least two of the $M$ first encoded data streams. $P$ is an integer multiple of $S_0 \times M/(W \times 2 \times q)$. For example, $S_0$ may be a multiple of $q$. For example, $S_0 = q$. For another example, $S_0 = 2 \times q$. For example, if $S_0 = 2 \times q$, and $P=M$, the $q \times P$ bits are from the $M$ first encoded data streams.

$S_0 = 2 \times q$ and $P=M$ are used as an example below to describe the data sending method in optical communication with reference to FIG. 7A.

As shown in FIG. 7A, the to-be-sent bit data stream is input into $M$ FEC encoding processing units, namely, FEC encoding processing 0, FEC encoding processing 1, ..., and FEC encoding processing M-1, in the round-robin (round-robin) fashion.

$W \times (q \times 2)$ bits are obtained from each data stream output by the $M$ FEC processors, and $W \times (q \times 2) \times M$ bits

are obtained in total, and are input into the "bit group merging" for merging processing. $W \times (q \times 2) \times M$ bits output through the merging processing are input into the symbol mapping. Every $q \times 2$ bits are mapped to two symbols, to obtain $W \times 2 \times M$ symbols. The polarization distribution is processing the $W \times 2 \times M$ symbols, to obtain $W \times M$ dual-polarization symbols, and the $W \times M$ dual-polarization symbols are input into the wavelength distribution. The wavelength distribution is distributing the $W \times M$ dual-polarization symbols for input into W output symbol data streams, where M of the $W \times M$ symbols are input into one output dual-polarization symbol data stream. One to-be-sent dual-polarization symbol data stream is obtained by performing DSP framing processing on the dual-polarization symbol data stream output through the wavelength distribution.

It should be noted that, for the "bit group merging" and "symbol mapping" processing in FIG. 7A, refer to the descriptions of the "bit group merging" and the "symbol mapping" in the foregoing second implementation. Specific operations of the "polarization distribution" and the "wavelength distribution" are as follows:

The "polarization distribution" is processing the $W \times 2 \times M$ symbols $g_0^0, g_1^0, ..., g_{M-1}^0, g_0^1, g_1^1, ..., g_{M-1}^1, g_0^2, g_1^2, ..., g_{M-1}^2, ..., g_0^{W-1}, g_1^{W-1}$, ... , and $g_{M-1}^{W-1}$ output through the "symbol mapping", to obtain the $W \times M$ dual-polarization symbols $s_0^0, s_1^0, ..., s_{M-1}^0, s_0^1, s_1^1, ..., s_{M-1}^1, s_0^2, s_1^2, ..., s_{M-1}^2, ..., s_0^{W-1}, s_1^{W-1}$, ... , and $s_{M-1}^{W-1}$, where one dual-polarization symbol $s_i^j$ is obtained by performing polarization distribution on a symbol set $g_i^j$ including two symbols.

The "wavelength distribution" is enabling $W \times M$ dual-polarization symbols $s_0^0, s_1^0, ..., s_{M-1}^0, s_0^1, s_1^1, ..., s_{M-1}^1, s_0^2, s_1^2, ..., s_{M-1}^2, ..., s_0^{W-1}, s_1^{W-1}$, ... , and $s_{M-1}^{W-1}$ to enter the W first dual-polarization symbol data streams in the round-robin fashion at a granularity of M dual-polarization symbols, where the M dual-polarization symbols $s_0^j, s_1^j$, ... , and $s_{M-1}^j$ enter a $j^{th}$ output first dual-polarization symbol data stream.

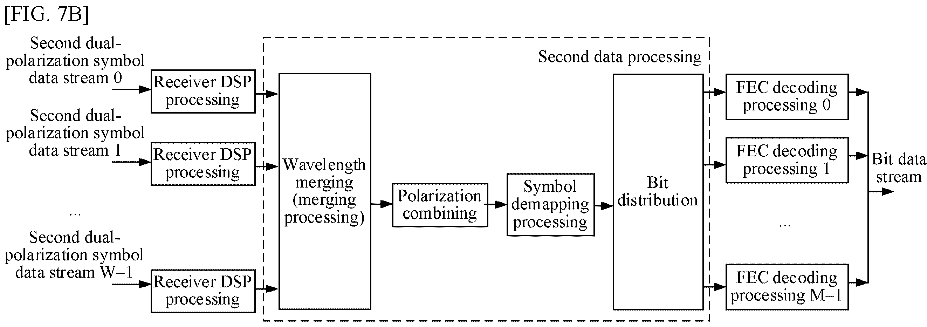

FIG. 7B is a schematic flowchart of a data receiving method in optical communication according to an embodiment of this application. FIG. 7B is an inverse process of the procedure described in FIG. 7A. For corresponding descriptions, refer to the related descriptions in FIG. 7A.

A receiver device receives W second dual-polarization symbol data streams, and performs receiver DSP processing on each of the W second dual-polarization symbol data streams, to obtain W first dual-polarization symbol data streams. Further, merging processing (wavelength merging is used as an example) is performed on each of the W first dual-polarization symbol data streams, to obtain one third dual-polarization symbol data stream. Then, polarization combining is performed on the third dual-polarization symbol data stream, to obtain W second symbol data streams. Then, symbol demapping processing is performed on the W second symbol data streams, to obtain a second encoded data stream. Further, bit distribution processing is performed on the second encoded data stream, to obtain M first encoded data streams. Then, FEC decoding processing is performed on the M first encoded data streams, to obtain a bit data stream.

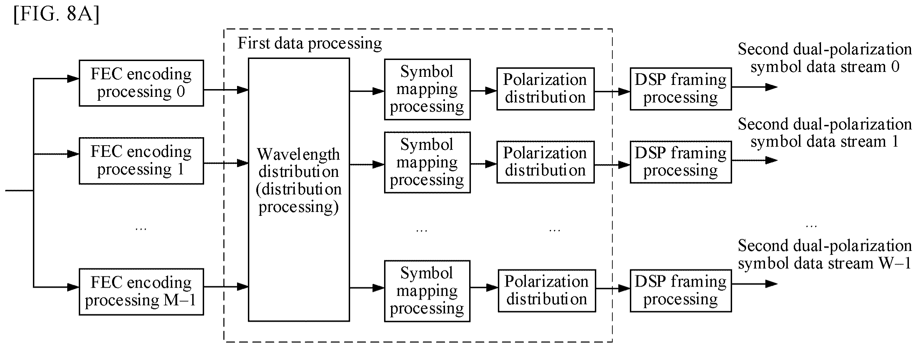

In a fourth implementation, wavelength distribution is performed before symbol mapping. "Bit group merging" is not performed separately. FIG. 8A is a schematic flowchart of a data sending method in optical communication according to an embodiment of this application.

A transmitter device performs M paths of parallel FEC encoding processing on a to-be-sent bit data stream, to obtain M first encoded data streams. Then, wavelength distribution is performed on the M first encoded data streams. That is, the M first encoded data streams may be distributed into W fourth encoded data streams. Further, symbol mapping processing is performed on each of the W fourth encoded data streams, to obtain W fourth symbol data streams. Then, polarization distribution is performed on each of the W fourth symbol data streams, to obtain W first dual-polarization symbol data streams. Then, DSP framing processing is performed on each of the W first dual-polarization symbol data streams, to obtain W second dual-polarization symbol data streams, which are a second dual-polarization symbol data stream 0 to a second dual-polarization symbol data stream W-1. Further, the W second dual-polarization symbol data streams may be carried on W paths of optical signals with different wavelengths, and be sent. Alternatively, the W second dual-polarization symbol data streams are sent through W optical fibers respectively. Alternatively, the W second dual-polarization symbol data streams are respectively carried on W subcarriers, digital subcarrier multiplexing is performed to obtain one path of signals, and the path of signals are sent.

In some embodiments, every $S_1 \times M/W$ consecutive bits in each fourth encoded data stream are from the M first encoded data streams, and a quantity of bits that belong to each of the M first encoded data streams in every $S_1 \times M/W$ consecutive bits in the fourth encoded data stream is the same, where $S_1$ is a positive integer, and $S_1 \times M$ is an integer multiple of W.

In an example, $S_0$ consecutive bits may be obtained from each of the M first encoded data streams in a round-robin fashion, and $S_0 \times M$ bits are obtained in total. The $S_0$ bits may alternatively be understood as a bit set. Then, the bits obtained from each first encoded data stream are distributed into the W fourth encoded data streams. $S_0$ is a positive integer. $S_1$ may be a multiple of $2 \times q$. For example, $S_1 = 2 \times q \times W$, every $2 \times q \times M$ consecutive bits in each fourth encoded data stream include M bit sets, the M bit sets are from different first encoded data streams, and each of the M bit

sets includes $2 \times q$ consecutive bits that belong to a same first encoded data stream.

$S_1 = 2 \times q \times W$ and $S_0 = 2 \times q$ are used as an example to describe a data processing procedure in optical communication.

The to-be-sent bit data stream is input into M FEC encoding processing units, namely, FEC encoding processing 0, FEC encoding processing 1, ..., and FEC encoding processing M-1, in the round-robin (round-robin) fashion.

$W \times (q \times 2)$ bits are obtained from each of the M first encoded data streams output by the M FEC encoding processing units, and $W \times (q \times 2) \times M$ bits are obtained in total. Then, "wavelength distribution" processing in FIG. 8A is performed on the M first encoded data streams, so that the $W \times (q \times 2) \times M$ bits are distributed in the W fourth encoded data streams output through the "wavelength distribution", where each output fourth encoded data stream includes $(q \times 2) \times M$ of the $W \times (q \times 2) \times M$ bits. For the $(q \times 2) \times M$ bits in each output fourth encoded data stream, symbol mapping and polarization distribution are performed to obtain M dual-polarization symbols, where $q \times 2$ bits are mapped to one dual-polarization symbol. That is, in one polarization direction, q bits are mapped to one symbol. One to-be-sent second dual-polarization symbol data stream is obtained by performing DSP framing processing on one first dual-polarization symbol data stream output through the polarization distribution.

In an example, specific operations of the "wavelength distribution" processing in FIG. 8A are as follows: During the "wavelength distribution" processing, $q \times 2$ bits are obtained, in the round-robin fashion, from the M first encoded data streams output through the M paths of FEC encoding processing, to obtain a bit set $v_i^j$, where $0 \le i < M$, and $0 \le j < W$. The bit set $v_i^j$ including the $q \times 2$ bits is a $j^{th}$ bit set that includes the $q \times 2$ bits and that is obtained from a first encoded data stream output through an $i^{th}$ path of FEC encoding processing. The $W \times (q \times 2) \times M$ bits are obtained in total:

$$v_0^0, v_1^0, ..., v_{M-1}^0, v_0^1, v_1^1, ..., v_{M-1}^1, v_0^2, v_1^2, ..., v_{M-1}^2, ..., v_0^{W-1}, v_1^{W-1}, ..., \text{ and } v_{M-1}^{W-1}.$$

Then, output to the W fourth encoded data streams is performed in the round-robin fashion at a granularity of $M \times (q \times 2)$ bits. That is, the $(q \times 2) \times M$ bits $v_0^0, v_1^0, ...,$ and $v_{M-1}^0$ are output to a $j^{th}$ $(0 \le j < W)$ fourth encoded data stream.

A difference between FIG. 8A and FIG. 5A lies in that, after a bit set is obtained, in the round-robin fashion, from the M first encoded data streams output through the M paths of FEC encoding processing, the bit set is not merged into one encoded data stream, but is directly distributed into W encoded data streams according to a rule.

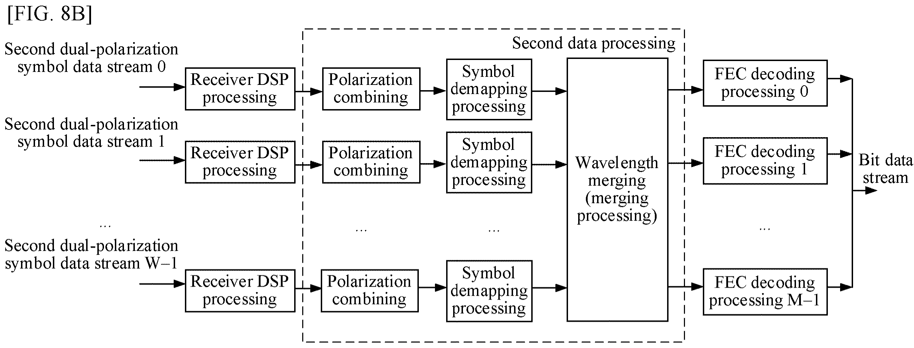

FIG. 8B is a schematic flowchart of a data receiving method in optical communication according to an embodiment of this application. FIG. 8B is an inverse process of the procedure described in FIG. 8A. For corresponding descriptions, refer to the related descriptions in FIG. 8A.

A receiver device receives W second dual-polarization symbol data streams, and performs receiver DSP processing on each of the W second dual-polarization symbol data streams, to obtain W first dual-polarization symbol data streams. Further, polarization combining is performed on each of the W first dual-polarization symbol data streams, to obtain W fourth symbol data streams. Symbol demapping processing is performed on each of the W fourth symbol data streams, to obtain W fourth encoded data streams. q bits are obtained by performing symbol demapping on each symbol in each fourth symbol data stream. Then, wavelength merging processing is performed on the W fourth encoded data streams, to obtain M first encoded data streams. Then, FEC decoding processing is performed on the M first encoded data streams, to obtain a bit data stream.

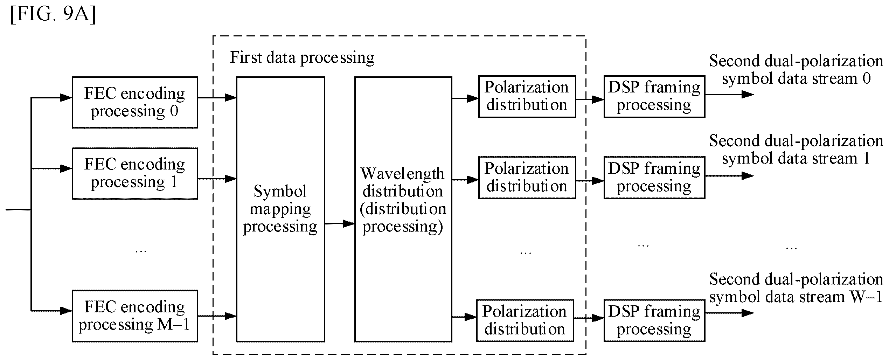

In a fifth implementation, wavelength distribution is performed after symbol mapping and before polarization distribution. "Bit group merging" is not performed separately. FIG. 9A is a schematic flowchart of a data sending method in optical communication according to an embodiment of this application.

A transmitter device performs M paths of parallel FEC encoding processing on a to-be-sent bit data stream, to obtain M first encoded data streams. Then, symbol mapping processing is performed on the M first encoded data streams, to obtain one fifth symbol data stream. Then, distribution processing is performed on the fifth symbol data stream, to obtain W sixth symbol data streams. Further, polarization distribution is performed on the W sixth symbol data streams, to obtain W first dual-polarization symbol data streams. Then, DSP framing processing is performed on each of the W first dual-polarization symbol data streams, to obtain W second dual-polarization symbol data streams, which are a second dual-polarization symbol data stream 0 to a second dual-polarization symbol data stream W-1. Further, the W second dual-polarization symbol data streams may be carried on W paths of optical signals with different wavelengths, and be sent. Alternatively, the W second dual-polarization symbol data streams are sent through W optical fibers respectively. Alternatively, the W second dual-polarization symbol data streams are respectively carried on W subcarriers, digital subcarrier multiplexing is performed to obtain one path of signals, and the path of signals are sent.

In some embodiments, every $2 \times P$ consecutive symbols in the fifth symbol data stream are obtained by performing symbol mapping processing on $2 \times P \times q$ bits, and the $2 \times P \times q$ bits are from at least two of the M first encoded data streams. Every $2 \times P \times Z/W$ consecutive symbols in $2 \times P \times Z$ consecutive symbols in the fifth symbol data stream are distributed into one sixth symbol data stream, where $2 \times P \times Z$ is an integer multiple of W, and Z is a positive integer.

For example, P=M/2, Z=W, and $M \times q$ bits that are mapped to M consecutive symbols in the fifth symbol data stream are from the M first encoded data streams. Every q/2 consecutive bits in the M $\times$ q bits are from a same first encoded data stream.

For example, P=M, Z=W/2, and 2 $\times$ M $\times$ q bits that are mapped to 2 $\times$ P consecutive symbols in the fifth symbol data stream are from the M first encoded data streams. Every q/2 consecutive bits in the M $\times$ q bits are from a same first encoded data stream.

For example, P=M, Z=W, and 2 $\times$ M $\times$ q bits that are mapped to 2 $\times$ P consecutive symbols in the fifth symbol data stream are from the M first encoded data streams. Every 2 $\times$ q bits in the 2 $\times$ M $\times$ q bits are from a same first encoded data stream.

P=M and Z=W are used as an example to describe a data processing procedure in optical communication.

The to-be-sent bit data stream is input into M FEC encoding processing units, namely, FEC encoding processing 0, FEC encoding processing 1, ..., and FEC encoding processing M-1, in a round-robin (round-robin) fashion.

W $\times$ (q $\times$ 2) bits are obtained from each of the M first encoded data streams output by the M FEC encoding processing units, and W $\times$ (q $\times$ 2) $\times$ M bits are obtained in total. Through the symbol mapping processing in FIG. 9A, every q $\times$ 2 bits in every W $\times$ (q $\times$ 2) $\times$ M bits are mapped to two symbols, to obtain W $\times$ 2 $\times$ M symbols. Further, wavelength distribution processing is distributing the W $\times$ 2 $\times$ M symbols into the W sixth symbol data streams, where 2 $\times$ M of the W $\times$ 2 $\times$ M symbols are input into one sixth symbol data stream. M dual-polarization symbols are obtained by performing polarization distribution on 2 $\times$ M symbols in each sixth symbol data stream. One to-be-sent dual-polarization symbol data stream is obtained by performing DSP framing processing on one dual-polarization symbol data stream output through the polarization distribution.

In an example, "bit group merging" processing is merged into the "symbol mapping" processing. As shown in FIG. 9A, the "symbol mapping" processing is obtaining, in the round-robin fashion from the first encoded data streams output through the M paths of FEC encoding processing, a bit set $v_i^j$ including q $\times$ 2 consecutive bits, where $0 \le i < M$, and $0 \le j < W$. The bit set $v_i^j$ including the q $\times$ 2 bits is a $j^{th}$ bit set that includes q $\times$ 2 bits and that is obtained from a data stream output by an $i^{th}$ FEC processor. The W $\times$ (q $\times$ 2) $\times$ M bits are obtained in total:

$$v_0^0, v_1^0, ..., v_{M-1}^0, v_0^1, v_1^1, ..., v_{M-1}^1, v_0^2, v_1^2, ..., v_{M-1}^2, ..., v_0^{W-1}, v_1^{W-1}, ..., \text{ and } v_{M-1}^{W-1}.$$ Then, every q $\times$ 2 bits $v_i^j$ are mapped to a symbol set $g_i^j$ including two symbols, to obtain W $\times$ M symbol sets (including W $\times$ 2 $\times$ M symbols) in total, namely,

$$g_0^0, g_1^0, ..., g_{M-1}^0, g_0^1, g_1^1, ..., g_{M-1}^1, g_0^2, g_1^2, ..., g_{M-1}^2, ..., g_0^{W-1}, g_1^{W-1}, ..., \text{ and } g_{M-1}^{W-1}.$$

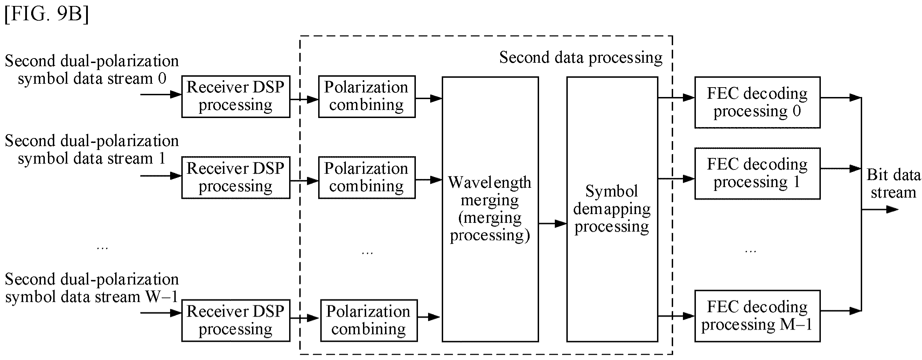

FIG. 9B is a schematic flowchart of a data receiving method in optical communication according to an embodiment of this application. FIG. 9B is an inverse process of the procedure described in FIG. 9A. For corresponding descriptions, refer to the related descriptions in FIG. 9A.

A receiver device receives W second dual-polarization symbol data streams. Then, receiver DSP processing is performed on each of the W second dual-polarization symbol data streams, to obtain W first dual-polarization symbol data streams. Further, polarization combining is performed on the W first dual-polarization symbol data streams, to obtain W sixth symbol data streams. Then, merging processing is performed on the W sixth symbol data streams, to obtain one fifth symbol data stream. Then, symbol demapping is performed on the fifth symbol data stream, and output to M first encoded data streams is performed. Then, FEC decoding processing is performed on the M first encoded data streams, to obtain a bit data stream.

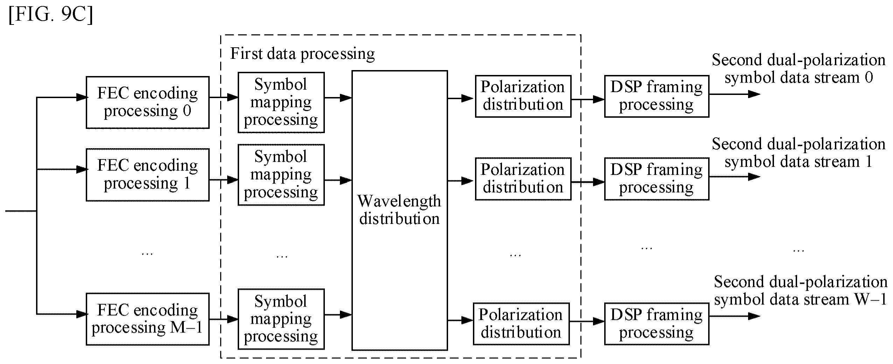

FIG. 9C shows another specific implementation of "wavelength distribution is performed after symbol mapping and before polarization distribution". A transmitter device performs M paths of parallel FEC encoding processing on a to-be-sent bit data stream, to obtain M first encoded data streams. Then, symbol mapping processing is performed on each of the M first encoded data streams, to obtain M eleventh symbol data streams. Then, wavelength distribution (which is also referred to as distribution processing) is performed on the M eleventh symbol data streams, to obtain W sixth symbol data streams. Further, polarization distribution is performed on the W sixth symbol data streams, to obtain W first dual-polarization symbol data streams. Then, DSP framing processing is performed on each of the W first dual-polarization symbol data streams, to obtain W second dual-polarization symbol data streams, which are a second dual-polarization symbol data stream 0 to a second dual-polarization symbol data stream W-1. Further, the W second dual-polarization symbol data streams may be carried on W paths of optical signals with different wavelengths, and be sent. Alternatively, the W second dual-polarization symbol data streams are sent through W optical fibers respectively. Alternatively, the W second dual-polarization symbol data streams are respectively carried on W subcarriers, digital subcarrier multiplexing is performed to obtain one path of signals, and the path of signals are sent.

In some embodiments, every $S_1 \times$ M/W consecutive symbols in each sixth symbol data stream are from the M eleventh symbol data streams, and a quantity of symbols that belong to each of the M eleventh symbol data streams in every $S_1 \times$ M/W consecutive symbols in the sixth symbol data stream is the same. $S_1$ is a positive integer, and $S_1 \times$ M is an integer multiple of W.

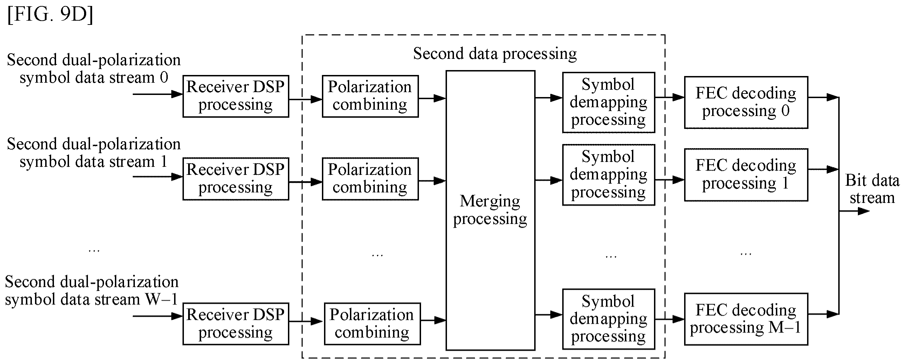

FIG. 9D is a schematic flowchart of a data receiving method in optical communication according to an embodiment of this application. FIG. 9D is an inverse process of the procedure described in FIG. 9C. For corresponding descriptions, refer to the related descriptions in FIG. 9C.

A receiver device receives W second dual-polarization symbol data streams. Then, receiver DSP processing is performed on each of the W second dual-polarization symbol data streams, to obtain W first dual-polarization symbol data streams. Further, polarization combining is performed on the W first dual-polarization symbol data streams, to obtain W sixth symbol data streams. Then, merging processing is performed on the W sixth symbol data streams, to obtain M eleventh symbol data streams. Then, symbol demapping processing is performed on the M eleventh symbol data streams, and output to M first encoded data streams is performed. Then, FEC decoding processing is performed on the M first encoded data streams, to obtain a bit data stream.

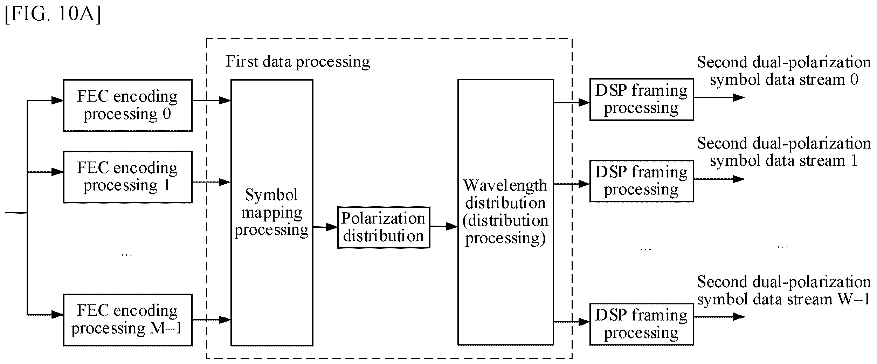

In a sixth implementation, wavelength distribution is performed after polarization distribution. "Bit group merging" is not performed separately. FIG. 10A is a schematic flowchart of a data sending method in optical communication according to an embodiment of this application.

A transmitter device performs M paths of parallel FEC encoding processing on a to-be-sent bit data stream, to obtain M first encoded data streams. Then, symbol mapping processing is performed on the M first encoded data streams, to obtain one fifth symbol data stream. Then, polarization distribution is performed on the fifth symbol data stream, to obtain a fourth dual-polarization symbol data stream; and distribution processing is performed on the fourth dual-polarization symbol data stream, to obtain W first dual-polarization symbol data streams.

In some embodiments, every $2 \times P$ consecutive symbols in the fifth symbol data stream are obtained by performing symbol mapping processing on $2 \times P \times q$ bits, the $2 \times P \times q$ bits are from at least two of the M first encoded data streams, and a quantity of bits that belong to each of the M first encoded data streams and that are in the $2 \times P \times q$ bits is the same. Every $P \times Z/W$ consecutive dual-polarization symbols in $P \times Z$ consecutive dual-polarization symbols in the fourth dual-polarization symbol data stream are distributed into one sixth symbol data stream, where $P \times Z$ is an integer multiple of W, and Z is a positive integer.

For example, P=M, Z=W, and $2 \times M \times q$ bits that are mapped to $2 \times P$ consecutive symbols in the fifth symbol data stream are from the M first encoded data streams. Every $2 \times q$ bits in the $2 \times M \times q$ bits are from a same first encoded data stream.

P=M and Z=W are used as an example to describe a data processing procedure in optical communication.

The to-be-sent bit data stream is input into M FEC encoding processing units, namely, FEC encoding processing 0, FEC encoding processing 1, ..., and FEC encoding processing M-1, in a round-robin (round-robin) fashion.

$W \times (q \times 2)$ bits are obtained from each of the M first encoded data streams output by the M FEC encoding processing units, and $W \times (q \times 2) \times M$ bits are obtained in total. Through the symbol mapping processing in FIG. 10A, every $q \times 2$ bits in every $W \times (q \times 2) \times M$ bits are mapped to two symbols, to obtain $W \times 2 \times M$ symbols. Further, the polarization distribution processing is distributing the $W \times 2 \times M$ symbols as $W \times M$ dual-polarization symbols. The $W \times M$ dual-polarization symbols are distributed into the W first dual-polarization symbol data streams through wavelength distribution. M dual-polarization symbols are distributed into each first dual-polarization symbol data stream. $(q \times 2) \times M$ bits mapped to the M dual-polarization symbols are from the M first encoded data streams.

In an example, for the "symbol mapping" processing in FIG. 10A, refer to the specific descriptions of the "symbol mapping" in FIG. 9A in the foregoing fifth implementation. Details are not described herein again.

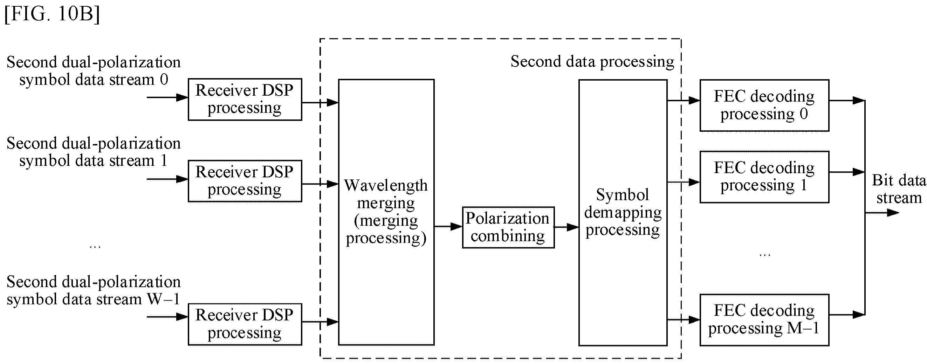

FIG. 10B is a schematic flowchart of a data receiving method in optical communication according to an embodiment of this application. FIG. 9B is an inverse process of the procedure described in FIG. 9A. For corresponding descriptions, refer to the related descriptions in FIG. 10A.

A receiver device receives W second dual-polarization symbol data streams. Then, receiver DSP deframing processing is performed on each of the W second dual-polarization symbol data streams, to obtain W first dual-polarization symbol data streams. Further, merging processing is performed on the W first dual-polarization symbol data streams, to obtain one fourth dual-polarization symbol data stream. Then, polarization combining is performed on the fourth dual-polarization symbol data stream, to obtain a fifth symbol data stream. Then, symbol demapping is performed on the fifth symbol data stream, and output to M first encoded data streams is performed. Then, FEC decoding processing is performed on the M first encoded data streams, to obtain a bit data stream.

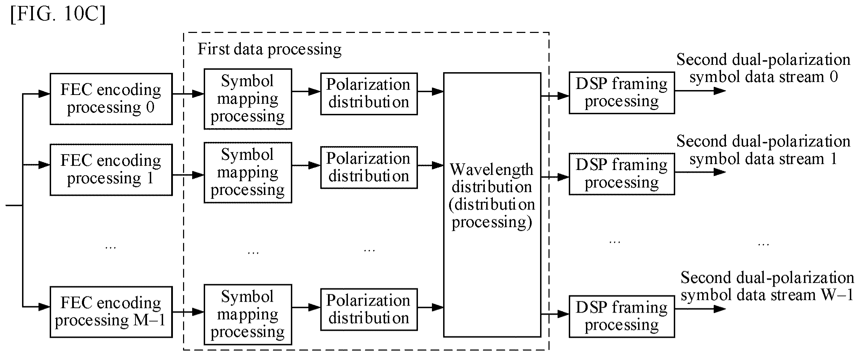

FIG. 10C shows another specific implementation of "wavelength distribution is performed after polarization distribution". A transmitter device performs M paths of parallel FEC encoding processing on a to-be-sent bit data stream, to obtain M first encoded data streams. Then, symbol mapping processing is performed on each of the M first encoded data streams, to obtain M eleventh symbol data streams. Then, polarization distribution is performed on each of the M eleventh symbol data streams, to obtain M seventh dual-polarization symbol data streams; and distribution processing is performed on the M seventh dual-polarization symbol data streams, to obtain W first dual-polarization symbol data streams. Then, DSP framing processing is performed on each of the W first dual-polarization symbol data streams, to obtain W second dual-polarization symbol data streams, which are a second dual-polarization symbol data stream 0 to a second dual-polarization symbol data stream W-1. Further, the W second dual-polarization symbol data streams may be carried on W paths of optical signals with different wavelengths, and be sent. Alternatively, the W second dual-polarization symbol data streams are sent through W optical fibers respectively. Alternatively, the W second dual-polarization symbol data streams are respectively carried on W subcarriers, digital subcarrier multiplexing is performed to obtain one path of signals, and the path of signals are sent.

In some embodiments, every $S_1 \times M/W$ consecutive symbols in each first dual-polarization symbol data stream are from the M seventh dual-polarization symbol data streams, and a quantity of symbols that belong to each of the M seventh dual-polarization symbol data streams in every $S_1 \times M/W$ consecutive symbols in the first dual-polarization symbol data stream is the same, where $S_1$ is a positive integer, and $S_1 \times M$ is an integer multiple of W.

In some embodiments, the M seventh dual-polarization symbol data streams, namely, a seventh dual-polarization symbol data stream 0 to a seventh dual-polarization symbol data stream M-1, are obtained through the polarization distribution processing. The wavelength distribution (which is also referred to as the distribution processing) is obtaining W dual-polarization symbols from each seventh dual-polarization symbol data stream, that is, obtaining W dual-polarization symbols $s_0^j, s_1^j, \ldots,$ and $s_{W-1}^j$ from a seventh dual-polarization symbol data stream j, where $0 \le j < M$. $M \times W$ dual-polarization symbols are obtained in total. The wavelength distribution is outputting the $M \times W$ dual-polarization symbols to the W output first dual-polarization symbol data streams, where M dual-polarization symbols are output to one output first dual-polarization symbol data stream. In a specific implementation, M dual-polarization symbols $s_k^0, s_k^1, \ldots,$ and $s_k^{M-1}$ in the $M \times W$ dual-polarization symbols are output to a first dual-polarization symbol data stream k, where $0 \le k < W$.

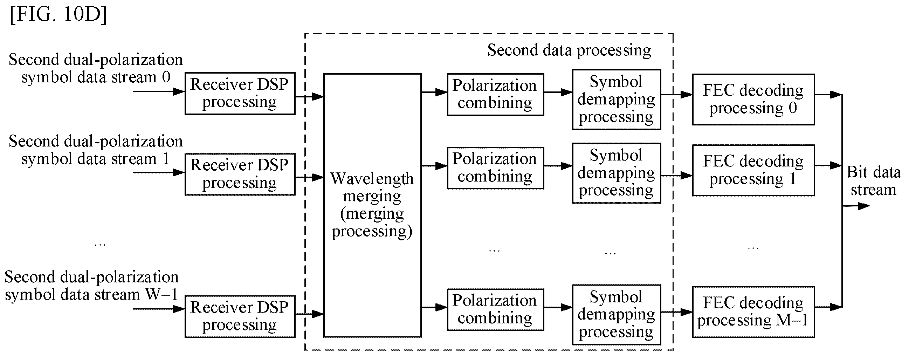

FIG. 10D is a schematic flowchart of a data receiving method in optical communication according to an embodiment of this application. FIG. 10D is an inverse process of the procedure described in FIG. 10C. For corresponding descriptions, refer to the related descriptions in FIG. 10C.

A receiver device receives W second dual-polarization symbol data streams. Then, receiver DSP deframing processing is performed on each of the W second dual-polarization symbol data streams, to obtain W first dual-polarization symbol data streams. Further, merging processing is performed on the W first dual-polarization symbol data streams, to obtain M seventh dual-polarization symbol data streams. Then, polarization combining is performed on the M seventh dual-polarization symbol data streams, to obtain M eleventh symbol data streams. Then, symbol demapping is performed on the M eleventh symbol data streams, and output to M first encoded data streams is performed. Then, FEC decoding processing is performed on the M first encoded data streams, to obtain a bit data stream.

In some possible implementation scenarios, M satisfies a case in which M is an integer multiple of W. Further, in a process of performing subsequent first data processing on the M first encoded data streams obtained through FEC encoding processing, the M first encoded data streams may be first merged into W data streams, and then subsequent processing, for example, exchange processing between the W data streams, is performed, to finally obtain the W first dual-polarization symbol data streams. It should be noted that, in some descriptions, the exchange processing may also be referred to as another name, for example, data exchange processing, data interleaving processing, or permutation (permutation) processing. This is not specifically limited herein. In subsequent descriptions of this application, the exchange processing is used as an example for description. The following describes several possible implementations by using examples.

In a seventh implementation, an example in which wavelength distribution is performed before symbol mapping is used. The wavelength distribution and "bit group merging" are processed separately. M=b×W. b is an integer greater than 1.

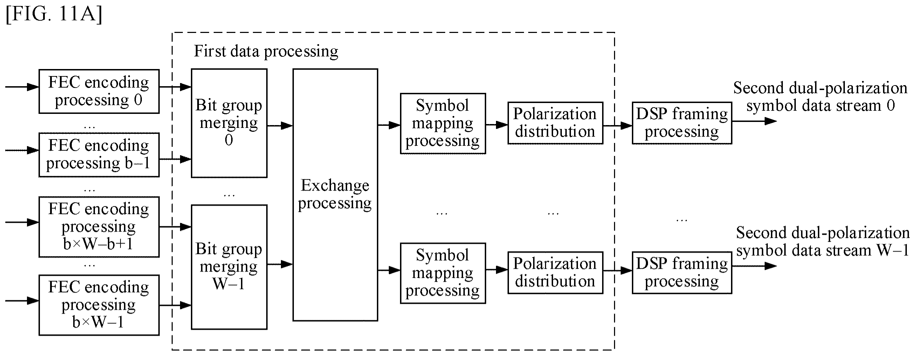

FIG. 11A is a schematic flowchart of a data sending method in optical communication according to an embodiment of this application.

A transmitter device performs M paths of parallel FEC encoding processing on one or more bit data streams, to obtain b×W first encoded data streams. In FIG. 11A, one bit data stream is used as an example. "Bit group merging" is performed on every b first encoded data streams in the b×W first encoded data streams, to obtain W sixth encoded data streams. Then, exchange processing is performed on the W sixth encoded data streams, to obtain W seventh encoded data streams. Each of the W sixth encoded data streams includes only bits of the b first encoded data streams. Through the exchange processing, each of the W sixth encoded data streams may include bits of the b×W first encoded data streams. It may be understood as that, through the exchange, the bits of the b×W first encoded data streams are evenly allocated to the W seventh encoded data streams. Further, symbol mapping processing is performed on each of the W seventh encoded data streams, to obtain W sixth symbol data streams; and polarization distribution is performed on each of the W sixth symbol data streams, to obtain W first dual-polarization symbol data streams. Then, DSP framing processing is performed on each of the W first dual-polarization symbol data streams, to obtain W second dual-polarization symbol data streams, which are a second dual-polarization symbol data stream 0 to a second dual-polarization symbol data stream W-1. Further, the W second dual-polarization symbol data streams may be carried on W paths of optical signals with different wavelengths, and be sent. Alternatively, the W second dual-polarization symbol data streams are sent through W optical fibers respectively. Alternatively, the W second dual-polarization symbol data streams are respectively carried on W subcarriers, digital subcarrier multiplexing is performed to obtain one path of signals, and the path of signals are sent.

In some embodiments, every $L_3$ consecutive bits in each seventh encoded data stream are from the $b \times W$ first encoded data streams, where $L_3$ is a positive integer.

For example, every b consecutive bit sets in each sixth encoded data stream are from the b first encoded data streams, and each of the b bit sets includes $S_0$ consecutive bits from a same first encoded data stream, where $S_0$ is a positive integer. $L_3$ is an integer multiple of $S_0 \times a$. For example, $L_3$ is W times of $S_0 \times a$. $S_0$ is an integer multiple of q, for example, $S_0 = 2 \times q$.

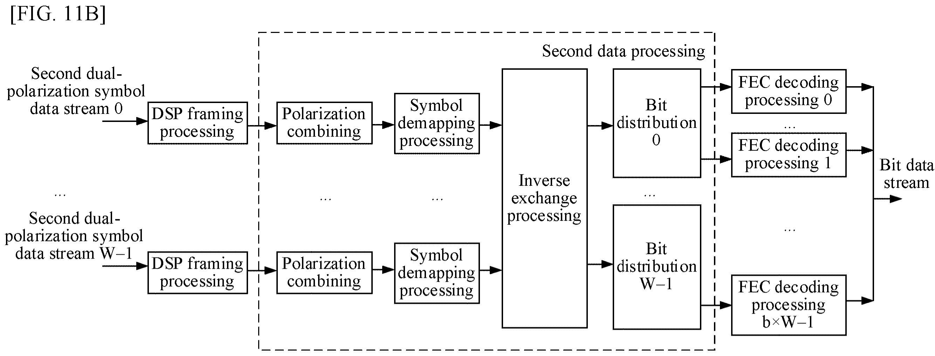

FIG. 11B is a schematic flowchart of a data receiving method in optical communication according to an embodiment of this application.

A receiver device performs polarization distribution on W first dual-polarization symbol data streams, to obtain W sixth symbol data streams; then performs symbol demapping processing on the W sixth symbol data streams, to obtain W seventh encoded data streams; further, performs inverse exchange processing on the W seventh encoded data streams, to obtain W sixth encoded data streams; then performs bit distribution on the W sixth encoded data streams, to obtain $b \times W$ first encoded data streams, where each sixth encoded data stream is distributed into b first encoded data streams; and then performs FEC decoding processing on each of the $b \times W$ first encoded data streams, to obtain one or more bit data streams.

In an eighth implementation, wavelength distribution is performed after symbol mapping and before polarization distribution. The wavelength distribution and "bit group merging" are processed separately. $M = b \times W$. b is an integer greater than 1.

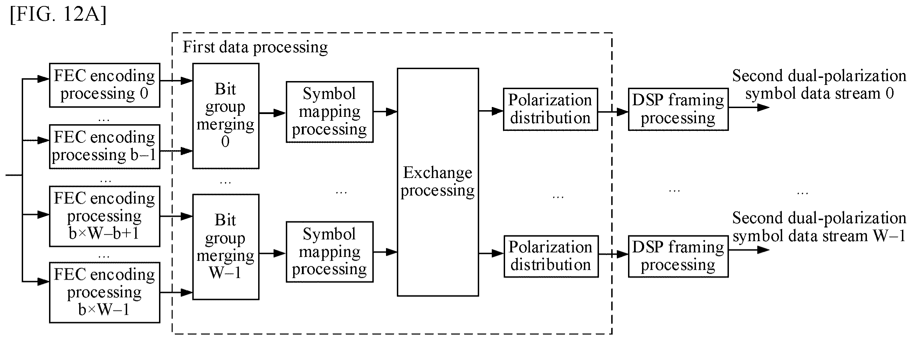

A transmitter device performs M paths of parallel FEC encoding processing on one or more bit data streams, to obtain $b \times W$ first encoded data streams. In FIG. 12A, one bit data stream is used as an example. "Bit group merging" is performed on every b first encoded data streams in the $b \times W$ first encoded data streams, to obtain W sixth encoded data streams. Then, symbol mapping processing is performed on each of the W sixth encoded data streams, to obtain W seventh symbol data streams. Then, exchange processing is performed on the W seventh symbol data streams to obtain W eighth symbol data streams. Each of the W seventh symbol data streams includes only bits of the b first encoded data streams. Then, exchange processing is performed on the W seventh symbol data streams, to obtain the W eighth symbol data streams. Through the exchange processing, each of the W eighth symbol data streams may include bits of the $b \times W$ first encoded data streams. It may be understood as that, through the exchange, the bits of the $b \times W$ first encoded data streams are evenly allocated to the W eighth symbol data streams. Further, polarization distribution is performed on each of the W eighth symbol data streams, to obtain W first dual-polarization symbol data streams. Then, DSP framing processing is performed on each of the W first dual-polarization symbol data streams, to obtain W second dual-polarization symbol data streams, which are a second dual-polarization symbol data stream 0 to a second dual-polarization symbol data stream W-1. Further, the W second dual-polarization symbol data streams may be carried on W paths of optical signals with different wavelengths, and be sent. Alternatively, the W second dual-polarization symbol data streams are sent through W optical fibers respectively. Alternatively, the W second dual-polarization symbol data streams are respectively carried on W subcarriers, digital subcarrier multiplexing is performed to obtain one path of signals, and the path of signals are sent.

In some embodiments, every D1 consecutive symbols in the eighth symbol data stream are obtained by performing symbol mapping processing on $D1 \times q$ bits. D1 is a positive even number. For example, D1 may alternatively be represented as $2 \times L_4$, where $L_4$ is a positive integer. The $L_4 \times 2 \times q$ bits are from the $b \times W$ first encoded data streams. For example, a quantity of bits that are from each of the $b \times W$ first encoded data streams and that are in the $L_4 \times 2 \times q$ bits is the same. Every $L_4 \times 2 \times q/(b \times W)$ consecutive bits in the $L_4 \times 2 \times q$ bits are from a same first encoded data stream.

For example, when the b first encoded data streams are merged into one sixth encoded data stream, $S_0$ consecutive bits may be obtained from each of the b first encoded data streams in a round-robin fashion, and $S_0 \times b$ bits are obtained in total. The $S_0$ bits may alternatively be understood as a bit set. That is, every b consecutive bit sets in the sixth encoded data stream are from the b first encoded data streams, and each of the b bit sets includes $S_0$ consecutive bits from a same first encoded data stream, where $S_0$ is a positive integer. Further, symbol mapping is performed on every q bits in $S_0 \times M$ consecutive bits in the sixth encoded data stream, to obtain one symbol. In this case, every $S_0 \times b \times W$ consecutive bits in the sixth encoded data stream are mapped to $S_0 \times b \times W/q$ symbols in the seventh symbol data stream. $U \times S_0 \times b/q$ consecutive symbols in the eighth symbol data stream are from the W seventh symbol data streams. $L_4$ may be an integer multiple of $S_0 \times b/q$. In an example, $L_2 = S_0 \times b \times W/q$, and the $L_4 \times 2 \times q$ bits include the $b \times W$ bit sets from the $b \times W$ first encoded data streams. For example, $S_0$ may be a multiple of q. For example, $S_0 = q$. For another example, $S_0 = 2 \times q$.

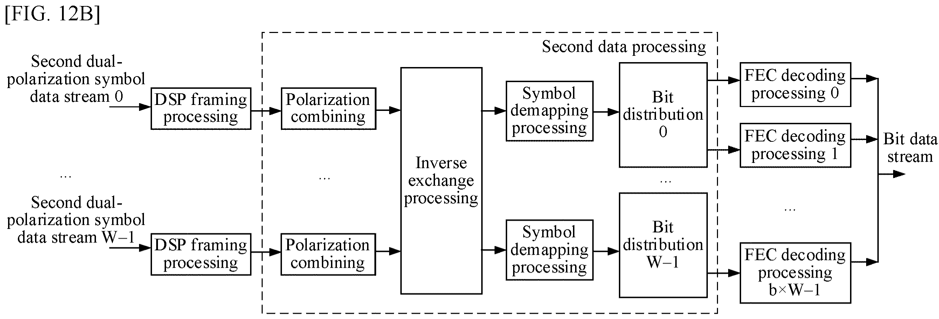

FIG. 12B is a schematic flowchart of a data receiving method in optical communication according to an embodiment of this application. FIG. 12B is an inverse process of the procedure described in FIG. 12A. For corresponding descriptions, refer to the related descriptions in FIG. 12A.

A receiver device receives W second dual-polarization symbol data streams, and performs receiver DSP processing on each of the W second dual-polarization symbol data streams, to obtain W first dual-polarization symbol data streams; performs polarization combining on the W first dual-polarization symbol data streams, to obtain W eighth symbol data streams; performs inverse exchange processing on the W eighth symbol data streams, to obtain W seventh symbol data streams; then performs symbol demapping processing on each of the W seventh symbol data streams, to obtain W sixth encoded data streams; further, performs bit distribution on the W sixth encoded data streams, to obtain $b\times W$ first encoded data streams, where bit distribution is performed on each of the W sixth encoded data streams, to obtain b first encoded data streams; and then performs FEC decoding processing on the $b\times W$ first encoded data streams, to obtain one or more bit data streams.

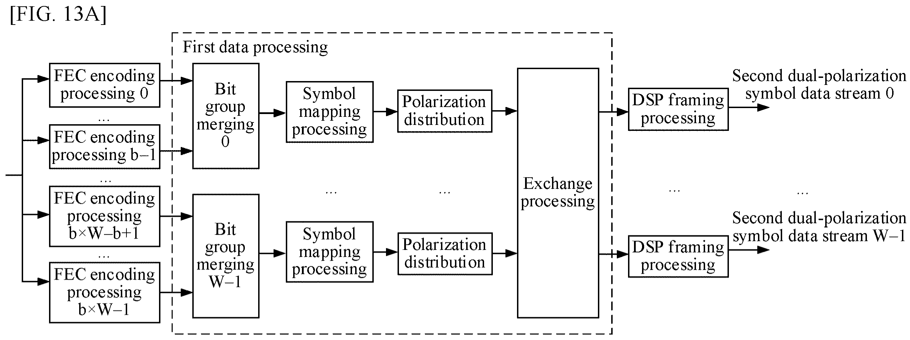

In a ninth implementation, wavelength distribution is performed after polarization distribution. The wavelength distribution and "bit group merging" are processed separately. $M=b\times W$. FIG. 13A is a schematic flowchart of a data sending method in optical communication according to an embodiment of this application.

A transmitter device performs $b\times W$ paths of parallel FEC encoding processing on one or more (for example, $b\times W$) to-be-sent bit data streams, to obtain $b\times W$ first encoded data streams; then performs "bit group merging" on every b first encoded data streams in the $b\times W$ first encoded data streams, to obtain one sixth encoded data stream, thereby obtaining W sixth encoded data streams; then performs symbol mapping processing on each of the W sixth encoded data streams, to obtain W seventh symbol data streams; further, performs polarization distribution on each of the W seventh symbol data streams, to obtain W fifth dual-polarization symbol data streams; then performs exchange processing on the W fifth dual-polarization symbol data streams, to obtain W first dual-polarization symbol data streams; and then performs DSP framing processing on each of the W first dual-polarization symbol data streams, to obtain W second dual-polarization symbol data streams, which are a second dual-polarization symbol data stream 0 to a second dual-polarization symbol data stream W-1. Further, the W second dual-polarization symbol data streams may be carried on W paths of optical signals with different wavelengths, and be sent. Alternatively, the W second dual-polarization symbol data streams are sent through W optical fibers respectively. Alternatively, the W second dual-polarization symbol data streams are respectively carried on W subcarriers, digital subcarrier multiplexing is performed to obtain one path of signals, and the path of signals are sent.

For example, when the b first encoded data streams are merged into one sixth encoded data stream, $S_0$ consecutive bits may be obtained from each of the b first encoded data streams in a round-robin fashion, and $S_0 \times b$ bits are obtained in total. The $S_0$ bits may alternatively be understood as a bit set. That is, every b consecutive bit sets in the sixth encoded data stream are from the b first encoded data streams, and each of the b bit sets includes $S_0$ consecutive bits from a same first encoded data stream, where $S_0$ is a positive integer. Further, symbol mapping is performed on every q bits in $S_0 \times M$ consecutive bits in the sixth encoded data stream, to obtain one symbol. In this case, every $S_0 \times M$ consecutive bits in the sixth encoded data stream are mapped to $S_0 \times \dfrac{b}{q}$ symbols in the seventh symbol data stream. When polarization distribution is performed, every two symbols in $S_0 \times b/q$ symbols are distributed as one dual-polarization symbol. That is, each dual-polarization symbol in the fifth dual-polarization symbol data stream includes two symbols, and the two symbols are distributed into different polarization directions.

$S_0 \times b \times W/(2 \times q)$ dual-polarization symbols in the first dual-polarization symbol data stream are from the W fifth dual-polarization symbol data streams. For example, in one polarization direction, P consecutive symbols in the first dual-polarization symbol data stream are obtained by performing symbol mapping processing on $q \times P$ bits, and the $q \times P$ bits are from at least two of the $b \times W$ first encoded data streams. P is an integer multiple of $S_0 \times b/(2 \times q)$. For example, $S_0$ may be a multiple of q. For example, $S_0 = q$. For another example, $S_0 = 2 \times q$. For example, if $S_0 = 2 \times q$, and P=M, the $q \times P$ bits are from the $b \times W$ first encoded data streams.

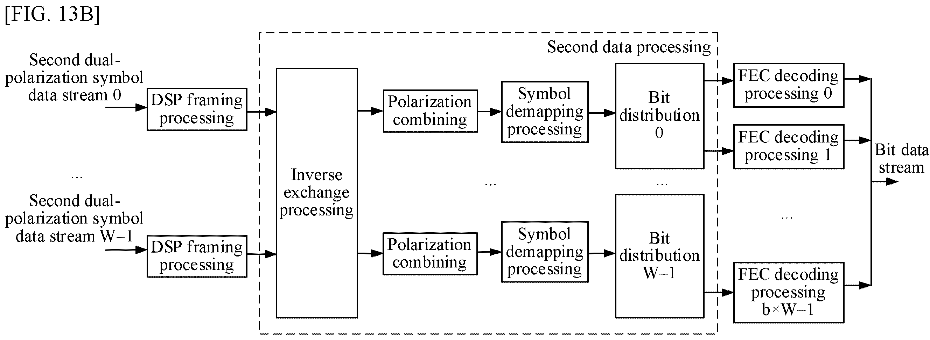

FIG. 13B is a schematic flowchart of a data receiving method in optical communication according to an embodiment of this application. FIG. 13B is an inverse process of the procedure described in FIG. 13A. For corresponding descriptions, refer to the related descriptions in FIG. 13A.

A receiver device receives W second dual-polarization symbol data streams; then performs receiver DSP processing on each of the W second dual-polarization symbol data streams, to obtain W first dual-polarization symbol data streams; performs inverse exchange processing on the W first dual-polarization symbol data streams, to obtain W fifth dual-polarization symbol data streams; then performs polarization combining on the W fifth dual-polarization symbol data streams, to obtain W seventh symbol data streams; further, performs symbol demapping processing on the W seventh symbol data streams, to obtain W sixth encoded data streams; then performs bit distribution on the W sixth encoded data streams, to obtain $b\times W$ first encoded data streams; and then performs FEC decoding processing on the $b\times W$ first encoded data streams, to obtain one or more bit data streams.

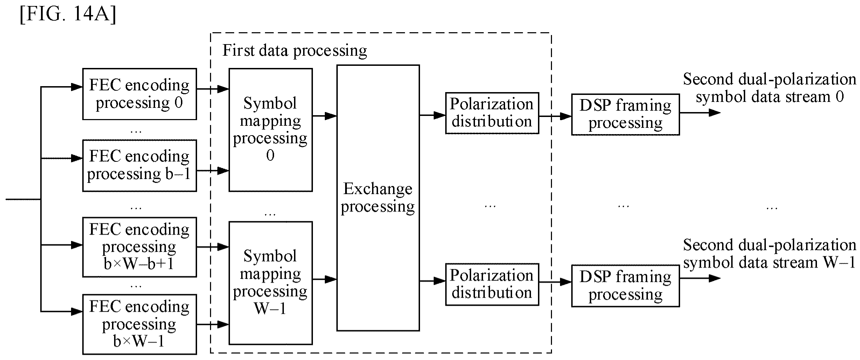

In a tenth implementation, wavelength distribution is performed after symbol mapping and before polarization distribution. "Bit group merging" is not performed separately. $M=b\times W$. FIG. 14A is a schematic flowchart of a data sending method in optical communication according to an embodiment of this application.

A transmitter device performs $b\times W$ paths of parallel FEC encoding processing on a to-be-sent bit data stream, to obtain $b\times W$ first encoded data streams; then performs symbol mapping processing on every b first encoded data streams in the $b\times W$ first encoded data streams, to obtain W ninth symbol data streams, where it may be understood that the $b\times W$ first encoded data streams are distributed into W groups, and each group has the b first encoded data streams; there are W units for performing symbol mapping processing, that is, it may be understood that W symbol mapping units are included, and each symbol mapping unit performs symbol mapping processing on one group of first encoded data streams; and each of the W ninth symbol data streams includes only bits of the b first encoded data streams; then performs exchange processing on the W ninth symbol data streams, to obtain W tenth symbol data streams, where through the exchange processing, each of the W tenth symbol data streams may include bits of the b×W first encoded data streams; and it may be understood as that, through the exchange, the bits of the b×W first encoded data streams are evenly allocated to the W tenth symbol data streams; further, performs polarization distribution on the W tenth symbol data streams, to obtain W first dual-polarization symbol data streams; and then, performs DSP framing processing on each of the W first dual-polarization symbol data streams, to obtain W second dual-polarization symbol data streams, which are a second dual-polarization symbol data stream 0 to a second dual-polarization symbol data stream W-1. Further, the W second dual-polarization symbol data streams may be carried on W paths of optical signals with different wavelengths, and be sent. Alternatively, the W second dual-polarization symbol data streams are sent through W optical fibers respectively. Alternatively, the W second dual-polarization symbol data streams are respectively carried on W subcarriers, digital subcarrier multiplexing is performed to obtain one path of signals, and the path of signals are sent.

In some embodiments, every $S_2$ consecutive symbols in the ninth symbol data stream are obtained by performing symbol mapping processing on $S_2 \times q$ bits, and the $S_2 \times q$ bits are from the b first encoded data streams. Every $S_2 \times Z_1$ consecutive symbols in each tenth symbol data stream are from at least two ninth symbol data streams. For example, $Z_1 =$ W. That is, every $S_2 \times W$ consecutive symbols in each tenth symbol data stream are from M ninth symbol data streams.

For example, $S_2 = b$, $Z_1 = W$, and b × W × q bits that are mapped to b × W consecutive symbols in the tenth symbol data stream are from the M first encoded data streams. Every q/2 consecutive bits in the b × W × q bits are from a same first encoded data stream.

For another example, $S_2 = 2 \times b$, $Z_1 = W$, and b × W × q bits that are mapped to b × W consecutive symbols in the tenth symbol data stream are from the M first encoded data streams. Every q consecutive bits in the b × W × q bits are from a same first encoded data stream.

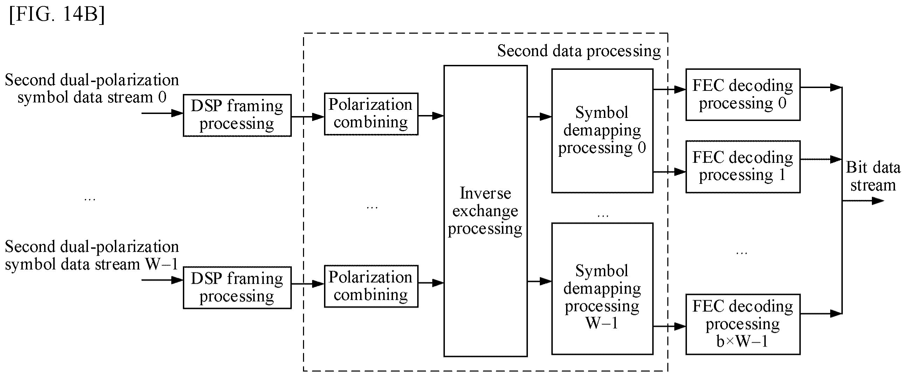

FIG. 14B is a schematic flowchart of a data receiving method in optical communication according to an embodiment of this application. FIG. 14B is an inverse process of the procedure described in FIG. 14A. For corresponding descriptions, refer to the related descriptions in FIG. 14A.

A receiver device receives W second dual-polarization symbol data streams, and performs receiver DSP processing on each of the W second dual-polarization symbol data streams, to obtain W first dual-polarization symbol data streams; performs polarization combining on the W first dual-polarization symbol data streams, to obtain W tenth symbol data streams; then performs inverse exchange processing on the W tenth symbol data streams, to obtain W ninth symbol data streams; performs symbol demapping processing on the W ninth symbol data streams, to obtain b×W first encoded data streams; and then performs FEC decoding processing on the b×W first encoded data streams, to obtain one or more bit data streams.

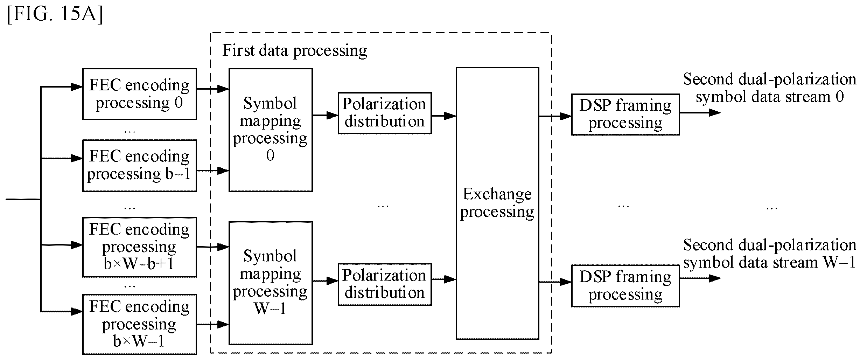

In an eleventh implementation, wavelength distribution is performed after polarization distribution. "Bit group merging" is not performed separately. b×W=M. FIG. 15A is a schematic flowchart of a data sending method in optical communication according to an embodiment of this application.

A transmitter device performs b×W paths of parallel FEC encoding processing on a to-be-sent bit data stream, to obtain b×W first encoded data streams; then performs symbol mapping processing on every b first encoded data streams in the b×W first encoded data streams, to obtain W ninth symbol data streams, where it may be understood that the b×W first encoded data streams are distributed into W groups, and each group has the b first encoded data streams; there are W units for performing symbol mapping processing, that is, it may be understood that W symbol mapping units are included, and each symbol mapping unit performs symbol mapping processing on one group of first encoded data streams; then performs polarization distribution on each of the W ninth symbol data streams, to obtain W sixth dual-polarization symbol data streams; performs exchange processing on the W sixth dual-polarization symbol data streams, to obtain W first dual-polarization symbol data streams; and then, performs DSP framing processing on each of the W first dual-polarization symbol data streams, to obtain W second dual-polarization symbol data streams, which are a second dual-polarization symbol data stream 0 to a second dual-polarization symbol data stream W-1. Further, the W second dual-polarization symbol data streams may be carried on W paths of optical signals with different wavelengths, and be sent. Alternatively, the W second dual-polarization symbol data streams are sent through W optical fibers respectively. Alternatively, the W second dual-polarization symbol data streams are respectively carried on W subcarriers, digital subcarrier multiplexing is performed to obtain one path of signals, and the path of signals are sent.

In some embodiments, every $S_2$ consecutive symbols in the ninth symbol data stream are obtained by performing symbol mapping processing on $S_2 \times q$ bits, and the $S_2 \times q$ bits are from the b first encoded data streams. In one polarization direction, every $S_2 \times Z_1$ consecutive symbols in each first dual-polarization symbol data stream are from at least two ninth symbol data streams. For example, $Z_1 = W$. That is, in the polarization direction, every $S_2 \times W$ consecutive symbols in each first dual-polarization symbol data stream are from M ninth symbol data streams.

For example, $S_2 = b$, $Z_1 = W$, and b × W × q bits that are mapped to b × W consecutive symbols in the first dual-polarization data stream are from the M first encoded data streams in the polarization direction. Every q/2 consecutive bits in the b × W × q bits are from a same first encoded data stream.

For another example, $S_2 = 2 × b$, $Z_1 = W$, and b × W × q bits that are mapped to b × W consecutive symbols in the tenth symbol data stream are from the M first encoded data streams. Every q consecutive bits in the b × W × q bits are from a same first encoded data stream.

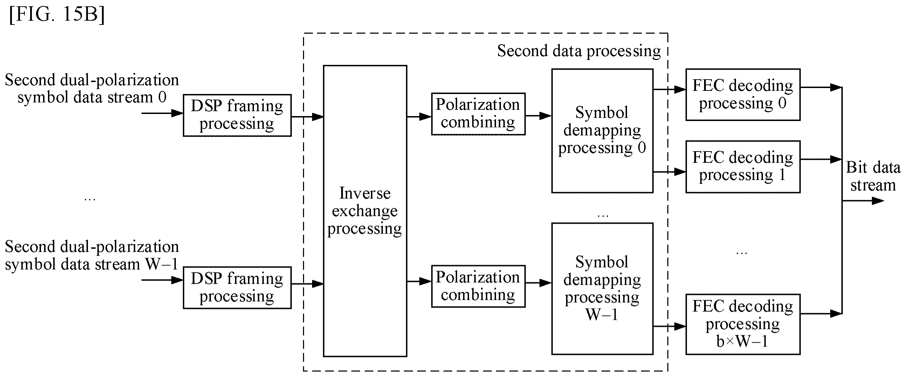

FIG. 15B is a schematic flowchart of a data receiving method in optical communication according to an embodiment of this application. FIG. 15B is an inverse process of the procedure described in FIG. 15A. For corresponding descriptions, refer to the related descriptions in FIG. 15A.

A receiver device receives W second dual-polarization symbol data streams, and performs receiver DSP processing on each of the W second dual-polarization symbol data streams, to obtain W first dual-polarization symbol data streams; performs inverse exchange processing on the W first dual-polarization symbol data streams, to obtain W sixth dual-polarization symbol data streams; then performs polarization combining on each of the W sixth dual-polarization symbol data streams, to obtain W ninth symbol data streams; then performs symbol demapping processing on the W ninth symbol data streams, to obtain b×W first encoded data streams; and then performs FEC decoding processing on the b×W first encoded data streams, to obtain one or more bit data streams.

The following describes an FEC encoding processing procedure in embodiments of this application.

In some possible application scenarios, M paths of parallel FEC encoding processing (0, 1, ..., or M-1) may include FEC encoding and interleaving. Specifically, after FEC encoding is performed, an encoded data stream is further input into an interleaver for interleaving processing, to scramble a data order, thereby improving a burst resistance capability. For example, an open FEC code or a CFEC code is used for the FEC encoding.

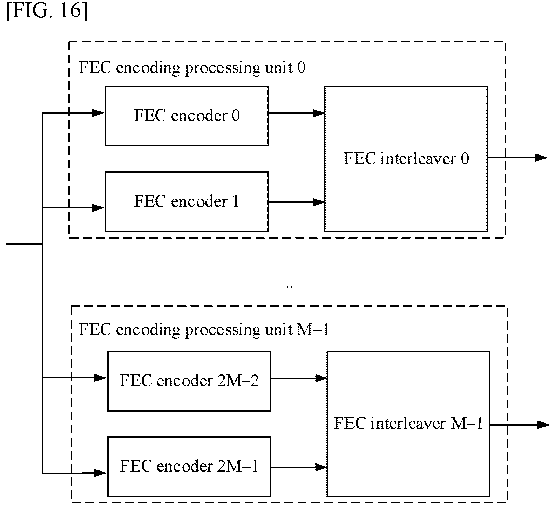

In an example, encoding overhead (overhead, OH for short) corresponding to the FEC encoding may be $\frac{17}{111}$. That is, the OH is approximately 15.315%. As shown in FIG. 16, each FEC encoding processing unit (0, 1, ..., or M-1) includes two FEC encoding units and one FEC interleaving unit. In this case, there are 2M FEC encoders and M interleavers in total, which are FEC encoders 0 to 2M-1 and interleavers 0 to M-1. Each FEC encoding unit performs FEC encoding on 3552 input bits, to obtain 4096 output bits. One FEC interleaving unit performs block interleaving on output bits of two FEC encoders, to improve the burst resistance capability. A block size of an FEC interleaver is 172032 bits.

For example, a to-be-encoded input bit data stream is input into the 2M FEC encoding units in a round-robin (round-robin) fashion at a granularity (granularity) of one bit.

In another example, encoding redundancy (overhead, OH for short) corresponding to an FEC encoding unit is $\frac{17}{95}$. That is, the OH is approximately 17.895%. For example, each FEC encoding unit performs FEC encoding on 3040 input bits, to obtain 3584 output bits.

In still another example, OH of an FEC encoding unit is $\frac{17}{79}$. That is, the OH is approximately 21.519%. For example, each FEC encoding unit performs FEC encoding on 2528 input bits, to obtain 3072 output bits.

In still another example, OH of an FEC encoding unit is $\frac{17}{63}$. That is, the OH is approximately 26.984%. For example, each FEC encoding unit performs FEC encoding on 2016 input bits, to obtain 2560 output bits.

In some application scenarios, the FEC encoding processing (0, 1, ..., or M-1) further includes probabilistic constellation shaping (probabilistic constellation shaping, PCS) processing. For example, the to-be-sent bit data stream input into each FEC encoder includes a first bit data stream and a second bit data stream. The first bit data stream is a data stream obtained through the PCS processing, and occurrence probabilities of bits 0 and 1 of the first bit data stream are unequal. The second bit data stream is a data stream obtained without the PCS processing, and occurrence probabilities of bits 0 and 1 of the second bit data stream are equal.

The following describes the solution provided in embodiments of this application with reference to specific application scenarios. In the following scenario 1 to scenario 3, that the fourth implementation is used for distribution processing is used as an example. Other implementations may be as described above. Details are not described herein again.

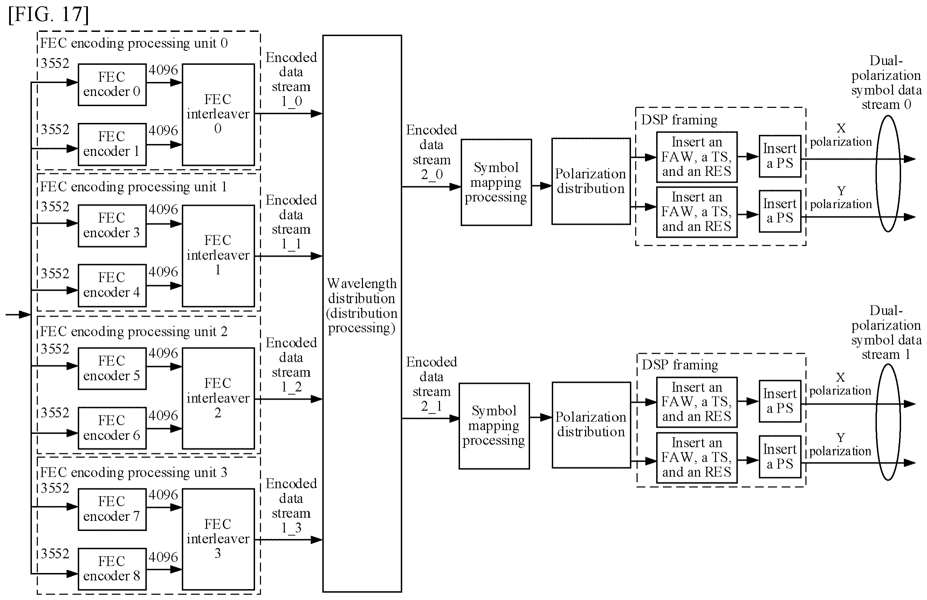

Scenario 1: For example, M=4, 16QAM (q=4) is used for symbol mapping, and W=2. For example, the OFEC code is used for the FEC encoding. FIG. 17 is a diagram of a data sending procedure provided in a scenario 1 according to an embodiment of this application. M=4, and correspondingly, eight OFEC encoding units (which are also referred to as OFEC encoders) and four interleaving units (which are also referred to as interleavers) are included. In the scenario 1, that the fourth implementation is used for the distribution processing is used as an example. A transmitter device includes an encoder and a first data processor. The encoder includes four FEC encoding processors.

Refer to FIG. 17. The M=4 FEC encoding processors are an FEC encoding processor 0, an FEC encoding processor 1, an FEC encoding processor 2, and an FEC encoding processor 3. Each FEC encoding processor includes two OFEC encoders and one OFEC interleaver. DP-16QAM modulation and dual-wavelength transmission are considered. That is, W=2.

The to-be-sent input bit data stream is input into the 2M=8 OFEC encoders, namely, an OFEC encoder 0, an OFEC encoder 1, ..., and an OFEC encoder 7 in the round-robin (round-robin) fashion at the granularity (granularity) of one bit. Each OFEC encoder performs OFEC encoding on the 3552 input bits, to obtain the 4096 output bits. Output bits of every two OFEC encoders are input into the OFEC interleaver for the block interleaving, to improve the burst resistance capability. A block size of the OFEC interleaver is 172032 bits.

Outputs of the four OFEC interleavers are input into the first data processor. The first data processor performs first data processing. The first data processing includes wavelength distribution, symbol mapping, polarization distribution, and the like. For example, the first data processor may include a wavelength distribution unit, a symbol mapping unit, and a polarization distribution unit, to perform the foregoing operations. The wavelength distribution unit obtains W $\times$ (q $\times$ 2) = 2 $\times$ (4 $\times$ 2) = 16 bits from each of encoded data streams 1_0 to 1_3 output by the M=4 FEC encoding processors, to obtain W $\times$ (q $\times$ 2) $\times$ M = 2 $\times$ (4 $\times$ 2) $\times$ 4 = 64 bits in total. The wavelength distribution unit distributes every 64 input bits into two output encoded data streams 2_0 and 2_1, where 32 bits are distributed into the output encoded data stream 2_0, and the other 32 bits are distributed into the other output encoded data stream 2_1. A possible implementation is as follows: For a $j^{th}$ ($0 \leq j < 2$) operation, the wavelength distribution unit obtains, in a round-robin fashion from the encoded data streams 1_0 to 1_3 output by the M=4 FEC encoding processors, a bit set $v_i^j$ including q $\times$ 2 = 4 $\times$ 2 = 8 bits, where $0 \leq i < 4$, and $0 \leq j < 2$.

The bit set $v_i^j$ including the q $\times$ 2 = 8 bits is a $j^{th}$ bit set that includes q $\times$ 2 = 8 bits and that is obtained from an encoded data stream 1_i output by an $i^{th}$ FEC encoding processor. A total of (q $\times$ 2) $\times$ M = (4 $\times$ 2) $\times$ 4 = 32 bits are obtained in this time of operation, and the (q $\times$ 2) $\times$ M = (4 $\times$ 2) $\times$ 4 = 32 bits are output to a $j^{th}$ ($0 \leq j < 2$) output encoded data stream 2_j. Through W=2 times of operations, 16 bits are obtained from an encoded data stream output by each FEC encoding processor, and 64 bits are obtained in total. The wavelength distribution unit outputs the 32 bits $v_0^0, v_1^0, v_2^0$, and $v_3^0$ to the encoded data stream 2_0, and outputs the other 32 bits $v_0^1, v_1^1, v_2^1$, and $v_3^1$ to the encoded data stream 2_1.

The 32 bits $v_0^j, v_1^j, v_2^j$, and $v_3^j$ in the $j^{th}$ ($0 \leq j < 2$) output encoded data stream 2_j are input into the symbol mapping for the DP-16QAM modulation, where every q $\times$ 2 = 8 bits $v_i^j$ are mapped to two symbols $g_i^j$, and eight symbols $g_0^j, g_1^j, ...$, and $g_3^j$ are obtained in total.

The polarization distribution unit processes the eight symbols $g_0^j, g_1^j, ...$, and $g_3^j$ output by the symbol mapping unit, to obtain four dual-polarization symbols $s_0^j, s_1^j, ...$, and $s_3^j$, where one dual-polarization symbol $s_i^j$ is obtained by performing polarization distribution on the two symbols $g_i^j$.

The dual-polarization 16QAM (DP-16QAM) modulation symbol $s_i^j$ is obtained by performing symbol mapping and polarization distribution processing on the eight bits $v_i^j = (c_0, c_1, c_2, c_3, c_4, c_5, c_6, c_7)$. More specifically, $(c_0, c_2)$ is mapped to an I-phase component (in-phase component) of the DP-16QAM symbol $s_i^j$ in X polarization, $(c_4, c_6)$ is mapped to a Q-phase component (quadrature-phase component) of the DP-16QAM symbol $s_i^j$ in the X polarization, $(c_1, c_3)$ is mapped to an I-phase component (in-phase component) of the DP-16QAM symbol $s_i^j$ in Y polarization, and $(c_5, c_7)$ is mapped to a Q-phase component (quadrature-phase component) of the DP-16QAM symbol $s_i^j$ in the Y polarization. In an example, the two bits are mapped to an I-phase component or a Q-phase component, and a Gray (Gray) mapping rule may be used, where two bits {0, 0} are mapped to -3, {0, 1} are mapped to -1, {1, 1} are mapped to +1, and {1, 0} are mapped to +3. In this case, the symbol mapping is also referred to as Gray mapping (Gray mapping).

DSP framing processing is performed on the two dual-polarization symbol data streams obtained through the polarization distribution processing, to obtain to-be-sent dual-polarization symbol data streams, thereby obtaining a dual-polarization symbol data stream 0 and a dual-polarization symbol data stream 1. More specifically, the DSP framing processing is inserting symbols such as an FAW, a TS, an RES, and a PS into every 172032 dual-polarization symbols (which are also referred to as payload payload dual-polarization symbols) in the dual-polarization symbol data streams obtained through the polarization distribution processing, to obtain 175104 to-be-sent dual-polarization symbols. The 175104 to-be-sent dual-polarization symbols are also referred to as one super-frame (super-frame).

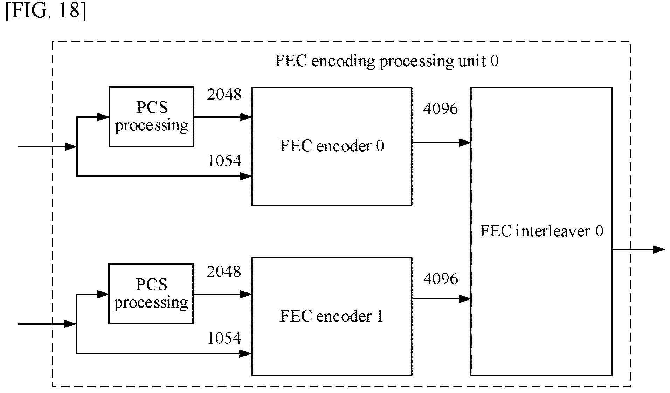

It should be noted that, in some specific application, the FEC processing further includes the probabilistic constellation shaping (Probabilistic Constellation Shaping, PCS) processing. More specifically, the data stream that has not been input into the OFEC encoding includes two parts. One part is bit data obtained through the PCS processing, and the occurrence probabilities of the bits 0 and 1 of the bit data are unequal. The other part is bit data obtained without the PCS processing, and the occurrence probabilities of the bits 0 and 1 of the bit data are equal. In a specific scenario, as shown in FIG. 18, the OFEC encoder encodes the 3552 to-be-encoded bits, to obtain the 4096 encoded bits, where 2048 of the 3552 to-be-encoded bits are obtained through the PCS processing, and the other 1504 bits are obtained without the PCS processing.

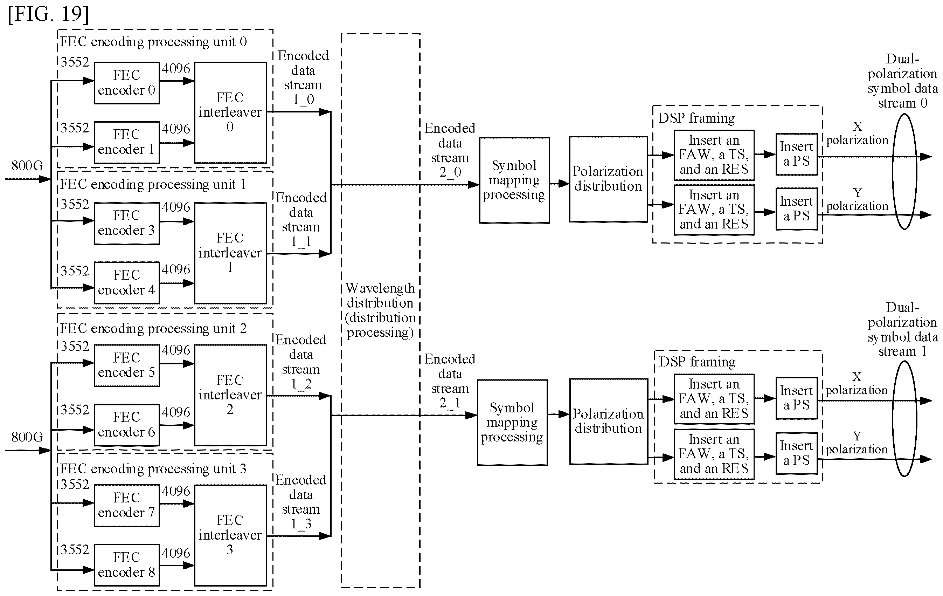

In the data processing procedure shown in the scenario 1, a transmission rate of 1.6T may be reached. In the data processing procedure shown in the scenario 1, a rate of the input data stream on which FEC encoding is to be performed is approximately 1.6T. A rate of each to-be-sent dual-polarization symbol data stream is approximately 946 Gbps, and the rate is the same as an existing 800ZR rate. The wavelength distribution in FIG. 17 is removed, outputs of the OFEC interleaver 0 and the OFEC interleaver 1 are input into one path of symbol mapping, and outputs of the OFEC interleaver 2 and the OFEC interleaver 3 are input into one path of symbol mapping. As shown in FIG. 19, it may be regarded as two paths of 800G service transmission, and two paths of 800ZR transmission may be implemented. It can be learned that the proposed data processing solution can be effectively compatible with 800ZR and future 1.6T transmission.

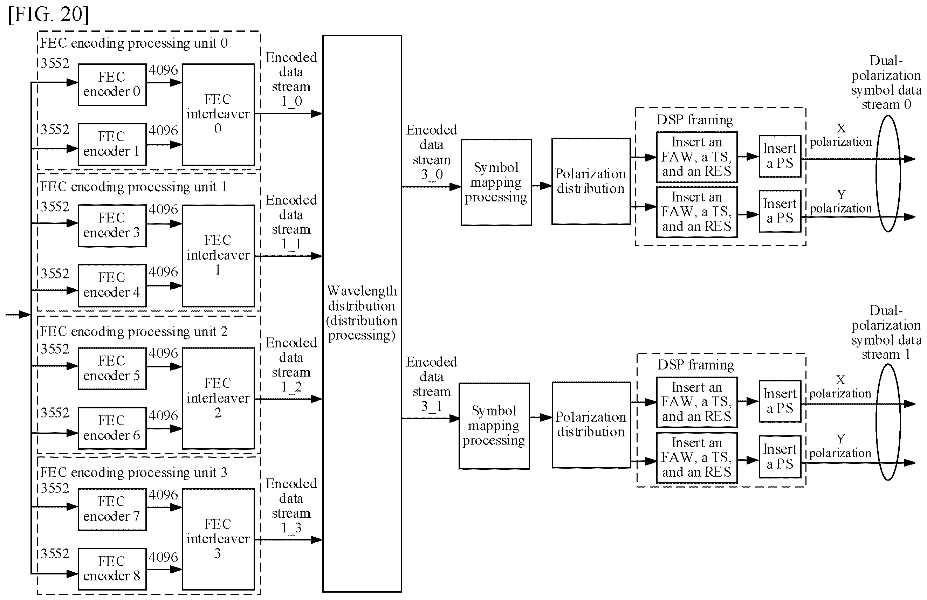

Scenario 2: For example, M=4, 16QAM is used for symbol mapping, and W=2. For example, the OFEC code is used for the FEC encoding. FIG. 20 is a diagram of a data sending procedure provided in a scenario 2 according to an embodiment of this application. M=4, and correspondingly, eight OFEC encoding units (which are also referred to as OFEC encoders) and four interleaving units (which are also referred to as interleavers) are included. A wavelength distribution manner in the scenario 2 is different from that in the scenario 1. A transmitter device includes an encoder and a first data processor. The encoder includes four FEC encoding processors. Refer to FIG. 20. The M=4 FEC encoding processors are an FEC encoding processor 0, an FEC encoding processor 1, an FEC encoding processor 2, and an FEC encoding processor 3. Each FEC encoding processor includes two OFEC encoders and one OFEC interleaver. DP-16QAM modulation and dual-wavelength transmission are considered. That is, W=2. The different wavelength distribution manners are used in the scenario 2 and the scenario 1.

In the scenario 2, a wavelength distribution unit obtains $W \times q = 2 \times 4 = 8$ bits from each of encoded data streams 1 to 1 3 output by the M=4 FEC encoding processors, to obtain $W \times q \times M = 32$ bits in total. The wavelength distribution unit distributes the 32 bits into two output encoded data streams 3_0 and 3_1, where 16 bits are distributed into the output encoded data stream 3_0, and the other 16 bits are distributed into the other output encoded data stream 3_1. A specific implementation is as follows: For a $j^{th}$ ($0 \le j < 2$) operation, "wavelength distribution" is obtaining $q = 4$ bits $v_i^j$ in a round-robin fashion from the encoded data streams output by the M=4 FEC encoding processors, where $0 \le i < 4$, and $0 \le j < 2$. The bit set $v_i^j$ including the $q = 4$ bits is a $j^{th}$ group of $q = 4$ bits obtained from an encoded data stream 1_i output by an $i^{th}$ FEC encoding processor. A total of $q \times M = 4 \times 4 = 16$ bits are obtained in this time of operation. The $q \times M = 4 \times 4 = 16$ bits are output to a $j^{th}$ ($0 \le j < 2$) encoded data stream 3_j. Through W=2 times of operations, eight bits are obtained from an encoded data stream output by each FEC encoding processor, the 16 bits $v_0^0, v_1^0, v_2^0,$ and $v_3^0$ are output to the $0^{th}$ output encoded data stream 3_0, and the other 16 bits $v_0^1, v_1^1, v_2^1,$ and $v_3^1$ are output to a $1^{st}$ output encoded data stream 3 1.

The 16 bits $v_0^j, v_1^j, v_2^j,$ and $v_3^j$ in the $j^{th}$ ($0 \le j < 2$) output encoded data stream 3_j are input into the symbol mapping for the DP-16QAM modulation, where every $q \times 2 = 8$ bits $v_i^j$ are mapped to two symbols $g_{8i}^j$, and four symbols $g_0^j$ and $g_1^j$ are obtained in total.

"Polarization distribution" is processing the four symbols $g_0^j$ and $g_1^j$ output through the "symbol mapping", to obtain two dual-polarization symbols $s_0^j$ and $s_1^j$, where one dual-polarization symbol s1 is obtained by performing polarization distribution on the two symbols g . It may be understood as that, in one polarization direction, two consecutive symbols in a dual-polarization symbol data stream are from the four encoded data streams 1_0 to 1_3.

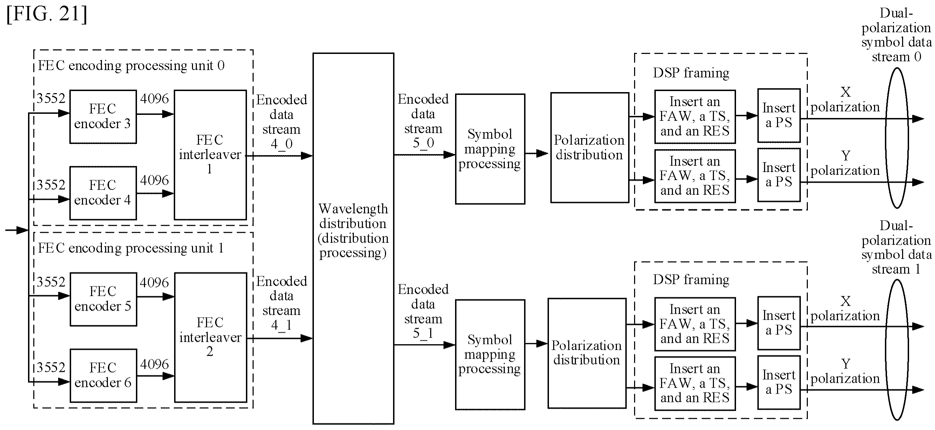

Scenario 3: For example, M=2, 16QAM (q=4) is used for symbol mapping, and W=2. For example, the OFEC code is used for the FEC encoding. FIG. 21 is a diagram of a data sending procedure provided in a scenario 3 according to an embodiment of this application. M=2, and correspondingly, four OFEC encoding units (which are also referred to as OFEC encoders) and two interleaving units (which are also referred to as interleavers) are included. In the scenario 3, that the fourth implementation is used for the distribution processing is used as an example. A transmitter device includes an encoder and a first data processor. The encoder includes four FEC encoding processors.

Refer to 21. The M=2 FEC encoding processors are an FEC encoding processor 0 and an FEC encoding processor 1. Each FEC encoding processor includes two OFEC encoders and one OFEC interleaver. DP-16QAM modulation and dual-wavelength transmission are considered. That is, W=2.

The to-be-encoded input bit data stream is input into the 2M=4 OFEC encoders, namely, an OFEC encoder 0, an OFEC encoder 1, an OFEC encoder 2, and an OFEC encoder 3, in the round-robin (round-robin) fashion at the granularity (granularity) of one bit. Each OFEC encoder performs OFEC encoding on the 3552 input bits, to obtain the 4096 output bits.

Output bits of every two OFEC encoders are input into the OFEC interleaver for the block interleaving, to improve the burst resistance capability. A block size of the OFEC interleaver is 172032 bits.

Outputs of the two OFEC interleavers are input into first data processing, where the first data processing includes wavelength distribution, symbol mapping, polarization distribution, DSP framing, and the like. A wavelength distribution unit obtains $W \times (q \times 2) = 2 \times (4 \times 2) = 16$ bits from each of encoded data streams 4_0 and 4_1 output by the M=2 FEC encoding processors, to obtain $W \times (q \times 2) \times M = 2 \times (4 \times 2) \times 2 = 32$ bits in total. The wavelength distribution unit distributes the 32 bits into two output encoded data streams 5_0 and 5_1, where 16 bits are distributed into one of the output encoded data streams. A specific implementation is as follows: For a $j^{th}$ ($0 \leq j < 2$) operation, the wavelength distribution unit obtains $q \times 2 = 4 \times 2 = 8$ bits $v_i^j$ in a round-robin fashion from the encoded data streams 4_0 and 4_1 output by the M=2 FEC encoding processors, where $0 \leq i < 2$, and $0 \leq j < 2$. The bit set $v_i^j$ including the $q \times 2 = 8$ bits is a $j^{th}$ group of $q \times 2 = 8$ bits obtained from an encoded data stream 4_i output by an $i^{th}$ FEC processor. A total of $(q \times 2) \times M = (4 \times 2) \times 2 = 16$ bits are obtained in this time of operation. The $(q \times 2) \times M = (4 \times 2) \times 2 = 16$ bits are output to a $j^{th}$ ($0 \leq j < 2$) output encoded data stream 5_j. Through W=2 times of operations, 16 bits are obtained from an encoded data stream output by each FEC encoding processor. In addition, 32 bits $v_0^0$ and $v_1^0$ are output to the $0^{th}$ output encoded data stream 5_0, and the other 32 bits $v_0^1$ and $v_1^1$ are output to the $1^{st}$ output encoded data stream 5_1.

The 16 bits $v_0^j$ and $v_1^j$ in the $j^{th}$ ($0 \leq j < 2$) output encoded data stream 5_j are input into the symbol mapping for the DP-16QAM modulation, where every $q \times 2 = 8$ bits $v_i^j$ are mapped to two symbols $g_i^j$, and four symbols $g_0^j$ and $g_1^j$ are obtained in total.

The "polarization distribution" is processing the four symbols $g_0^j$ and $g_1^j$ output through the "symbol mapping", to obtain two dual-polarization symbols $s_0^j$ and $s_1^j$, where one dual-polarization symbol $s_i^j$ is obtained by performing polarization distribution on the two symbols $g_i^j$.

The dual-polarization 16QAM (DP-16QAM) modulation symbol $s_i^j$ is obtained by performing symbol mapping and polarization distribution processing on the eight bits $v_i^j = (c_0, c_1, c_2, c_3, c_4, c_5, c_6, c_7)$. More specifically, $(c_0, c_2)$ is mapped to an I-phase component (in-phase component) of the DP-16QAM symbol $s_i^j$ in X polarization, $(c_4, c_6)$ is mapped to a Q-phase component (quadrature-phase component) of the DP-16QAM symbol $s_i^j$ in the X polarization, $(c_1, c_3)$ is mapped to an I-phase component (in-phase component) of the DP-16QAM symbol $s_i^j$ in Y polarization, and $(c_5, c_7)$ is mapped to a Q-phase component (quadrature-phase component) of the DP-16QAM symbol $s_i^j$ in the Y polarization.

DSP framing processing is performed on the two dual-polarization symbol data streams obtained through the polarization distribution processing, to obtain to-be-sent dual-polarization symbol data streams, thereby obtaining a dual-polarization symbol data stream 0 and a dual-polarization symbol data stream 1. More specifically, the DSP framing processing is inserting symbols such as an FAW, a TS, an RES, and a PS into every 172032 dual-polarization symbols (which are also referred to as payload payload dual-polarization symbols) in the dual-polarization symbol data streams obtained through the polarization distribution processing, to obtain 175104 to-be-sent dual-polarization symbols. The 175104 to-be-sent dual-polarization symbols are also referred to as one super-frame (super-frame).

It should be noted that, in some specific application, the FEC encoding processing may further include probabilistic constellation shaping PCS processing. More specifically, the data stream that has not been input into the OFEC encoding includes two parts. One part is bit data obtained through the PCS processing, and the occurrence probabilities of 0 and 1 of the bit data are unequal. The other part is bit data obtained without the PCS processing, and the occurrence probabilities of 0 and 1 of the bit data are equal. In a specific scenario, the OFEC encoding is encoding the 3552 to-be-encoded bits, to obtain the 4096 encoded bits, where 2048 of the 3552 to-be-encoded bits are obtained through the PCS processing.

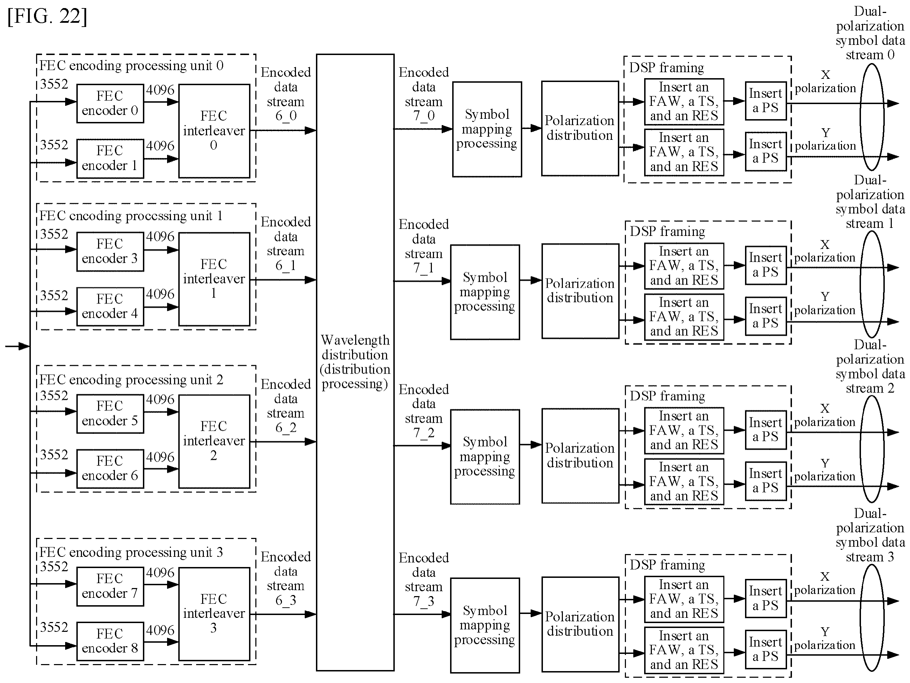

Scenario 4: For example, M=4, 16QAM (q=4) is used for symbol mapping, and W=4. For example, the OFEC code is used for the FEC encoding. FIG. 22 is a diagram of a data sending procedure provided in a scenario 4 according to an embodiment of this application. M=4, and correspondingly, eight OFEC encoding units (which are also referred to as OFEC encoders) and four interleaving units (which are also referred to as interleavers) are included. A transmitter device includes an encoder and a first data processor. The encoder includes four FEC encoding processors.

Refer to FIG. 22. The M=4 FEC encoding processors (namely, FEC encoding processing units in the figure) are an FEC encoding processor 0, an FEC encoding processor 1, an FEC encoding processor 2, and an FEC encoding processor 3. Each FEC encoding processor (FEC encoding processing unit) includes two OFEC encoders and one OFEC interleaver. DP-16QAM modulation is considered, and W=4.

The to-be-sent input bit data stream is input into the 2M=8 OFEC encoders, namely, an OFEC encoder 0, an OFEC encoder 1, ..., and an OFEC encoder 7 in the round-robin (round-robin) fashion at the granularity (granularity) of one bit. In this case, it may be considered that the to-be-sent input bit data stream is input into the M=4 FEC encoding processors, namely, the FEC encoding processing unit 0, the FEC encoding processing unit 1, ..., and the FEC encoding processing unit 3 in the figure, in a round-robin (round-robin) fashion at a granularity (granularity) of two bits. Each path of OFEC encoding is performing OFEC encoding on the 3552 input bits, to obtain the 4096 output bits. Output bits of every two OFEC encoders are input into the OFEC interleaver for the block interleaving, to improve the burst resistance capability. A block size of the OFEC interleaver is 172032 bits.

Outputs of the four OFEC interleavers (namely, an OFEC interleaver 0, an OFEC interleaver 1, an OFEC interleaver 2, and an OFEC interleaver 3) are input into the first data processor. The first data processor performs first data processing. The first data processing includes wavelength distribution (which is also referred to as distribution processing), symbol mapping, polarization distribution, and the like. For example, the first data processor may include a wavelength distribution unit, a symbol mapping unit, and a polarization distribution unit, to perform the foregoing operations. The wavelength distribution unit obtains $W \times (q \times 2) = 4 \times (4 \times 2) = 32$ bits from each of encoded data streams 6_0 to 6_3 output by the M=4 FEC encoding processors, to obtain $W \times (q \times 2) \times M = 4 \times (4 \times 2) \times 4 = 128$ bits in total. The wavelength distribution unit distributes every 128 input bits into four output encoded data streams 7_0 to 7_3, where 32 bits are distributed into one output encoded data stream 7_0, 32 other bits are distributed into another output encoded data stream 7_1, 32 other bits are distributed into another output encoded data stream 7_2, and 32 other bits are distributed into another output encoded data stream 7_3. A possible implementation is as follows: For a $j^{th}$ ($0 \le j < 4$) operation, the wavelength distribution unit obtains, in a round-robin fashion from the encoded data streams 6_0 to 6_3 output by the M=4 FEC encoding processors, a bit set $v_i^j$ including $q \times 2 = 4 \times 2 = 8$ bits, where $0 \le i < 4$, and $0 \le j < 4$. The bit set $v_i^j$ including the $q \times 2 = 8$ bits is a $j^{th}$ bit set that includes $q \times 2 = 8$ bits and that is obtained from an encoded data stream 6_i output by an $i^{th}$ FEC encoding processor. A total of $(q \times 2) \times M = (4 \times 2) \times 4 = 32$ bits are obtained in this time of operation, and the $(q \times 2) \times M = (4 \times 2) \times 4 = 32$ bits are output to a $j^{th}$ ($0 \le j < 4$) output encoded data stream 7_j. Through W=4 times of operations, 32 bits are obtained from an encoded data stream output by each FEC encoding processor, and 128 bits are obtained in total. The wavelength distribution unit outputs the 32 bits $v_0^0, v_1^0, v_2^0$, and $v_3^0$ to the encoded data stream 7_0, outputs the 32 other bits $v_0^1, v_1^1, v_2^1$, and $v_3^1$ to the encoded data stream 7_1, outputs the 32 other bits $v_0^2, v_1^2, v_2^2$, and $v_3^2$ to the encoded data stream 7_2, and outputs the 32 other bits $v_0^3, v_1^3, v_2^3$, and $v_3^3$ to the encoded data stream 7_3.

The 32 bits $v_0^j, v_1^j, v_2^j$, and $v_3^j$ in the $j^{th}$ ($0 \le j < 4$) output encoded data stream 7_j are input into the symbol mapping for the DP-16QAM modulation, where every $q \times 2 = 8$ bits $v_i^j$ are mapped to two symbols $g_i^j$, and eight symbols $g_0^j, g_1^j, ...,$ and $g_3^j$ are obtained in total.

The polarization distribution unit processes the eight symbols $g_0^j, g_1^j, ...,$ and $g_3^j$ output by the symbol mapping unit, to obtain four dual-polarization symbols $s_0^j, s_1^j, \cdots,$ and $s_3^j$, where one dual-polarization symbol $s_i^j$ is obtained by performing polarization distribution on the two symbols $g_i^j$.

The dual-polarization 16QAM (DP-16QAM) modulation symbol $s_i^j$ is obtained by performing symbol mapping and polarization distribution processing on the eight bits $v_i^j = (c_0, c_1, c_2, c_3, c_4, c_5, c_6, c_7)$. More specifically, $(c_0, c_2)$ is mapped to an I-phase component (in-phase component) of the DP-16QAM symbol $s_i^j$ in X polarization, $(c_4, c_6)$ is mapped to a Q-phase component (quadrature-phase component) of the DP-16QAM symbol $s_i^j$ in the X polarization, $(c_1, c_3)$ is mapped to an I-phase component (in-phase component) of the DP-16QAM symbol $s_i^j$ in Y polarization, and $(c_5, c_7)$ is mapped to a Q-phase component (quadrature-phase component) of the DP-16QAM symbol $s_i^j$ in the Y polarization. In an example, the two bits are mapped to an I-phase component or a Q-phase component, and a Gray (Gray) mapping rule may be used, where two bits {0, 0} are mapped to -3, {0, 1} are mapped to -1, {1, 1} are mapped to +1, and {1, 0} are mapped to +3. In this case, the symbol mapping is also referred to as Gray mapping (Gray mapping).

DSP framing processing is performed on the four dual-polarization symbol data streams obtained through the polarization distribution processing, to obtain to-be-sent dual-polarization symbol data streams, thereby obtaining a dual-polarization symbol data stream 0, a dual-polarization symbol data stream 1, a dual-polarization symbol data stream 2, and a dual-polarization symbol data stream 3. More specifically, the DSP framing processing is inserting symbols such as an FAW, a TS, an RES, and a PS into every 172032 dual-polarization symbols (which are also referred to as payload payload dual-polarization symbols) in the dual-polarization symbol data streams obtained through the polarization distribution processing, to obtain 175104 to-be-sent dual-polarization symbols. The 175104 to-be-sent dual-polarization symbols are also referred to as one super-frame (super-frame).

It should be noted that, in some specific application, the FEC processing further includes the probabilistic constellation shaping (Probabilistic Constellation Shaping, PCS) processing. More specifically, the data stream that has not been input into the OFEC encoding includes two parts. One part is bit data obtained through the PCS processing, and the occurrence probabilities of the bits 0 and 1 of the bit data are unequal. The other part is bit data obtained without the PCS processing, and the occurrence probabilities of the bits 0 and 1 of the bit data are equal. In a specific scenario, as shown in FIG. 18, the OFEC encoder encodes the 3552 to-be-encoded bits, to obtain the 4096 encoded bits, where 2048 of the 3552 to-be-encoded bits are obtained through the PCS processing, and the other 1504 bits are obtained without the PCS processing.

It should be noted that W=2 is considered in the scenario 1 to the scenario 3, and W=4 is considered in the scenario 4. A scenario in which W is another parameter may alternatively be extended to, for example, W=8 or 16. Details are not described herein again. For example, when M=2, W may be 2, 4, 8, or 16. For another example, when M=4, W may be 2, 4, 8, or 16.

It should be noted that, in the first implementation to the eleventh implementation, the DSP framing processing is a framing operation performed on a symbol. The DSP framing is periodically inserting a fixed symbol sequence (which may also be referred to as a preset symbol sequence or a first symbol sequence) into each of the W first dual-polarization symbol data streams. For example, for every $N_{CW}$ dual-polarization symbols, the fixed symbol sequence is inserted in each of an X-polarization direction and a Y-polarization direction, to obtain a dual-polarization symbol sequence (for example, which may also be referred to as a DP-QAM symbol sequence) of a length that is $N_F$. For example, the dual-polarization symbol sequence may be a DP-QPSK symbol sequence, a DP-8QAM symbol sequence, a DP-16QAM symbol sequence, a DP-32QAM symbol sequence, or a DP-64QAM symbol sequence. The dual-polarization symbol sequence may also be referred to as a super-frame (super-frame). In an example, $N_{CW}$ = 172032, and $N_F$ = 175104. It should be noted that the dual-polarization symbol sequence of the length that is $N_F$ includes $N_F$ symbols in each polarization direction. The fixed symbol sequence may include one or more of a pilot symbol (pilot sequence, PS), a frame alignment word (frame alignment word, FAW), a training symbol (training sequence, TS), or a reserved symbol (reserved symbol, RES). The FAW is for frame alignment, the TS is for link training, and the PS is for carrier phase recovery. In addition, a DSP frame further includes some RES reserved symbols for future use and innovation. In some specific embodiments, the super-frame (super-frame) is also referred to as a multi-frame (multi-frame), the reserved symbol is also referred to as fixed stuff (fixed stuff, FS), and the frame alignment word is also referred to as a multi-frame alignment signal (multi-frame alignment signal, MFAS). It should be noted that a location of the first symbol sequence in the super-frame is not all continuous. For example, the pilot symbol is distributed at locations at a fixed-length interval in the super-frame. For example, the frame alignment word is located at a plurality of consecutive locations at the beginning of the super-frame.

In some other possible implementations, the DSP framing processing is a framing operation performed on a bit. The DSP framing processing is performed before the symbol mapping. The DSP framing processing is inserting a fixed bit into an obtained data sequence before the symbol mapping according to a used symbol mapping rule, where the fixed bit is a bit corresponding to one or more of a frame alignment word, a training symbol, a reserved symbol, and a pilot symbol. Then, polarization distribution and symbol mapping are performed to obtain a to-be-sent dual-polarization symbol data stream. The fixed bit may also be referred to as a bit corresponding to a first symbol sequence, and the first symbol sequence includes one or more of the pilot symbol, the frame alignment word, the training symbol, or the reserved symbol. A super-frame in the to-be-sent dual-polarization symbol data stream is the same as the super frame in the second dual-polarization symbol data stream obtained in FIG. 3. The following provides several possible implementations.

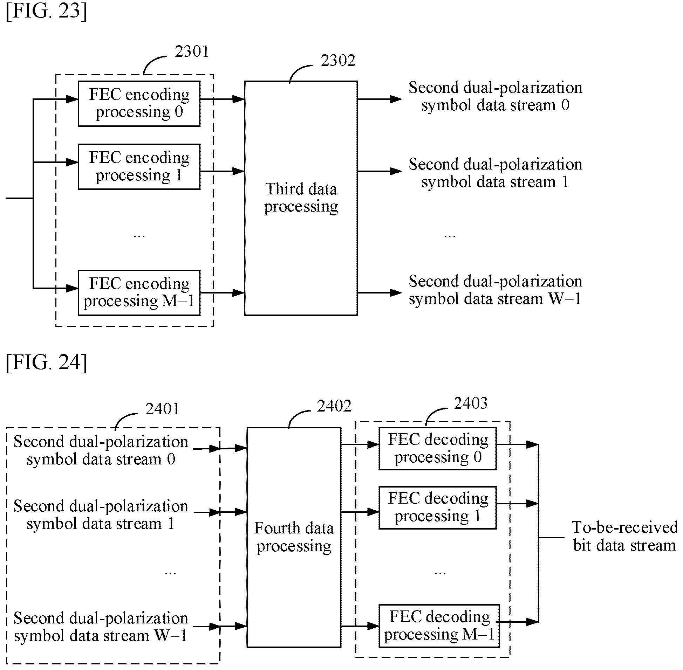

FIG. 23 is a schematic flowchart of a data processing method in optical communication according to an embodiment of this application. The method may be applied to a transmitter device, for example, performed by the transmitter device or a module in the transmitter device. The module in the transmitter device may be a chip or a chip system.

For 2301, refer to 201. Details are not described herein again.

2302: Perform third data processing on the M first encoded data streams, to obtain W second dual-polarization symbol data streams, where W is an integer greater than 1, and the W second dual-polarization symbol data streams are second dual-polarization symbol data streams 0 to W-1.

The third data processing includes at least DSP framing processing and symbol mapping. For related descriptions of a dual-polarization symbol data stream, refer to the embodiment corresponding to FIG. 2. Details are not described herein again.

Each of the W second dual-polarization symbol data streams is located in two orthogonal polarization directions.

In one polarization direction, P consecutive symbols other than a first symbol sequence (which may be referred to as a fixed symbol sequence) in the second dual-polarization symbol data stream are obtained by performing symbol mapping processing on q × P bits. The first symbol sequence includes one or more of a pilot symbol, a frame alignment word, a training symbol, or a reserved symbol. The q × P bits are from at least two of the M first encoded data streams, where P is an integer greater than 1, and q is a positive integer. In the polarization direction, each symbol is obtained by performing symbol mapping processing on q bits.

It should be noted that the polarization direction in this embodiment of this application is either of the two polarization directions.

In some possible implementations, P may satisfy P=M. In one polarization direction, the P consecutive symbols other than the first symbol sequence (which may be referred to as the fixed symbol sequence) in the second dual-polarization symbol data stream are obtained by performing symbol mapping processing on the q × P bits. Further, the q × P bits are from the M first encoded data streams, and every q bits in the q × P bits are from one of the M first encoded data streams.

In some other possible implementations, P may satisfy P=M. Further, the q × P bits are from the M first encoded data streams, and every 2×q bits in the q × P bits are from one of the M first encoded data streams.

In still another possible implementation, P may satisfy P=M. The q × P bits are from the M first encoded data streams, and every q bits in the q × P bits are from one of the M first encoded data streams. In addition, in one polarization direction, q bits that are mapped to one symbol through the symbol mapping processing are from a same first encoded data stream.

In still another possible implementation, M consecutive dual-polarization symbols other than the first symbol sequence (which may be referred to as the fixed symbol sequence) in the second dual-polarization symbol data stream totally include 2 × M symbols in the two polarization directions, the 2 × M symbols are obtained by performing symbol mapping on 2 × q × M bits, and the 2 × q × M bits are from the M first encoded data streams; and two symbols totally included in each dual-polarization symbol in the two polarization directions are obtained by performing symbol mapping on 2 × q bits that belong to a same first encoded data stream.

In still another possible implementation, P=M/2. In one polarization direction, the P consecutive symbols other than the first symbol sequence (which may be referred to as the fixed symbol sequence) in a first dual-polarization symbol data stream are obtained by performing symbol mapping processing on q × P bits. The q × P bits are from the M first encoded data streams, and every q/2 bits in the q × P bits are from one of the M first encoded data streams.

In still another possible implementation, P=a×M. In one polarization direction, P consecutive symbols in a first dual-polarization symbol data stream are obtained by performing symbol mapping processing on the q × P bits. The q × P bits are from the M first encoded data streams, and every a×q bits in the q × P bits are from one of the M first encoded data streams, where a is a positive integer.

It should be understood that, in the foregoing solution, the DSP framing processing is the framing operation performed on the bit. In the embodiment corresponding to FIG. 2, DSP framing processing is performed on the symbol. The third data processing may further include operations other than the DSP framing and the symbol mapping, for example, distribution and bit merging. For details, refer to the related descriptions in the embodiment corresponding to FIG. 2. Details are not described herein again.

The following describes, from a perspective of a receiver device, the solution provided in embodiments of this application. An execution process of the receiver device may be understood as an inverse process of the execution process of the transmitter device.

FIG. 24 is a schematic flowchart of a data processing method in optical communication according to an embodiment of this application. The method may be applied to a receiver device, for example, performed by the receiver device or a module in the receiver device. The module in the receiver device may be a chip or a chip system.

2401: Obtain W second dual-polarization symbol data streams, where W is an integer greater than 1, each of W first dual-polarization symbol data streams is located in two orthogonal polarization directions.

2402: Perform fourth data processing on the W first dual-polarization symbol data streams, to obtain M first encoded data streams.

M is an integer greater than 1, the fourth data processing includes receiver DSP and symbol demapping processing, and q × P bits are obtained by performing symbol demapping processing on P consecutive symbols other than a first symbol sequence in the first dual-polarization symbol data stream in one polarization direction. The first symbol sequence includes one or more of a pilot symbol, a frame alignment word, a training symbol, or a reserved symbol. The q × P bits enter (in other words, are distributed into) at least two of the M first encoded data streams, where P is an integer greater than 1, and q is a positive integer. In the polarization direction, q bits are obtained by performing symbol demapping processing on each symbol.

2403: Perform FEC decoding processing on the M first encoded data streams, to obtain a to-be-received bit data stream.

In some possible implementations, when P satisfies P=M, in the polarization direction, the q × P bits obtained by performing symbol demapping processing on the P symbols other than the first symbol sequence in the second dual-polarization symbol data stream enter the M first encoded data streams. Every q bits enter a same first encoded data stream in the M first encoded data streams.

In some other possible implementations, P may satisfy P=M. Further, the $q \times P$ bits enter the M first encoded data streams, and every 2xq bits in the $q \times P$ bits enter a same first encoded data stream in the M first encoded data streams.

In still some other possible implementations, when P satisfies P=M, in the polarization direction, the q bits obtained by performing symbol demapping on each symbol enter a same first encoded data stream.

In still some possible implementations, M consecutive dual-polarization symbols other than the first symbol sequence in the second dual-polarization symbol data stream totally include $2 \times M$ symbols in the two polarization directions, $2 \times q \times M$ bits are obtained by performing symbol demapping on the $2 \times M$ symbols, and the $2 \times q \times M$ bits enter the M first encoded data streams. $2 \times q$ bits obtained by performing symbol demapping on two symbols totally included in each dual-polarization symbol in the two polarization directions enter a same first encoded data stream.

It should be noted that, in one polarization direction, the symbol demapping includes but is not limited to QPSK or quadrature amplitude modulation QAM.

Correspondingly, the fourth data processing may further include polarization combining, data merging, and the like. The polarization combining is an inverse process of polarization distribution. It may be understood as that the polarization combining is combining a dual-polarization symbol data stream into one symbol data stream. The data merging is an inverse process of data distribution. It may be understood as that the data merging is merging W data streams into one data stream.

With reference to the accompanying drawings and a plurality of implementation of data distribution (data merging), the following describes several manners provided in embodiments of this application.

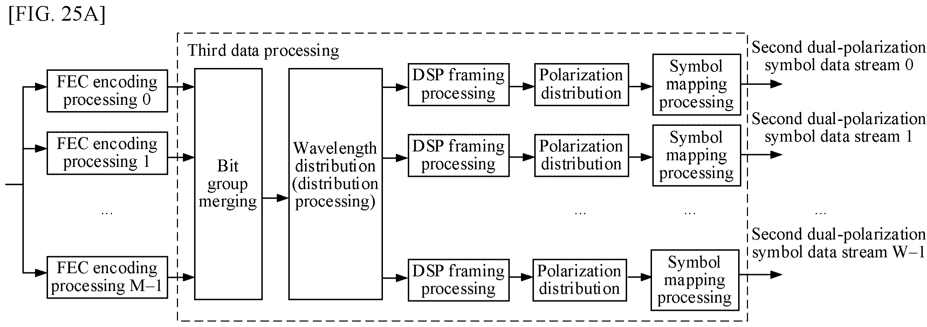

In a twelfth implementation, DSP framing processing is a framing operation performed on a bit. FIG. 25A is a schematic flowchart of a data sending method in optical communication according to an embodiment of this application. In FIG. 25A, that bit group merging and distribution processing are separately performed is used as an example.

A transmitter device performs M paths of parallel FEC encoding processing on a to-be-sent bit data stream, to obtain M first encoded data streams. Then, "bit group merging" is performed on the M first encoded data streams. That is, the M first encoded data streams are merged into a second encoded data stream. Then, distribution processing (which may also be referred to as wavelength distribution or interleaving processing) is performed on the second encoded data stream, to obtain W third encoded data streams. Every $L_1$ consecutive bits in the second encoded data stream are distributed into one third encoded data stream, where $L_1$ is a positive integer. DSP framing processing, polarization distribution, and symbol mapping processing are performed on each of the W third encoded data streams, to obtain W to-be-sent dual-polarization symbol data streams. Further, the W to-be-sent dual-polarization symbol data streams may be carried on W paths of optical signals with different wavelengths, and be sent. Alternatively, the W to-be-sent dual-polarization symbol data streams are sent through W optical fibers respectively. Alternatively, the W to-be-sent dual-polarization symbol data streams are respectively carried on W subcarriers, digital subcarrier multiplexing is performed to obtain one path of signals, and the path of signals are sent.

It should be noted that DSP framing processing is operated before the symbol mapping, and is inserting a fixed bit into an obtained data sequence before the symbol mapping according to a used symbol mapping rule, where the fixed bit is a bit corresponding to one or more of a frame alignment word, a training symbol, a reserved symbol, and a pilot symbol, namely, the bit corresponding to the foregoing first symbol sequence.

In some embodiments, when the M first encoded data streams are merged into the second encoded data stream, $S_0$ consecutive bits may be obtained from each of the M first encoded data streams in a round-robin fashion, and $S_0 \times M$ bits are obtained in total. The $S_0$ bits may alternatively be understood as a bit set. That is, every M consecutive bit sets in the second encoded data stream are from the M first encoded data streams, and each of the M bit sets includes $S_0$ consecutive bits from a same first encoded data stream, where $S_0$ is a positive integer.

Further, when wavelength distribution is performed on the second encoded data stream, every $L_1 = U \times S_0 \times \frac{M}{W}$ bits may be distributed into one third encoded data stream, where U is a positive integer. In other words, $L_1$ is an integer multiple of $S_0 \times \frac{M}{W}$. In an example, $L_1$ is W/2 times of $S_0 \times \frac{M}{W}$. In another example, $L_1$ is W times of $S_0 \times \frac{M}{W}$. That is, $L_1 = S_0 \times M$. For example, $S_0$ may be a multiple of q. For example, $S_0 = q$. For another example, $S_0 = 2 \times q$.

$L_1 = S_0 \times M$ and $S_0 = 2 \times q$ are used as an example to describe a data processing procedure in optical communication.

The to-be-sent bit data stream is input into M FEC encoding processing units, namely, FEC encoding processing 0, FEC encoding processing 1, ..., and FEC encoding processing M-1, in the round-robin (round-robin) fashion.

$W \times (q \times 2)$ bits are obtained from each of the M first encoded data streams output by the M FEC encoding processing units, $W \times (q \times 2) \times M$ bits are obtained in total, and "bit group merging" in FIG. 25A is performed to output one second encoded data stream. Then, "distribution processing" (which is also referred to as the wavelength distribution) in FIG. 25A is performed the second encoded data stream, so that the $W \times (q \times 2) \times M$ bits are distributed in the W third encoded data streams output through the "distribution processing", where each output third encoded data stream includes $(q \times 2) \times M$ of the $W \times (q \times 2) \times M$ bits. DSP framing, polarization distribution, and symbol mapping are performed on each output third encoded data stream, to obtain a to-be-sent dual-polarization symbol data stream.

It should be noted that, for the $(q \times 2) \times M$ bits in each output third encoded data stream, polarization distribution and symbol mapping are performed to obtain M dual-polarization symbols, where $q \times 2$ bits are mapped to one dual-polarization symbol. That is, in one polarization direction, q bits are mapped to one symbol.

In an example, specific operations of the "bit group merging" and "distribution processing" processing in FIG. 25A are as follows:

The "bit group merging" is obtaining, in the round-robin fashion from the first encoded data streams output by the M FEC encoding processing units, a bit set $v_i^j$ including $q \times 2$ bits, where $0 \leq i < M$, and $0 \leq j < W$. The bit set $v_i^j$ including the $q \times 2$ bits is a $j^{th}$ group of $q \times 2$ bits obtained from a first encoded data stream output by an $i^{th}$ FEC encoding processing unit. The $W \times (q \times 2) \times M$ bits are obtained in total, namely, $v_0^0, v_1^0, ..., v_{M-1}^0, v_0^1, v_1^1, ..., v_{M-1}^1, v_0^2, v_1^2, ..., v_{M-1}^2, ..., v_0^{W-1}, v_1^{W-1}, ...,$ and $v_{M-1}^{W-1}$, and are input into a "distribution processing" unit.

The "distribution processing" is outputting the $W \times (q \times 2) \times M$ bits in total, namely, $v_0^0, v_1^0, ..., v_{M-1}^0, v_0^1, v_1^1, ..., v_{M-1}^1, v_0^2, v_1^2, ..., v_{M-1}^2, ..., v_0^{W-1}, v_1^{W-1}, ...,$ and $v_{M-1}^{W-1}$, to W output data streams in the round-robin fashion at a granularity of $M \times (q \times 2)$ bits. That is, the $(q \times 2) \times M$ bits $v_0^j, v_1^j, ...,$ and $v_{M-1}^j$ are output to a $j^{th}$ ($0 \leq j < W$) third encoded data stream.

In FIG. 25A, an example in which polarization distribution is performed before the symbol mapping processing is used. In some possible application scenarios, symbol mapping may be performed before the polarization distribution. In some possible embodiments, when polarization distribution is performed before the symbol mapping processing, DSP framing processing may be performed after the polarization distribution and before the symbol mapping processing.

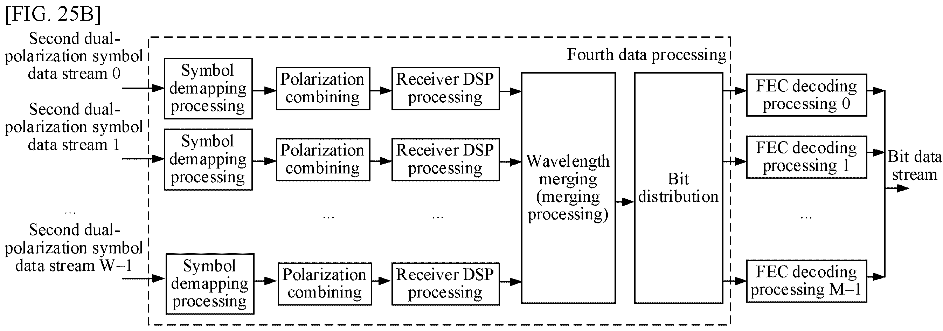

FIG. 25B is a schematic flowchart of a data receiving method in optical communication according to an embodiment of this application. FIG. 25B is an inverse process of the procedure described in FIG. 25A. For corresponding descriptions, refer to the related descriptions in FIG. 25A.

A receiver receives W second dual-polarization symbol data streams; then performs symbol demapping processing and polarization combining processing on each of the W second dual-polarization symbol data streams, to obtain W eighth encoded data streams; performs receiver DSP processing on each of the W eighth encoded data streams, to obtain W third encoded data streams; merges the W third encoded data streams, to obtain a second encoded data stream; distributes the second encoded data stream into M first encoded data streams; and then, performs FEC decoding processing on the M first encoded data streams, to obtain one or more bit data streams.

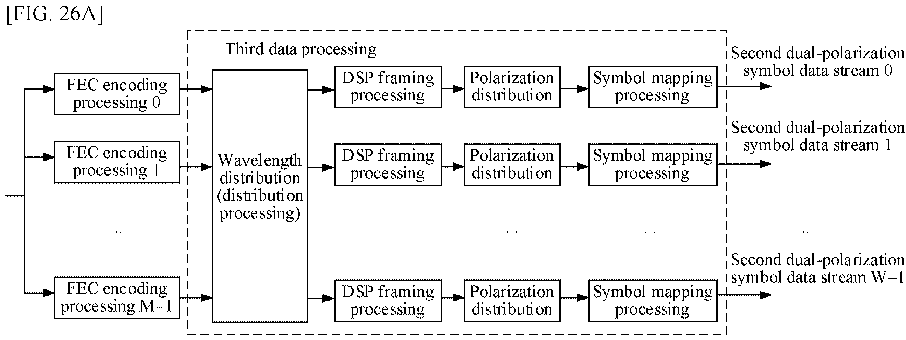

In a thirteenth implementation, as shown in the figure, DSP framing processing is a framing operation performed on a bit. FIG. 26A is a schematic flowchart of a data sending method in optical communication according to an embodiment of this application. In FIG. 26A, that bit group merging and distribution processing are performed through merging is used as an example.

A transmitter device performs M paths of parallel FEC encoding processing on a to-be-sent bit data stream, to obtain M first encoded data streams. Then, distribution processing (which may also be referred to as wavelength distribution or interleaving processing) is performed on the M first encoded data streams. That is, the M first encoded data streams may be distributed into W fourth encoded data streams. Further, DSP framing processing, dual-polarization distribution, and symbol mapping processing are performed on each of the W fourth encoded data streams, to obtain W to-be-sent dual-polarization symbol data streams. Further, the W to-be-sent dual-polarization symbol data streams may be carried on W paths of optical signals with different wavelengths, and be sent. Alternatively, the W to-be-sent dual-polarization symbol data streams are sent through W optical fibers respectively. Alternatively, the W to-be-sent dual-polarization symbol data streams are respectively carried on W subcarriers, digital subcarrier multiplexing is performed to obtain one path of signals, and the path of signals are sent.

In some embodiments, every $S_1 \times M/W$ consecutive bits in each fourth encoded data stream are from the M first encoded data streams, and a quantity of bits that belong to each of the M first encoded data streams in every $S_1 \times M/W$ consecutive bits in the fourth encoded data stream is the same, where $S_1$ is a positive integer, and $S_1 \times M$ is an integer multiple of W.

In an example, $S_0$ consecutive bits may be obtained from each of the M first encoded data streams in a round-robin fashion, and $S_0 \times M$ bits are obtained in total. The $S_0$ bits may alternatively be understood as a bit set. Then, the bits obtained from each first encoded data stream are distributed into the W fourth encoded data streams. $S_0$ is a positive integer. $S_1$ may be a multiple of $2 \times q$. For example, $S_1 = 2 \times q \times W$, every $2 \times q \times M$ consecutive bits in each fourth encoded data stream include M bit sets, the M bit sets are from different first encoded data streams, and each of the M bit

sets includes $2 \times q$ consecutive bits that belong to a same first encoded data stream.

$S_1 = 2 \times q \times W$ and $S_0 = 2 \times q$ are used as an example to describe a data processing procedure in optical communication.

The to-be-sent bit data stream is input into M FEC encoding processing units, namely, FEC encoding processing 0, FEC encoding processing 1, ..., and FEC encoding processing M-1, in the round-robin (round-robin) fashion.

$W \times (q \times 2)$ bits are obtained from each of the M first encoded data streams output by the M FEC encoding processing units, and $W \times (q \times 2) \times M$ bits are obtained in total. Then, "distribution processing" (which is also referred to as the wavelength distribution) in FIG. 26A is performed on the M first encoded data streams, so that the $W \times (q \times 2) \times M$ bits are distributed in the W fourth encoded data streams output through the "distribution processing", where each output fourth encoded data stream includes $(q \times 2) \times M$ of the $W \times (q \times 2) \times M$ bits. DSP framing, polarization distribution, and symbol mapping are performed on each output fourth encoded data stream, to obtain a to-be-sent dual-polarization symbol data stream.

It should be noted that, for the $(q \times 2) \times M$ bits in each output fourth encoded data stream, polarization distribution and symbol mapping are performed to obtain M dual-polarization symbols, where $q \times 2$ bits are mapped to one dual-polarization symbol. That is, in one polarization direction, q bits are mapped to one symbol.

In an example, specific operations of the "distribution processing" processing in FIG. 26A are as follows:
During the "distribution processing" processing, $q \times 2$ bits are obtained, in the round-robin fashion, from the M first encoded data streams output through M paths of FEC encoding processing, to obtain a bit set $v_i^j$, where $0 \leq i < M$, and $0 \leq j < W$. The bit set $v_i^j$ including the $q \times 2$ bits is a $j^{th}$ bit set that includes the $q \times 2$ bits and that is obtained from a first encoded data stream output through an $i^{th}$ path of FEC encoding processing. The $W \times (q \times 2) \times M$ bits are obtained in total:

$$v_0^0, v_1^0, ..., v_{M-1}^0, v_0^1, v_1^1, ..., v_{M-1}^1, v_0^2, v_1^2, ..., v_{M-1}^2, ..., v_0^{W-1}, v_1^{W-1}, ..., \text{and } v_{M-1}^{W-1} .$$

Then, output to the W fourth encoded data streams is performed in the round-robin fashion at a granularity of $M \times (q \times 2)$ bits. That is, the $(q \times 2) \times M$ bits $v_0^0, v_1^0, ..., \text{and } v_{M-1}^0$ are output to a $j^{th}$ ($0 \leq j < W$) fourth encoded data stream.

It should be noted that a difference between FIG. 26A and FIG. 25A lies in that, after a bit set is obtained, in the round-robin fashion, from the M first encoded data streams output through the M paths of FEC encoding processing, the bit set is not merged into one encoded data stream, but is directly distributed into W encoded data streams according to a rule.

In FIG. 26A, an example in which polarization distribution is performed before the symbol mapping processing is used. In some possible application scenarios, symbol mapping may be performed before the polarization distribution. In some possible embodiments, when polarization distribution is performed before the symbol mapping processing, DSP framing processing may be performed after the polarization distribution and before the symbol mapping processing.

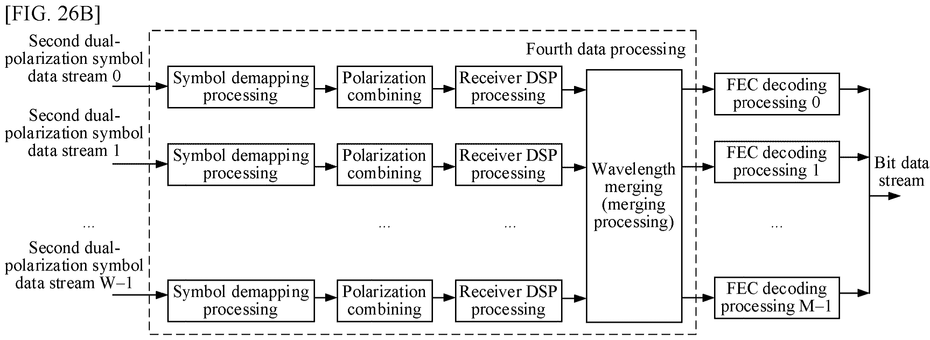

FIG. 26B is a schematic flowchart of a data receiving method in optical communication according to an embodiment of this application. FIG. 26B is an inverse process of the procedure described in FIG. 26A. For corresponding descriptions, refer to the related descriptions in FIG. 26A.

A receiver receives W second dual-polarization symbol data streams; then performs symbol demapping processing and polarization combining processing on each of the W second dual-polarization symbol data streams, to obtain W ninth encoded data streams; performs receiver DSP processing on each of the W ninth encoded data streams, to obtain W fourth encoded data streams; distributes the W fourth encoded data streams into M first encoded data streams; and then performs FEC decoding processing on the M first encoded data streams, to obtain one or more bit data streams.

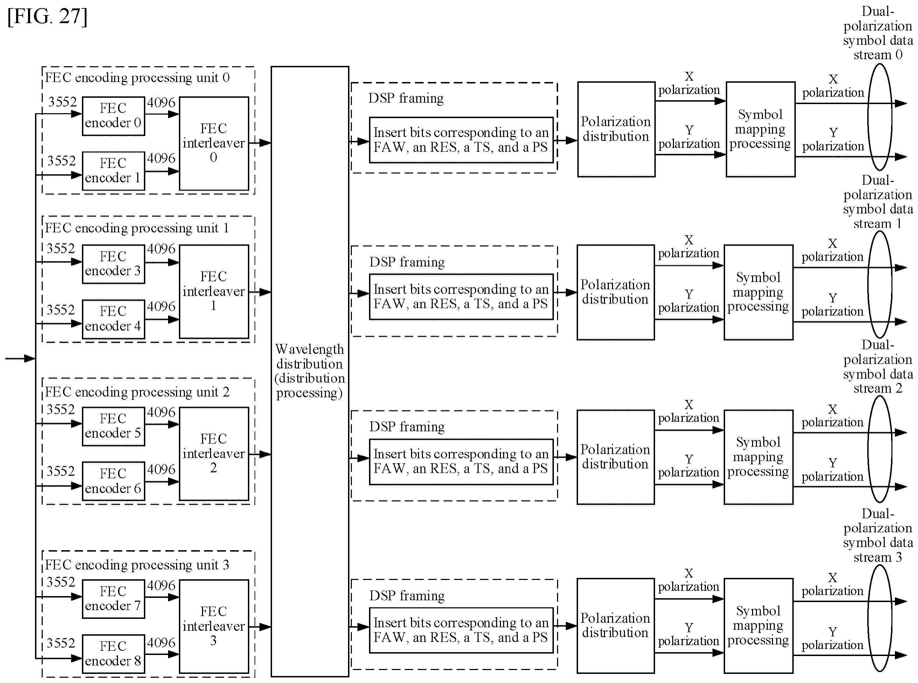

Scenario 5: For example, M=4, 16QAM (q=4) is used for symbol mapping, and W=4. FIG. 27 is a diagram of a data sending procedure provided in a scenario 5 according to an embodiment of this application. As shown in FIG. 27, a data stream sending procedure is based on the scenario 4, and a DSP framing processing operation is performed on a bit. For specific operations of wavelength distribution (which is also referred to as distribution processing), refer to the descriptions of scenario 4. Details are not described herein again. In FIG. 27, for example, the OFEC code is used for the FEC encoding. It should be noted that, in some specific application, the FEC encoding processing may further include probabilistic constellation shaping PCS processing, as shown in FIG. 18. More specifically, the data stream that has not been input into the OFEC encoding includes two parts. One part is bit data obtained through the PCS processing, and the occurrence probabilities of 0 and 1 of the bit data are unequal. The other part is bit data obtained without the PCS processing, and the occurrence probabilities of 0 and 1 of the bit data are equal. In a specific scenario, as shown in FIG. 18, the OFEC encoding is encoding the 3552 to-be-encoded bits, to obtain the 4096 encoded bits, where 2048 of the 3552 to-be-encoded bits are obtained through the PCS processing.

An embodiment of this application further provides a data processing apparatus in optical communication. The apparatus may be a transmitter device or a component (or a module) used in the transmitter device. The apparatus includes a plurality of units, configured to implement any one of the foregoing data sending methods in optical communication in FIG. 5A to FIG. 22. In a possible manner, the data processing apparatus may include M FEC encoding processing units and a first data processing unit. Each FEC encoding processing unit is configured to implement an "FEC encoding processing" function. For example, each FEC encoding processing unit may include two FEC encoding units and one interleaving unit. In some embodiments, the first data processing unit may include one or more symbol mapping units, one or more polarization distribution units, one wavelength distribution unit (which may also be referred to as a distribution processing unit), and the like. The first data processing unit may further include one or more bit group merging units. In some possible implementations, the data processing apparatus may further include one or more DSP framing units. The symbol mapping unit is configured to implement a symbol mapping processing function, the polarization distribution unit may be configured to implement a polarization distribution function, and the wavelength distribution unit may be configured to implement a distribution processing (in other words, wavelength distribution) function. The DSP framing unit implements a DSP framing function. Specific functions performed by the units are described above. Details are not described herein again.

In some other embodiments, the first data processing unit may include one or more symbol mapping units, one or more polarization distribution units, and one exchange processing unit. The first data processing unit may further include one or more bit group merging units. In some possible implementations, the data processing apparatus may further include one or more DSP framing units, and the like. The exchange processing unit is configured to implement an exchange processing function. Specific functions performed by the units are described above. Details are not described herein again.

An embodiment of this application further provides a data processing apparatus in optical communication. The apparatus may be a receiver device or a component (or a module) used in the receiver device. The apparatus includes a plurality of units, configured to implement any one of the foregoing data receiving methods in optical communication. In a possible manner, the data processing apparatus may include M FEC decoding processing units and a second data processing unit. Each FEC decoding processing unit is configured to implement an "FEC decoding processing" function. For example, each FEC decoding processing unit may include two FEC decoding units and one interleaving unit. In some embodiments, the second data processing unit may include one or more symbol demapping units, one or more polarization combining units, one wavelength merging unit (which may also be referred to as a merging processing unit), and the like. The second data processing unit may further include one or more bit merging units. The data processing apparatus may further include one or more receiver DSP units. The symbol demapping unit is configured to implement a symbol demapping processing function, the polarization combining unit may be configured to implement a polarization combining function, and the wavelength merging unit may be configured to implement a wavelength merging processing function. The receiver DSP unit is configured to implement a receiver DSP function. Specific functions performed by the units are described above. Details are not described herein again.

In some other embodiments, the second data processing unit may include one or more symbol demapping units, one or more polarization combining units, and one inverse exchange processing unit. The second data processing unit may further include one or more bit group merging units. The data processing apparatus may further include one or more receiver DSP units. The inverse exchange processing unit is configured to implement an inverse exchange processing function. Specific functions performed by the units are described above. Details are not described herein again.

It should be noted that the units may be physically independent units, or may be a same unit integrated together; and each may be a logical unit obtained through division based on a function, or each may be a corresponding hardware unit. In some embodiments, when the units each are the logical unit, each function described in FIG. 5A to FIG. 21 may correspond to one unit. For example, a polarization distribution function may be understood as being performed by one polarization distribution unit. In some embodiments, when a plurality of data streams are processed, it may be understood as that a plurality of polarization distribution units may be included. The plurality of polarization distribution units perform the polarization distribution function in parallel.

An embodiment of this application further provides a data processing apparatus in optical communication. The apparatus may be a transmitter device or a component (or a module) used in the transmitter device. The apparatus includes a plurality of units, configured to implement any one of the foregoing data sending methods in optical communication in FIG. 23, FIG. 24, FIG. 25A, FIG. 25B, FIG. 26A, FIG. 26B, and FIG. 27. In a possible manner, the data processing apparatus may include M FEC encoding processing units and a third data processing unit. Each FEC encoding processing unit is configured to implement an "FEC encoding processing" function. For example, each FEC encoding processing unit may include two FEC encoding units and one interleaving unit. In some embodiments, the third data processing unit may include one or more symbol mapping units, one or more polarization distribution units, one wavelength distribution unit (which may also be referred to as a distribution processing unit), and the like. The third data processing unit may further include one or more bit group merging units. In some possible implementations, the third data processing unit may further include one or more DSP framing units. The symbol mapping unit is configured to implement a symbol mapping processing function, the polarization distribution unit may be configured to implement a polarization distribution function, and the wavelength distribution unit may be configured to implement a distribution processing (in other words, wavelength distribution) function. The DSP framing unit implements a DSP framing function. Specific functions performed by the units are described above. Details are not described herein again.

In some other embodiments, the third data processing unit may include one or more symbol mapping units, one or more polarization distribution units, and one exchange processing unit. The third data processing unit may further include one or more bit group merging units. In some possible implementations, the third data processing unit may further include one or more DSP framing units, and the like. The exchange processing unit is configured to implement an exchange processing function. Specific functions performed by the units are described above. Details are not described herein again.

An embodiment of this application further provides a data processing apparatus in optical communication. The apparatus may be a receiver device or a component (or a module) used in the receiver device. The apparatus includes a plurality of units, configured to implement any one of the foregoing data receiving methods in optical communication in FIG. 24 to FIG. 26B. In a possible manner, the data processing apparatus may include M FEC decoding processing units and a fourth data processing unit. Each FEC decoding processing unit is configured to implement an "FEC decoding processing" function. For example, each FEC decoding processing unit may include two FEC decoding units and one interleaving unit. In some embodiments, the fourth data processing unit may include one or more symbol demapping units, one or more polarization combining units, one wavelength merging unit (which may also be referred to as a merging processing unit), and the like. The fourth data processing unit may further include one or more bit merging units. The fourth data processing unit may further include one or more receiver DSP units. The symbol demapping unit is configured to implement a symbol demapping processing function, the polarization combining unit may be configured to implement a polarization combining function, and the wavelength merging unit may be configured to implement a wavelength merging processing function. The receiver DSP unit is configured to implement a receiver DSP function. Specific functions performed by the units are described above. Details are not described herein again.

In some other embodiments, the fourth data processing unit may include one or more symbol demapping units, one or more polarization combining units, and one inverse exchange processing unit. The fourth data processing unit may further include one or more bit group merging units. The fourth data processing unit may further include one or more receiver DSP units. The inverse exchange processing unit is configured to implement an inverse exchange processing function. Specific functions performed by the units are described above. Details are not described herein again.

It should be noted that the units may be physically independent units, or may be a same unit integrated together; and each may be a logical unit obtained through division based on a function, or each may be a corresponding hardware unit. In some embodiments, when the units each are the logical unit, each function described in FIG. 23, FIG. 24, FIG. 25A, FIG. 25B, FIG. 26A, FIG. 26B, and FIG. 27 may correspond to one unit. For example, a polarization distribution function may be understood as being performed by one polarization distribution unit. In some embodiments, when a plurality of data streams are processed, it may be understood as that a plurality of polarization distribution units may be included. The plurality of polarization distribution units perform the polarization distribution function in parallel.

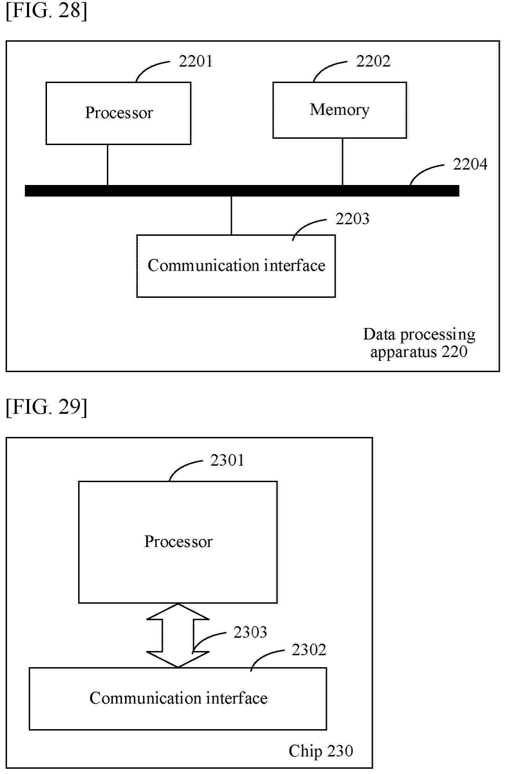

FIG. 28 is a diagram of a structure of a data processing apparatus according to an embodiment of this application. As shown in FIG. 28, the data processing apparatus 220 may include one or more processors 2201, a memory 2202, and a communication interface 2203. These components may be connected to each other through a bus 2204 or in another manner. In FIG. 28, an example in which these components are connected to each other through the bus is used. The processor 2201 may be a general-purpose processor, for example, a central processing unit (central processing unit, CPU), a digital signal processor (digital signal processor, DSP), an application-specific integrated circuit (application-specific integrated circuit, ASIC), or one or more integrated circuits configured to implement embodiments of this application. The processor 2201 may process data received through the communication interface 2203. The processor 2201 may further process a signal or data to be sent to the communication interface 2203. It should be noted that the memory is optional. In an embodiment, the processor and the memory in the data processing apparatus are two independent structures.

The memory 2202 may be coupled to the processor 2201 through the bus 2204 or an input/output port, or the memory 2202 may be integrated with the processor 2201. The memory 2202 is configured to store various software programs and/or a plurality of groups of instructions. Specifically, the memory 2202 may include a high-speed random access memory, and may also include a nonvolatile memory, for example, one or more disk storage devices, a flash memory device, or another nonvolatile solid-state storage device. The memory 2202 may further store program code. The program code may be for communicating with one or more attached devices, one or more terminals, or one or more network devices. The communication interface 2203 may be configured to receive a signal or data that is input into the data processing apparatus 220, or may be configured to output a signal or data that is obtained by the processor 2201 through processing. There may be one or more communication interfaces 2203.

The processor 2201 may be configured to read and execute computer-readable instructions. In a possible application scenario, the data processing apparatus is used in a transmitter device or a component in the transmitter device. The processor 2201 may be configured to: invoke a program stored in the memory 2202, for example, an implementation program in the transmitter device in the data processing method provided in one or more embodiments of this application, and execute instructions included in the program, to implement a data processing method in a subsequent embodiment. In another possible application scenario, the data processing apparatus is used in a receiver device or a component in the receiver device. The processor 2201 may be configured to: invoke a program stored in the memory 2202, for example, an implementation program in the receiver device in the data processing method provided in one or more embodiments of this application, and execute instructions included in the program, to implement a data processing method in a subsequent embodiment.

The data processing apparatus 220 shown in FIG. 28 is merely an implementation of this embodiment of this application. In actual application, the data processing apparatus 220 may further include more or fewer components. This is not limited herein.

FIG. 29 is a diagram of a structure of a chip according to an embodiment of this application. As shown in FIG. 29, the chip 230 may include a processor 2301, and one or more communication interfaces 2302 coupled to the processor 2301.

The processor 2301 may be configured to read and execute computer-readable instructions. During specific implementation, the processor 2301 may mainly include a controller, an arithmetic logic unit, and a register. The controller is mainly responsible for instruction decoding, and sends a control signal for an operation corresponding to the instructions. The arithmetic logic unit is mainly responsible for performing a fixed-point or floating-point arithmetic operation, a shift operation, a logic operation, and the like, and may also perform an address operation and address translation. The register is mainly responsible for storing a register operand, intermediate operation results, and the like that are temporarily stored in an instruction execution process. During specific implementation, a hardware architecture of the processor 2301 may be an application-specific integrated circuit (application-specific integrated circuit, ASIC) architecture, an MIPS architecture, an ARM architecture, an NP architecture, or the like. The processor 2301 may be a single-core processor or a multi-core processor. The communication interface 2302 may be configured to input a to-be-processed signal or data to the processor 2301, and may output a processing result of the processor 2301 to the outside. For example, the communication interface 2302 may be a general-purpose input/output (general-purpose input/output, GPIO) interface, and may be connected to a plurality of peripheral devices (for example, a display (LCD), a camera (camera), and a radio frequency (radio frequency, RF) module). The communication interface 2302 is connected to the processor 2301 through a bus 2303.

In this application, the processor 2301 may be configured to invoke, from a memory, an implementation program on a transmitter device side in the data processing method provided in one or more embodiments of this application, and execute instructions included in the program; or may be configured to invoke, from a memory, an implementation program on a receiver device side in the data processing method provided in one or more embodiments of this application, and execute instructions included in the program. The communication interface 2302 may be configured to output an execution result of the processor 2301. In this application, the communication interface 2302 may be specifically configured to output a bit data stream obtained by the processor 2301 through processing, or output W dual-polarization symbol data streams obtained by the processor 2301 through processing. For the data processing method provided in one or more embodiments of this application, refer to the embodiments shown in FIG. 2 to FIG. 4, FIG. 5A, FIG. 5B, FIG. 6A, FIG. 6B, FIG. 7A, FIG. 7B, FIG. 8A, FIG. 8B, FIG. 9A to FIG. 9D, FIG. 10A to FIG. 10D, FIG. 11A, FIG. 11B, FIG. 12A, FIG. 12B, FIG. 13A, FIG. 13B, FIG. 14A, FIG. 14B, FIG. 15A, FIG. 15B, FIG. 16 to FIG. 24, FIG. 25A, FIG. 25B, FIG. 26A, FIG. 26B, and FIG. 27. Details are not described herein again.

It should be noted that a function corresponding to each of the processor 2301 and the communication interface 2302 may be implemented by using a hardware design, may be implemented by using a software design, or may be implemented by a combination of software and hardware. This is not limited herein.

The readable storage medium in embodiments of this application may include any medium that can store program code, such as a USB flash disk, a removable hard disk, a read-only memory, a random access memory, a magnetic disk, or an optical disc.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be for implementing each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of the another programmable data processing device generate an apparatus for implementing a specific function in one or more procedures in the flowcharts and/or in one or more blocks in the block diagrams.

These computer program instructions may alternatively be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to embodiments of this application without departing from the scope of embodiments of this application. In this case, this application is intended to cover these modifications and variations of embodiments of this application provided that they fall within the scope of the claims of this application and equivalent technologies thereof.

## Claims

1.  A data processing method in optical communication, comprising:

    obtaining a to-be-sent bit data stream;
    performing forward error correction FEC encoding processing on the to-be-sent bit data stream, to obtain M first encoded data streams, wherein M is an integer greater than 1; and
    performing first data processing on the M first encoded data streams, to obtain W first dual-polarization symbol data streams, wherein
    W is an integer greater than 1; each of the W first dual-polarization symbol data streams is located in two orthogonal polarization directions; the first data processing comprises symbol mapping processing; in either of the two polarization directions, P consecutive symbols in the first dual-polarization symbol data stream are obtained by performing symbol mapping processing on $q \times P$ bits, and the $q \times P$ bits are from at least two of the M first encoded data streams, wherein P is an integer greater than 1, and q is a positive integer; and in either polarization direction, each symbol is obtained by performing symbol mapping processing on q bits.

2.  The method according to claim 1, wherein the method further comprises:

    performing digital signal processing DSP framing on each of the W first dual-polarization symbol data streams, to obtain W second dual-polarization symbol data streams; and
    sending the W second dual-polarization symbol data streams on W paths of optical signals, wherein the W second dual-polarization symbol data streams are respectively carried on the W paths of optical signals, wavelengths of the W paths of optical signals are all different; or sending the W second dual-polarization symbol data streams through W optical fibers respectively; or performing digital subcarrier multiplexing on W subcarriers, to obtain one signal stream, and sending the signal stream, wherein the W second dual-polarization symbol data streams are respectively carried on the W subcarriers respectively.

3.  The method according to claim 1 or 2, wherein P=M, the $q \times P$ bits are from the M first encoded data streams, and every q bits in the $q \times P$ bits are from one of the M first encoded data streams.

4.  The method according to claim 3, wherein in either polarization direction, q bits that are mapped to one symbol through the symbol mapping processing are from a same first encoded data stream.

5.  The method according to claim 3 or 4, wherein M consecutive dual-polarization symbols in the first dual-polarization symbol data stream totally comprise $2 \times M$ symbols in the two polarization directions, the $2 \times M$ symbols are obtained by performing symbol mapping on $2 \times q \times M$ bits, and the $2 \times q \times M$ bits are from the M first encoded data streams; and two symbols totally comprised in each dual-polarization symbol in the two polarization directions are obtained by performing symbol mapping on $2 \times q$ bits that belong to a same first encoded data stream.

6.  The method according to any one of claims 1 to 5, wherein performing first data processing on the M first encoded data streams, to obtain the W first dual-polarization symbol data streams comprises:

    merging the M first encoded data streams into a second encoded data stream;

performing distribution processing on the second encoded data stream, to obtain W third encoded data streams;
performing symbol mapping processing on each of the W third encoded data streams, to obtain W first symbol data streams; and
performing polarization distribution on each of the W first symbol data streams, to obtain the W first dual-polarization symbol data streams.

7. The method according to claim 6, wherein every M consecutive bit sets in the second encoded data stream are from the M first encoded data streams, and each of the M bit sets comprises $S_0$ consecutive bits from a same first encoded data stream, wherein $S_0$ is a positive integer; and every $L_1$ consecutive bits in the second encoded data stream are distributed into one third encoded data stream, wherein $L_1$ is a positive integer, and $L_1$ is an integer multiple of $S_0 \times M/W$.

8. The method according to claim 7, wherein $L_1 = S_0 \times M$, and every $L_1$ consecutive bits in the third encoded data stream comprise the M bit sets from the M first encoded data streams.

9. The method according to any one of claims 1 to 5, wherein performing first data processing on the M first encoded data streams, to obtain the W first dual-polarization symbol data streams comprises:

   merging the M first encoded data streams into a second encoded data stream;
   performing symbol mapping processing on the second encoded data stream, to obtain a second symbol data stream;
   distributing the second symbol data stream, to obtain W third symbol data streams; and
   performing polarization distribution on each of the W third symbol data streams, to obtain the W first dual-polarization symbol data streams.

10. The method according to claim 9, wherein every M consecutive bit sets in the second encoded data stream are from the M first encoded data streams, and each of the M bit sets comprises $S_0$ consecutive bits from a same first encoded data stream, wherein $S_0$ is a positive integer; and every $2 \times L_2$ consecutive symbols in the third symbol data stream are obtained by performing symbol mapping processing on $L_2 \times 2 \times q$ bits, and the $L_2 \times 2 \times q$ bits are from the M first encoded data streams, wherein $L_2$ is a positive integer, and $L_2$ is an integer multiple of $S_0 \times M/(W \times q)$.

11. The method according to claim 10, wherein $L_2 = S_0 \times M/q$, and the $L_2 \times 2 \times q$ bits comprise the M bit sets from the M first encoded data streams.

12. The method according to any one of claims 1 to 5, wherein performing first data processing on the M first encoded data streams, to obtain the W first dual-polarization symbol data streams comprises:

   merging the M first encoded data streams into a second encoded data stream;
   performing symbol mapping processing on the second encoded data stream, to obtain a second symbol data stream;
   performing polarization distribution on the second symbol data stream separately, to obtain a third dual-polarization symbol data stream; and
   performing distribution processing on the third dual-polarization symbol data stream, to obtain the W first dual-polarization symbol data streams.

13. The method according to claim 12, wherein every M consecutive bit sets in the second encoded data stream are from the M first encoded data streams, and each of the M bit sets comprises $S_0$ consecutive bits from a same first encoded data stream, wherein $S_0$ is a positive integer, and P is an integer multiple of $S_0 \times M/(W \times 2 \times q)$.

14. The method according to any one of claims 7, 8, 10, 11, and 13, wherein $S_0 = 2 \times q$.

15. The method according to any one of claims 1 to 5, wherein performing first data processing on the M first encoded data streams, to obtain the W first dual-polarization symbol data streams comprises:

   distributing the M first encoded data streams into W fourth encoded data streams;
   performing symbol mapping processing on each of the W fourth encoded data streams, to obtain W fourth symbol data streams; and
   performing polarization distribution on each of the W fourth symbol data streams, to obtain the W first dual-polarization symbol data streams.

16. The method according to claim 15, wherein every $S_1 \times M/W$ consecutive bits in the fourth encoded data stream are from the M first encoded data streams, and a quantity of bits that belong to each of the M first encoded data streams in every $S_1 \times M/W$ consecutive bits in the fourth encoded data stream is the same, wherein $S_1$ is a positive integer, and $S_1 \times M$ is an integer multiple of W.

17. The method according to claim 16, wherein $S_1 = 2 \times q \times W$, every $2 \times q \times M$ consecutive bits in the fourth encoded data stream comprise M bit sets, the M bit sets are from different first encoded data streams, and each of the M bit sets comprises $2 \times q$ consecutive bits that belong to a same first encoded data stream.

18. The method according to any one of claims 1 to 5, wherein performing first data processing on the M first encoded data streams, to obtain the W first dual-polarization symbol data streams comprises:

performing symbol mapping processing on the M first encoded data streams, to obtain a fifth symbol data stream;
performing distribution processing on the fifth symbol data stream, to obtain W sixth symbol data streams; and
performing polarization distribution on the W sixth symbol data streams, to obtain the W first dual-polarization symbol data streams.

19. The method according to claim 18, wherein every $2 \times P$ consecutive symbols in the fifth symbol data stream are obtained by performing symbol mapping processing on $2 \times P \times q$ bits, and the $2 \times P \times q$ bits are from at least two of the M first encoded data streams; and every $2 \times P \times Z/W$ consecutive symbols in the $2 \times P \times Z$ consecutive symbols in the fifth symbol data stream are distributed into one sixth symbol data stream, wherein $2 \times P \times Z$ is an integer multiple of W, and Z is a positive integer.

20. The method according to any one of claims 1 to 5, wherein performing first data processing on the M first encoded data streams, to obtain the W first dual-polarization symbol data streams comprises:

performing symbol mapping processing on each of the M first encoded data streams, to obtain M eleventh symbol data streams;
performing distribution processing on the M eleventh symbol data streams, to obtain W sixth symbol data streams; and
performing polarization distribution on the W sixth symbol data streams, to obtain the W first dual-polarization symbol data streams.

21. The method according to claim 20, wherein every $S_1 \times M/W$ consecutive symbols in the sixth symbol data stream are from the M eleventh symbol data streams, and a quantity of symbols that belong to each of the M eleventh symbol data streams in every $S_1 \times M/W$ consecutive symbols in the sixth symbol data stream is the same, wherein $S_1$ is a positive integer, and $S_1 \times M$ is an integer multiple of W.

22. The method according to any one of claims 1 to 5, wherein performing first data processing on the M first encoded data streams, to obtain the W first dual-polarization symbol data streams comprises:

performing symbol mapping processing on the M first encoded data streams, to obtain a fifth symbol data stream;
performing polarization distribution on the fifth symbol data stream separately, to obtain a fourth dual-polarization symbol data stream; and
performing distribution processing on the fourth dual-polarization symbol data stream, to obtain the W first dual-polarization symbol data streams.

23. The method according to claim 22, wherein every P consecutive dual-polarization symbols in the fourth dual-polarization symbol data stream are obtained by performing symbol mapping processing on $2 \times P \times q$ bits, and the $2 \times P \times q$ bits are from at least two of the M first encoded data streams; and every $P \times Z/W$ consecutive symbols in the $P \times Z$ consecutive dual-polarization symbols in the fourth dual-polarization symbol data stream are distributed into one first dual-polarization symbol data stream, wherein $2 \times P \times Z$ is an integer multiple of W, and Z is a positive integer.

24. The method according to any one of claims 1 to 5, wherein performing first data processing on the M first encoded data streams, to obtain the W first dual-polarization symbol data streams comprises:

performing symbol mapping processing on each of the M first encoded data streams, to obtain M eleventh symbol data streams;

performing polarization distribution on each of the eleventh symbol data streams, to obtain M seventh dual-polarization symbol data streams; and

performing distribution processing on the M seventh dual-polarization symbol data streams, to obtain the W first dual-polarization symbol data streams.

25. The method according to claim 24, wherein every $S_1 \times M/W$ consecutive symbols in the first dual-polarization symbol data stream are from the M seventh dual-polarization symbol data streams, and a quantity of symbols that belong to each of the M seventh dual-polarization symbol data streams in every $S_1 \times M/W$ consecutive symbols in the first dual-polarization symbol data stream is the same, wherein $S_1$ is a positive integer, and $S_1 \times M$ is an integer multiple of W.

26. The method according to any one of claims 1 to 25, wherein M=4, and W=2; M=2, and W=2; or M=4, and W=4.

27. The method according to any one of claims 1 to 26, wherein performing FEC encoding processing on the to-be-sent bit data stream, to obtain the M first encoded data streams comprises:

performing FEC encoding on every $2 \times M$ bit sequences in the to-be-sent bit data stream in parallel, to obtain $2 \times M$ fifth encoded data streams, wherein each of the $2 \times M$ bit sequences comprises a plurality of bits; and

performing interleaving processing on every two fifth encoded data streams in the $2 \times M$ fifth encoded data streams, to obtain the M first encoded data streams.

28. A data processing method in optical communication, comprising:

obtaining W first dual-polarization symbol data streams, wherein W is an integer greater than 1, each of the W first dual-polarization symbol data streams is located in two orthogonal polarization directions; and

performing second data processing on the W first dual-polarization symbol data streams, to obtain M first encoded data streams, wherein

M is an integer greater than 1, the second data processing comprises symbol demapping processing, and $q \times P$ bits obtained by performing symbol demapping processing on P consecutive symbols in the first dual-polarization symbol data stream are distributed into at least two of the M first encoded data streams in either polarization direction, wherein P is an integer greater than 1, and q is a positive integer; and in either polarization direction, q bits are obtained by performing symbol demapping processing on each symbol; and

performing FEC decoding processing on the M first encoded data streams, to obtain a to-be-received bit data stream.

29. The method according to claim 28, wherein obtaining the W first dual-polarization symbol data streams comprises:

receiving W second dual-polarization symbol data streams from a transmitter device via W paths of optical signals with different wavelengths or through W optical fibers; or demultiplexing one received signal stream to obtain W subcarriers, to obtain W second dual-polarization symbol data streams from a transmitter device; and

performing receiver digital signal processing DSP on each of the W second dual-polarization symbol data streams, to obtain the W first dual-polarization symbol data streams.

30. The method according to claim 28 or 29, wherein P=M, the $q \times P$ bits are distributed into the M first encoded data streams, and every q bits in the $q \times P$ bits are distributed into one of the M first encoded data streams.

31. The method according to claim 30, wherein in either polarization direction, the q bits obtained by performing symbol demapping processing on each symbol are distributed into a same first encoded data stream.

32. The method according to claim 30 or 31, wherein M consecutive dual-polarization symbols in the first dual-polarization symbol data stream totally comprise $2 \times M$ symbols in the two polarization directions, $2 \times q \times M$ bits are obtained by performing symbol demapping on the $2 \times M$ symbols, and the $2 \times q \times M$ bits are distributed into the M first encoded data streams; and $2 \times q$ bits obtained by performing symbol demapping on two symbols totally comprised in each dual-polarization symbol in the two polarization directions are distributed into a same first encoded data stream.

33. The method according to any one of claims 28 to 32, wherein performing second data processing on the W first dual-polarization symbol data streams, to obtain the M first encoded data streams comprises:

performing polarization combining on each of the W first dual-polarization symbol data streams, to obtain W first symbol data streams;

performing symbol demapping on each of the W first symbol data streams, to obtain W third encoded data streams;

performing merging processing on the W third encoded data streams, to obtain a second encoded data stream; and distributing the second encoded data stream into the M first encoded data streams.

34. The method according to claim 33, wherein every M consecutive bit sets in the second encoded data stream are distributed into the M first encoded data streams, and each of the M bit sets comprises $S_0$ consecutive bits that belong to a same first encoded data stream, wherein $S_0$ is a positive integer; and every $L_1$ consecutive bits in the second encoded data stream are from a same third encoded data stream, wherein $L_1$ is a positive integer, and $L_1$ is an integer multiple of $S_0 \times M/W$.

35. The method according to claim 34, wherein $L_1 = S_0 \times M$, every $L_1$ consecutive bits in the third encoded data stream comprise the M bit sets, and the M bit sets are distributed into the M first encoded data streams.

36. The method according to any one of claims 28 to 32, wherein performing second data processing on the W first dual-polarization symbol data streams, to obtain the M first encoded data streams comprises:

performing polarization combining on the W first dual-polarization symbol data streams, to obtain W third symbol data streams;

merging the W third symbol data streams, to obtain a second symbol data stream;

performing symbol demapping processing on the second symbol data stream, to obtain a second encoded data stream; and

distributing the second encoded data stream into the M first encoded data streams.

37. The method according to claim 36, wherein every M consecutive bit sets in the second encoded data stream are distributed into the M first encoded data streams, and $S_0$ consecutive bits comprised in each of the M bit sets are distributed into a same first encoded data stream, wherein $S_0$ is a positive integer; and $L_2 \times 2 \times q$ bits are obtained by performing symbol demapping processing on every $2 \times L_2$ consecutive symbols in the third symbol data stream, and the $L_2 \times 2 \times q$ bits are distributed into the M first encoded data streams, wherein $L_2$ is a positive integer, and $L_2$ is an integer multiple of $S_0 \times M/(W \times q)$.

38. The method according to claim 37, wherein $L_2 = S_0 \times M/q$, and the $L_2 \times 2 \times q$ bits comprise the M bit sets that enter the M first encoded data streams.

39. The method according to any one of claims 28 to 32, wherein performing second data processing on the W first dual-polarization symbol data streams, to obtain the M first encoded data streams comprises:

performing merging processing on the W first dual-polarization symbol data streams, to obtain a third dual-polarization symbol data stream;

performing polarization combining on the third dual-polarization symbol data stream, to obtain a second symbol data stream;

performing symbol demapping processing on the second symbol data stream, to obtain a second encoded data stream; and

distributing the second encoded data stream into the M first encoded data streams.

40. The method according to claim 39, wherein every M consecutive bit sets in the second encoded data stream are distributed into the M first encoded data streams, and each of the M bit sets comprises $S_0$ consecutive bits that enter a same first encoded data stream, wherein $S_0$ is a positive integer, and P is an integer multiple of $S_0 \times M/(W \times 2 \times q)$.

41. The method according to any one of claims 34, 35, 37, 38, and 40, wherein $S_0 = 2 \times q$.

42. The method according to any one of claims 28 to 32, wherein performing second data processing on the W first dual-polarization symbol data streams, to obtain the M first encoded data streams comprises:

performing polarization combining on the W first dual-polarization symbol data streams, to obtain W fourth symbol data streams;

performing symbol demapping processing on the W fourth symbol data streams, to obtain W fourth encoded data streams; and
distributing the W fourth encoded data streams into the M first encoded data streams.

43. The method according to claim 42, wherein every $S_1 \times$ M/W consecutive bits in the fourth encoded data stream are distributed into the M first encoded data streams, and a quantity of bits that enter each of the M first encoded data streams in every $S_1 \times$ M/W consecutive bits in the fourth encoded data stream is the same, wherein $S_1$ is a positive integer, and $S_1 \times$ M is an integer multiple of W.

44. The method according to claim 43, wherein $S_1 = 2 \times q \times W$, every $2 \times q \times M$ consecutive bits in the fourth encoded data stream comprise M bit sets, the M bit sets are distributed into different first encoded data streams, and each of the M bit sets comprises $2 \times q$ consecutive bits that are distributed into a same first encoded data stream.

45. The method according to any one of claims 28 to 32, wherein performing second data processing on the W first dual-polarization symbol data streams, to obtain the M first encoded data streams comprises:

performing polarization combining on the W first dual-polarization symbol data streams, to obtain W sixth symbol data streams;
merging the W sixth symbol data streams, to obtain a fifth symbol data stream; and
performing symbol demapping processing on the fifth symbol data stream, to obtain the M first encoded data streams.

46. The method according to claim 45, wherein $2 \times P \times q$ bits are obtained by performing symbol demapping processing on every $2 \times P$ consecutive symbols in the fifth symbol data stream, and the $2 \times P \times q$ bits are distributed into at least two of the M first encoded data streams; and every $2 \times P \times$ Z/W consecutive symbols in the $2 \times P \times Z$ consecutive symbols in the fifth symbol data stream are from a same sixth symbol data stream, wherein $2 \times P \times Z$ is an integer multiple of W, and Z is a positive integer.

47. The method according to any one of claims 28 to 32, wherein performing second data processing on the W first dual-polarization symbol data streams, to obtain the M first encoded data streams comprises:

performing polarization combining on the W first dual-polarization symbol data streams, to obtain W sixth symbol data streams;
merging the W sixth symbol data streams, to obtain M eleventh symbol data streams; and
performing symbol demapping processing on each of the M eleventh symbol data streams, to obtain the M first encoded data streams.

48. The method according to claim 47, wherein every $S_1 \times$ M/W consecutive symbols in the sixth symbol data stream are distributed into the M eleventh symbol data streams, and a quantity of symbols that enter each of the M eleventh symbol data streams in every $S_1 \times$ M/W consecutive symbols in the sixth symbol data stream is the same, wherein $S_1$ is a positive integer, and $S_1 \times$ M is an integer multiple of W.

49. The method according to any one of claims 28 to 32, wherein performing second data processing on the W first dual-polarization symbol data streams, to obtain the M first encoded data streams comprises:

performing merging processing on the W first dual-polarization symbol data streams, to obtain a fourth dual-polarization symbol data stream;
performing polarization combining on the fourth dual-polarization symbol data stream, to obtain a fifth symbol data stream; and
performing symbol demapping processing on the fifth symbol data stream, to obtain the M first encoded data streams.

50. The method according to claim 49, wherein $2 \times P \times q$ bits are obtained by performing symbol demapping processing on every P consecutive dual-polarization symbols in the fourth dual-polarization symbol data stream, and the $2 \times P \times q$ bits are distributed into at least two of the M first encoded data streams; and every $P \times$ Z/W consecutive symbols in the $P \times Z$ consecutive dual-polarization symbols in the fourth dual-polarization symbol data stream are from a same first dual-polarization symbol data stream, wherein $2 \times P \times Z$ is an integer multiple of W, and Z is a positive integer.

51. The method according to any one of claims 28 to 32, wherein performing second data processing on the W first dual-polarization symbol data streams, to obtain the M first encoded data streams comprises:

performing merging processing on the W first dual-polarization symbol data streams, to obtain M seventh dual-polarization symbol data streams;
performing polarization combining on each of the M seventh dual-polarization symbol data streams, to obtain M eleventh symbol data streams; and
performing symbol demapping processing on each of the M eleventh symbol data streams, to obtain the M first encoded data streams.

52. The method according to claim 51, wherein every $S_1 \times M/W$ consecutive symbols in the first dual-polarization symbol data stream are distributed into the M seventh dual-polarization symbol data streams, and a quantity of symbols that enter each of the M seventh dual-polarization symbol data streams in every $S_1 \times M/W$ consecutive symbols in the first dual-polarization symbol data stream is the same, wherein $S_1$ is a positive integer, and $S_1 \times M$ is an integer multiple of W.

53. The method according to any one of claims 28 to 52, wherein M=4, and W=2; M=2, and W=2; or M=4, and W=4.

54. The method according to any one of claims 28 to 52, wherein performing FEC decoding processing on the M first encoded data streams, to obtain the to-be-received bit data stream comprises:

performing de-interleaving processing on the M first encoded data streams, to obtain $2 \times M$ fifth encoded data streams; and
performing FEC decoding processing on the $2 \times M$ fifth encoded data streams in parallel, to obtain the to-be-sent bit data stream, wherein
every $2 \times M$ consecutive bit sequences in the bit data stream are from the $2 \times M$ fifth encoded data streams, and a plurality of bits comprised in each of the $2 \times M$ bit sequences are from a same fifth encoded data stream.

55. A data processing method in optical communication, comprising:

obtaining a to-be-sent bit data stream;
performing forward error correction FEC encoding processing on the to-be-sent bit data stream, to obtain M first encoded data streams, wherein M is an integer greater than 1; and
performing third data processing on the M first encoded data streams, to obtain W second dual-polarization symbol data streams, wherein
W is an integer greater than 1; each of the W second dual-polarization symbol data streams is located in two orthogonal polarization directions; the third data processing comprises digital signal processing DSP framing processing and symbol mapping processing; in either of the two polarization directions, P consecutive symbols other than a first symbol sequence in the second dual-polarization symbol data stream are obtained by performing symbol mapping processing on $q \times P$ bits, the first symbol sequence comprises one or more of a pilot symbol, a frame alignment word, a training symbol, or a reserved symbol, and the $q \times P$ bits are from at least two of the M first encoded data streams, wherein P is an integer greater than 1, and q is a positive integer; and in either polarization direction, each symbol is obtained by performing symbol mapping processing on q bits.

56. The method according to claim 55, wherein the method further comprises:

carrying the W second dual-polarization symbol data streams on W paths of optical signals respectively, and sending the W second dual-polarization symbol data streams, wherein wavelengths of the W paths of optical signals are all different; sending the W second dual-polarization symbol data streams through W optical fibers respectively; or
carrying the W second dual-polarization symbol data streams on W subcarriers respectively, performing digital subcarrier multiplexing to obtain one signal stream, and sending the signal stream.

57. The method according to claim 55 or 56, wherein P=M, the $q \times P$ bits are from the M first encoded data streams, and every q bits in the $q \times P$ bits are from one of the M first encoded data streams.

58. The method according to claim 57, wherein in either polarization direction, q bits that are mapped to one symbol through the symbol mapping processing are from a same first encoded data stream.

**59.** The method according to claim 57 or 58, wherein M consecutive dual-polarization symbols other than the first symbol sequence in the second dual-polarization symbol data stream totally comprise $2 \times M$ symbols in the two polarization directions, the $2 \times M$ symbols are obtained by performing symbol mapping on $2 \times q \times M$ bits, and the $2 \times q \times M$ bits are from the M first encoded data streams; and two symbols totally comprised in each dual-polarization symbol in the two polarization directions are obtained by performing symbol mapping on $2 \times q$ bits that belong to a same first encoded data stream.

**60.** The method according to any one of claims 55 to 59, wherein performing third data processing on the M first encoded data streams, to obtain the W second dual-polarization symbol data streams comprises:

merging the M first encoded data streams into a second encoded data stream;
performing distribution processing on the second encoded data stream, to obtain W third encoded data streams;
performing DSP framing processing on each of the W third encoded data streams, to obtain W eighth encoded data streams; and
performing polarization distribution and symbol mapping on each of the W eighth encoded data streams, to obtain the W second dual-polarization symbol data streams.

**61.** The method according to claim 60, wherein
every M consecutive bit sets in the second encoded data stream are from the M first encoded data streams, and each of the M bit sets comprises $S_0$ consecutive bits from a same first encoded data stream, wherein $S_0$ is a positive integer; and every $L_1$ consecutive bits in the second encoded data stream are distributed into one third encoded data stream, wherein $L_1$ is a positive integer, and $L_1$ is an integer multiple of $S_0 \times M/W$.

**62.** The method according to claim 61, wherein $L_1 = S_0 \times M$, and every $L_1$ consecutive bits in the third encoded data stream comprise the M bit sets from the M first encoded data streams.

**63.** The method according to any one of claims 55 to 59, wherein performing third data processing on the M first encoded data streams, to obtain the W second dual-polarization symbol data streams comprises:

distributing the M first encoded data streams into W fourth encoded data streams;
performing DSP framing processing on each of the W fourth encoded data streams, to obtain W ninth encoded data streams; and
performing polarization distribution and symbol mapping on each of the W ninth encoded data streams, to obtain the W second dual-polarization symbol data streams.

**64.** The method according to claim 63, wherein every $S_1 \times M/W$ consecutive bits in the fourth encoded data stream are from the M first encoded data streams, and a quantity of bits that belong to each of the M first encoded data streams in every $S_1 \times M/W$ consecutive bits in the fourth encoded data stream is the same, wherein $S_1$ is a positive integer, and $S_1 \times M$ is an integer multiple of W.

**65.** The method according to claim 64, wherein $S_1 = 2 \times q \times W$, every $2 \times q \times M$ consecutive bits in the fourth encoded data stream comprise M bit sets, the M bit sets are from different first encoded data streams, and each of the M bit sets comprises $2 \times q$ consecutive bits that belong to a same first encoded data stream.

**66.** The method according to any one of claims 55 to 65, wherein M=4, and W=2; M=2, and W=2; or M=4, and W=4.

**67.** The method according to any one of claims 55 to 66, wherein performing FEC encoding processing on the to-be-sent bit data stream, to obtain the M first encoded data streams comprises:

performing FEC encoding on every $2 \times M$ bit sequences in the to-be-sent bit data stream in parallel, to obtain $2 \times M$ fifth encoded data streams, wherein each of the $2 \times M$ bit sequences comprises a plurality of bits; and
performing interleaving processing on every two fifth encoded data streams in the $2 \times M$ fifth encoded data streams, to obtain the M first encoded data streams.

**68.** A data processing method in optical communication, comprising:

obtaining W second dual-polarization symbol data streams, wherein W is an integer greater than 1, each of the W second dual-polarization symbol data streams is located in two orthogonal polarization directions;

performing fourth data processing on the W second dual-polarization symbol data streams, to obtain M first encoded data streams, wherein

M is an integer greater than 1; the fourth data processing comprises receiver DSP processing and symbol demapping processing, and $q \times P$ bits obtained by performing symbol demapping processing on P consecutive symbols other than a first symbol sequence in the second dual-polarization symbol data stream are distributed into at least two of the M first encoded data streams in either polarization direction; the first symbol sequence comprises one or more of a pilot symbol, a frame alignment word, a training symbol, or a reserved symbol, P is an integer greater than 1,

and q is a positive integer; and in either polarization direction, q bits are obtained by performing symbol demapping processing on each symbol; and

performing FEC decoding processing on the M first encoded data streams, to obtain a to-be-received bit data stream.

69. The method according to claim 68, wherein obtaining the W second dual-polarization symbol data streams comprises: receiving the W second dual-polarization symbol data streams from a transmitter device via W paths of optical signals with different wavelengths or through W optical fibers; or demultiplexing one path of received signals to obtain W subcarriers, to obtain the W second dual-polarization symbol data streams from a transmitter device.

70. The method according to claim 68 or 69, wherein P=M, the $q \times P$ bits are distributed into the M first encoded data streams, and every q bits in the $q \times P$ bits are distributed into one of the M first encoded data streams.

71. The method according to claim 70, wherein in either polarization direction, the q bits obtained by performing symbol demapping processing on each symbol are distributed into a same first encoded data stream.

72. The method according to claim 70 or 71, wherein M consecutive dual-polarization symbols other than the first symbol sequence in the second dual-polarization symbol data stream totally comprise $2 \times M$ symbols in the two polarization directions, $2 \times q \times M$ bits are obtained by performing symbol demapping on the $2 \times M$ symbols, and the $2 \times q \times M$ bits are distributed into the M first encoded data streams; and $2 \times q$ bits obtained by performing symbol demapping on two symbols totally comprised in each dual-polarization symbol in the two polarization directions are distributed into a same first encoded data stream.

73. The method according to any one of claims 70 to 72, wherein performing fourth data processing on the W second dual-polarization symbol data streams, to obtain the M first encoded data streams comprises:

    performing polarization combining and symbol demapping on the W second dual-polarization symbol data streams, to obtain W eighth encoded data streams;
    performing receiver DSP processing on each of the W eighth encoded data streams, to obtain W third encoded data streams;
    merging the W third encoded data streams, to obtain a second encoded data stream; and
    distributing the second encoded data stream into the M first encoded data streams.

74. The method according to claim 73, wherein every M consecutive bit sets in the second encoded data stream are distributed into the M first encoded data streams, and each of the M bit sets comprises $S_0$ consecutive bits that belong to a same first encoded data stream, wherein $S_0$ is a positive integer; and every $L_1$ consecutive bits in the second encoded data stream are from a same third encoded data stream, wherein $L_1$ is a positive integer, and $L_1$ is an integer multiple of $S_0 \times M/W$.

75. The method according to claim 74, wherein $L_1 = S_0 \times M$, every $L_1$ consecutive bits in the third encoded data stream comprise the M bit sets, and the M bit sets are distributed into the M first encoded data streams.

76. The method according to any one of claims 70 to 72, wherein performing fourth data processing on the W second dual-polarization symbol data streams, to obtain the M first encoded data streams comprises:

    performing polarization combining and symbol demapping on the W second dual-polarization symbol data streams, to obtain W ninth encoded data streams;
    performing receiver DSP processing on each of the W ninth encoded data streams, to obtain W fourth encoded data streams; and
    distributing the W fourth encoded data streams into the M first encoded data streams.

77. The method according to claim 76, wherein every $S_1 \times M/W$ consecutive bits in the fourth encoded data stream are distributed into the M first encoded data streams, and a quantity of bits that enter each of the M first encoded data streams in every $S_1 \times M/W$ consecutive bits in the fourth encoded data stream is the same, wherein $S_1$ is a positive integer, and $S_1 \times M$ is an integer multiple of W.

78. The method according to claim 77, wherein $S_1 = 2 \times q \times W$, every $2 \times q \times M$ consecutive bits in the third encoded data stream comprise M bit sets, the M bit sets are distributed into different first encoded data streams, and each of the M bit sets comprises $2 \times q$ consecutive bits that are distributed into a same first encoded data stream.

79. The method according to any one of claims 70 to 78, wherein M=4, and W=2; M=2, and W=2; or M=4, and W=4.

80. The method according to any one of claims 68 to 79, wherein performing FEC decoding processing on the M first encoded data streams, to obtain the to-be-received bit data stream comprises:

    performing de-interleaving processing on the M first encoded data streams, to obtain $2 \times M$ fifth encoded data streams; and
    performing FEC decoding processing on the $2 \times M$ fifth encoded data streams in parallel, to obtain the to-be-sent bit data stream, wherein
    every $2 \times M$ consecutive bit sequences in the bit data stream are from the $2 \times M$ fifth encoded data streams, and a plurality of bits comprised in each of the $2 \times M$ bit sequences are from a same fifth encoded data stream.

81. A data processing apparatus in optical communication, wherein the data processing apparatus comprises a processor, and the processor is configured to perform the data processing method according to any one of claims 1 to 27, or is configured to perform the data processing method according to any one of claims 55 to 67.

82. A data processing apparatus in optical communication, wherein the data processing apparatus comprises a processor, and the processor is configured to perform the data processing method according to any one of claims 28 to 54, or is configured to perform the method according to any one of claims 68 to 80.

83. A data processing apparatus in optical communication, wherein the data processing apparatus comprises a processor and a communication interface, the communication interface is configured to receive and send data, and the processor is configured to perform the data processing method according to any one of claims 1 to 27, or is configured to perform the data processing method according to any one of claims 55 to 67.

84. A data processing apparatus in optical communication, wherein the data processing apparatus comprises a processor and a communication interface, the communication interface is configured to receive and send data, and the processor is configured to perform the data processing method according to any one of claims 28 to 54, or is configured to perform the method according to any one of claims 68 to 80.

85. An optical module, comprising an encoder and a transmitter signal processor, wherein the optical module is configured to perform the data processing method according to any one of claims 1 to 27, or is configured to perform the data processing method according to any one of claims 55 to 67.

86. An optical module, comprising a receiver signal processor and a decoder, wherein the optical module is configured to perform the data processing method according to any one of claims 28 to 54, or is configured to perform the method according to any one of claims 68 to 80.

87. An optical communication system, wherein the system comprises a transmitting side apparatus and a receiving side apparatus; the transmitting side apparatus is configured to perform the data processing method according to any one of claims 1 to 27, or is configured to perform the data processing method according to any one of claims 55 to 67; and the receiving side apparatus is configured to perform the data processing method according to any one of claims 28 to 54, or is configured to perform the method according to any one of claims 68 to 80.

88. A computer-readable storage medium, wherein the computer-readable storage medium stores instructions; and when the instructions are run on a processor, the processor is enabled to perform the data processing method according to any one of claims 1 to 27, perform the data processing method according to any one of claims 28 to 54, perform the data processing method according to any one of claims 55 to 67, or perform the data processing method according to any one of claims 68 to 80.

[FIG. 1]

[FIG. 2]

[FIG. 3]

EP 4 668 618 A1

[FIG. 4]

```
         401                    402              403
  ┌─────────────────────┐    ┌──────────┐    ┌─────────────────────┐
  │ First dual-polarization ──→│          │──→ │ FEC decoding        │──→
  │ symbol data stream 0  │    │          │    │ processing 0        │
  │                       │    │          │    └─────────────────────┘
  │ First dual-polarization│    │ Second   │    ┌─────────────────────┐
  │ symbol data stream 1  │──→ │ data     │──→ │ FEC decoding        │──→   To-be-received
  │                       │    │ processing│    │ processing 1        │      bit data stream
  │         ...           │    │          │    ┌─────────────────────┐
  │ First dual-polarization│    │          │──→ │ FEC decoding        │──→
  │ symbol data stream W−1│──→ │          │    │ processing M−1      │
  └─────────────────────┘    └──────────┘    └─────────────────────┘
```

64

[FIG. 5A]

First data processing

FEC encoding processing 0

FEC encoding processing 1

...

FEC encoding processing M−1

Bit group merging

Wavelength distribution (distribution processing)

Symbol mapping processing

Symbol mapping processing

...

Symbol mapping processing

Polarization distribution

Polarization distribution

...

Polarization distribution

DSP framing processing

DSP framing processing

DSP framing processing

Second dual-polarization symbol data stream 0

Second dual-polarization symbol data stream 1

...

Second dual-polarization symbol data stream W−1

EP 4 668 618 A1

[FIG. 5B]

EP 4 668 618 A1

[FIG. 6A]

EP 4 668 618 A1

[FIG. 6B]

Second dual-polarization symbol data stream 0 → Receiver DSP processing → Polarization combining

Second dual-polarization symbol data stream 1 → Receiver DSP processing → Polarization combining

...

Second dual-polarization symbol data stream W−1 → Receiver DSP processing → Polarization combining

Second data processing

Wavelength merging (merging processing) → Symbol demapping processing → Bit distribution

FEC decoding processing 0

FEC decoding processing 1

...

FEC decoding processing M−1

Bit data stream

EP 4 668 618 A1

[FIG. 7A]

EP 4 668 618 A1

[FIG. 7B]

Second dual-polarization symbol data stream 0 → Receiver DSP processing →

Second dual-polarization symbol data stream 1 → Receiver DSP processing →

...

Second dual-polarization symbol data stream W−1 → Receiver DSP processing →

Second data processing

Wavelength merging (merging processing) → Polarization combining → Symbol demapping processing → Bit distribution →

FEC decoding processing 0 →

FEC decoding processing 1 → Bit data stream

...

FEC decoding processing M−1 →

EP 4 668 618 A1

[FIG. 8A]

[FIG. 9A]

EP 4 668 618 A1

[FIG. 9B]

Second dual-polarization symbol data stream 0

Second dual-polarization symbol data stream 1

Second dual-polarization symbol data stream W−1

Receiver DSP processing

Polarization combining

Second data processing

Wavelength merging (merging processing)

Symbol demapping processing

FEC decoding processing 0

FEC decoding processing 1

FEC decoding processing M−1

Bit data stream

EP 4 668 618 A1

[FIG. 9C]

First data processing

FEC encoding processing 0 → Symbol mapping processing → Wavelength distribution → Polarization distribution → DSP framing processing → Second dual-polarization symbol data stream 0

FEC encoding processing 1 → Symbol mapping processing → Polarization distribution → DSP framing processing → Second dual-polarization symbol data stream 1

...

FEC encoding processing M−1 → Symbol mapping processing → Polarization distribution → DSP framing processing → Second dual-polarization symbol data stream W−1

EP 4 668 618 A1

[FIG. 9D]

EP 4 668 618 A1

[FIG. 10A]

EP 4 668 618 A1

[FIG. 10B]

Second dual-polarization symbol data stream 0 → Receiver DSP processing

Second dual-polarization symbol data stream 1 → Receiver DSP processing

...

Second dual-polarization symbol data stream W−1 → Receiver DSP processing

Second data processing

Wavelength merging (merging processing) → Polarization combining → Symbol demapping processing

FEC decoding processing 0

FEC decoding processing 1

...

FEC decoding processing M−1

Bit data stream

EP 4 668 618 A1

[FIG. 10C]

EP 4 668 618 A1

[FIG. 10D]

Second data processing

Second dual-polarization symbol data stream 0 → Receiver DSP processing → Wavelength merging (merging processing) → Polarization combining → Symbol demapping processing → FEC decoding processing 0

Second dual-polarization symbol data stream 1 → Receiver DSP processing → Polarization combining → Symbol demapping processing → FEC decoding processing 1

...

Second dual-polarization symbol data stream W−1 → Receiver DSP processing → Polarization combining → Symbol demapping processing → FEC decoding processing M−1

Bit data stream

80

[FIG. 11A]

EP 4 668 618 A1

[FIG. 11B]

Second data processing

Second dual-polarization symbol data stream 0 → DSP framing processing → Polarization combining → Symbol demapping processing → Inverse exchange processing → Bit distribution 0 → FEC decoding processing 0 / FEC decoding processing 1 → Bit data stream

...

Second dual-polarization symbol data stream W−1 → DSP framing processing → Polarization combining → Symbol demapping processing → Bit distribution W−1 → FEC decoding processing b×W−1

EP 4 668 618 A1

[FIG. 12A]

Figure 12A: Block diagram showing FEC encoding processing 0, ..., FEC encoding processing b−1, FEC encoding processing b×W−b+1, ..., FEC encoding processing b×W−1, feeding into First data processing block (dashed outline) containing Bit group merging 0 and Bit group merging W−1 → Symbol mapping processing → Exchange processing → Polarization distribution → DSP framing processing, outputting Second dual-polarization symbol data stream 0 and Second dual-polarization symbol data stream W−1.

[FIG. 12B]

[FIG. 13A]

Figure showing "First data processing" block containing: FEC encoding processing 0, FEC encoding processing b−1, ... FEC encoding processing b×W−b+1, ... FEC encoding processing b×W−1 → Bit group merging 0 / Bit group merging W−1 → Symbol mapping processing → Polarization distribution → Exchange processing → DSP framing processing → Second dual-polarization symbol data stream 0 / Second dual-polarization symbol data stream W−1

[FIG. 13B]

EP 4 668 618 A1

[FIG. 14A]

[FIG. 14B]

[FIG. 15A]

First data processing

FEC encoding processing 0

...

FEC encoding processing b−1

...

FEC encoding processing b×W−b+1

...

FEC encoding processing b×W−1

Symbol mapping processing 0

Symbol mapping processing W−1

Polarization distribution

Polarization distribution

Exchange processing

DSP framing processing

DSP framing processing

Second dual-polarization symbol data stream 0

Second dual-polarization symbol data stream W−1

Second dual-polarization symbol data stream 0

DSP framing processing

Second dual-polarization symbol data stream W−1

DSP framing processing

Inverse exchange processing

Second data processing

Polarization combining

Symbol demapping processing 0

FEC decoding processing 0

FEC decoding processing 1

Polarization combining

Symbol demapping processing W−1

FEC decoding processing b×W−1

Bit data stream

EP 4 668 618 A1

[FIG. 16]

[FIG. 17]

EP 4 668 618 A1

[FIG. 18]

[FIG. 19]

[FIG. 20]

EP 4 668 618 A1

[FIG. 21]

[FIG. 22]

EP 4 668 618 A1

[FIG. 23]

[FIG. 24]

[FIG. 25A]

[FIG. 25B]

Second dual-polarization symbol data stream 0

Second dual-polarization symbol data stream 1

...

Second dual-polarization symbol data stream W−1

Fourth data processing

Symbol demapping processing → Polarization combining → Receiver DSP processing

Symbol demapping processing → Polarization combining → Receiver DSP processing

...

Symbol demapping processing → Polarization combining → Receiver DSP processing

Wavelength merging (merging processing) → Bit distribution

FEC decoding processing 0

FEC decoding processing 1

...

FEC decoding processing M−1

Bit data stream

100

EP 4 668 618 A1

[FIG. 26A]

Third data processing

FEC encoding processing 0 → Wavelength distribution (distribution processing) → DSP framing processing → Polarization distribution → Symbol mapping processing → Second dual-polarization symbol data stream 0

FEC encoding processing 1 → Wavelength distribution (distribution processing) → DSP framing processing → Polarization distribution → Symbol mapping processing → Second dual-polarization symbol data stream 1

⋮

FEC encoding processing M−1 → Wavelength distribution (distribution processing) → DSP framing processing → Polarization distribution → Symbol mapping processing → Second dual-polarization symbol data stream W−1

EP 4 668 618 A1

[FIG. 26B]

[FIG. 27]

EP 4 668 618 A1

[FIG. 28]

```
                  ___ 2201                    ___ 2202
         ┌─────────────────┐          ┌─────────────────┐
         │    Processor     │          │     Memory       │
         └─────────────────┘          └─────────────────┘
                  │                             │      ___ 2204
         ━━━━━━━━━┿━━━━━━━━━━━━━━━━━━━━━━━━━━━━━━┿━━━━━━━━━━━
                         │              ___ 2203
                 ┌───────┴──────────────┐
                 │ Communication interface │
                 └──────────────────────┘

                                      Data processing
                                      apparatus 220
```

[FIG. 29]

```
                     ___ 2301
         ┌──────────────────────────┐
         │                          │
         │        Processor         │
         │                          │
         └──────────────────────────┘
                  ⇕  ___ 2303
                        ___ 2302
         ┌──────────────────────────┐
         │  Communication interface  │
         └──────────────────────────┘

                              Chip 230
```

## INTERNATIONAL SEARCH REPORT

| International application No. |
| --- |
| **PCT/CN2024/078431** |

| A. | CLASSIFICATION OF SUBJECT MATTER |
| --- | --- |

H04B 10/516(2013.01)i; H04B 10/60(2013.01)i

According to International Patent Classification (IPC) or to both national classification and IPC

| B. | FIELDS SEARCHED |
| --- | --- |

Minimum documentation searched (classification system followed by classification symbols)

　　IPC: H04B, H04L

Documentation searched other than minimum documentation to the extent that such documents are included in the fields searched

Electronic data base consulted during the international search (name of data base and, where practicable, search terms used)

　　CNABS, CNTXT, CNKI, VEN, ENTXTC, WOTXT, EPTXT, USTXT, 3GPP: 光, 流, 编码, 前向纠错, FEC, 映射, 偏振, QAM, QPSK, 均匀, 平均, 并行, 速率, 波特率, 数字信号处理, DSP, optical, light, flow, stream, cod+, forward w error w correct+, FEC, map+, polariz+, QAM, QPSK, uniform+, equal+, even+, parallel, rate, baud, digital w signal w process+, DSP

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 113644980 A (HUAWEI TECHNOLOGIES CO., LTD.) 12 November 2021 (2021-11-12) entire document | 1-88 |
| A | CN 113132014 A (FIBERHOME TELECOMMUNICATION TECHNOLOGIES CO., LTD. et al.) 16 July 2021 (2021-07-16) entire document | 1-88 |
| A | US 2006228116 A1 (NORTEL NETWORKS LTD.) 12 October 2006 (2006-10-12) entire document | 1-88 |
| A | US 2022216939 A1 (INFINERA CORP.) 07 July 2022 (2022-07-07) entire document | 1-88 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 May 2024** | **23 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/078431**

| Patent document cited in search report | | | Publication date (day/month/year) | Patent family member(s) | | | Publication date (day/month/year) |
|---|---|---|---|---|---|---|---|
| CN | 113644980 | A | 12 November 2021 | None | | | |
| CN | 113132014 | A | 16 July 2021 | None | | | |
| US | 2006228116 | A1 | 12 October 2006 | EP | 1708391 | A1 | 04 October 2006 |
| | | | | EP | 1708391 | B1 | 19 December 2007 |
| | | | | US | 7894724 | B2 | 22 February 2011 |
| | | | | DE | 602006000332 | D1 | 31 January 2008 |
| | | | | DE | 602006000332 | T2 | 10 April 2008 |
| US | 2022216939 | A1 | 07 July 2022 | None | | | |

Form PCT/ISA/210 (patent family annex) (July 2022)

**EP 4 668 618 A1**

## REFERENCES CITED IN THE DESCRIPTION

**Patent documents cited in the description**

- CN 202310281335

- CN 202410126510